# EUROPEAN PATENT SPECIFICATION

(11) **EP 4 483 160 B1**
(45) Date of publication and mention of the grant of the patent: **05.08.2026**
(21) Application number: 23703588.6
(22) Date of filing: 09.02.2023
(51) Int. Cl.: G01N 1/30

(54) **HIGH-CONTRAST EN-BLOC STAINING OF MOUSE WHOLE-BRAIN AND HUMAN BRAIN SAMPLES FOR EM-BASED CONNECTOMICS**
HOCHKONTRASTREICHE EN-BLOC-FÄRBUNG VON MAUS-GANZHIRNPROBEN FÜR DIE EM-BASIERTE KONNEKTOMIK
COLORATION EN BLOC À FORT CONTRASTE D'ÉCHANTILLONS DE CERVEAU ENTIER DE SOURIS POUR LA CONNECTOMIQUE BASÉE SUR EM

(30) Priority: 24.02.2022 EP 22158620
(43) Date of publication of application: 01.01.2025
(73) Proprietor: MAX-PLANCK-GESELLSCHAFT ZUR FÖRDERUNG DER WISSENSCHAFTEN E.V., 80539 München (DE)
(72) Inventor: SONG, Kun, 61440 Oberursel (DE); FENG, Zhihui, 61440 Oberursel (DE); HELMSTAEDTER, Moritz, 61462 Königstein im Taunus (DE)
(74) Representative: Vossius & Partner Patentanwälte Rechtsanwälte mbB
(86) International application number: PCT/EP2023/053213
(87) International publication number: WO 2023/161034

(56) References cited:
- US-A1- 2020 150 063
- GUO JIANSHENG ET AL: "An optimized approach using cryofixation for high-resolution 3D analysis by FIB-SEM", JOURNAL OF STRUCTURAL BIOLOGY, ACADEMIC PRESS, UNITED STATES, vol. 212, no. 1, 14 August 2020 (2020-08-14), XP086266251, ISSN: 1047-8477, [retrieved on 20200814], DOI: 10.1016/J.JSB.2020.107600
- HAYWORTH KENNETH J ET AL: "Gas cluster ion beam SEM for imaging of large tissue samples with 10 nm isotropic resolution", NATURE METHODS, NATURE PUBLISHING GROUP US, NEW YORK, vol. 17, no. 1, 18 November 2019 (2019-11-18), pages 68 - 71, XP036979569, ISSN: 1548-7091, [retrieved on 20191118], DOI: 10.1038/S41592-019-0641-2
- KUBOTA YOSHIYUKI ET AL: "A carbon nanotube tape for serial-section electron microscopy of brain ultrastructure", vol. 9, no. 1, 1 December 2018 (2018-12-01), XP055882961, Retrieved from the Internet <URL:https://www.nature.com/articles/s41467-017-02768-7.pdf> DOI: 10.1038/s41467-017-02768-7
- GOGGIN PATRICIA ET AL: "Development of protocols for the first serial block-face scanning electron microscopy (SBF SEM) studies of bone tissue", BONE, PERGAMON PRESS., OXFORD, GB, vol. 131, 24 October 2019 (2019-10-24), XP085970568, ISSN: 8756-3282, [retrieved on 20191024], DOI: 10.1016/J.BONE.2019.115107

## Description

### Field of Invention

The widely employed existing electron microscopy (EM) staining protocols are either limited to small sample volumes, yield prohibitive staining gradients for larger structures within the sample or stain only a subset of these structures, and additionally require charging compensation. In order to overcome the aforementioned obstacles, the present inventors developed a method for homogenously en-bloc staining and post-processing of biological tissue samples ranging up to the centimeter size (i.e., whole mouse brains).

### Background

Brains are unique not only in the number of cells they comprise (about 85 billion neurons in the case of the human brain) but also in the extent of the direct and specific communication between their cells via synaptic connections (each neuron has on the order of 1,000 synaptically coupled partner neurons). Mapping the resulting complex connectivity graph is the goal of connectomics.

A prerequisite for synaptic resolution connectomics is the dense and homogeneous deposition of heavy metals into brain tissue, i.e., into the membranes outlining neuronal cell bodies, their dendrites, axons and synaptic vessels, that leads to high membrane contrast for electron-based imaging. For decades, the most widely employed heavy metal membrane contrasting agents contained osmium (Os)/uranium compounds and uranyl acetate (UA) was employed in labelling proteins such as those in the postsynaptic density (PSD) (NPL26, NPL35). With the development of the "reduced-osmium" protocols (NPL3, NPL13, NPL37), en-bloc staining of tissue samples up to a thickness of about 100-200 µm was possible. Beyond such sample sizes, however, substantial staining gradients occurred, which limited connectomic analyses to smaller samples (NPL2, NPL10).

In order to achieve high-contrast staining throughout large tissue blocks, the relevant compounds have to diffuse from the exterior through many successive lipid membranes to the center of the tissue block. Additionally, these compounds have to react with the target structures in the membranes (or to be deposited in the membrane by other means). There is a tradeoff between these two goals since processes that enhance membrane attachment will reduce the availability of compounds for subsequent diffusion, and vice versa. This is especially true when enhancing reactions, such as the application of ferrocyanide for enhanced Os staining, are employed that further increase compound attachment, but thus decrease diffusability. Therefore, establishing homogenous high-contrast staining in every neurite and synapse in large tissue samples, is a substantial challenge to the employed staining protocols and in case of large samples involves staining procedures in the scale of months, not days (NPL19).

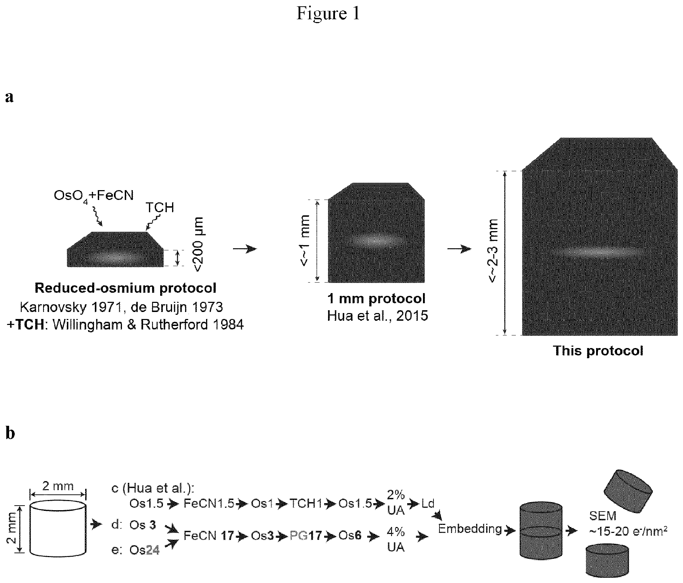

With the development of a modified staining protocol samples up to about 1 mm in size could be homogeneously stained (NPL11) - an important step to allow millimeter-size connectomic data acquisition (Fig. 1a). This protocol has been widely applied since (NPL9, NPL16, NPL20, NPL38).

However, with the ambition to obtain connectomes from even larger samples, in particular samples that encompass the gray matter depth of human cortex (2-3 mm in size), and samples corresponding to hemispheres (5 mm in size) and entire brains (10 mm in size) of small mammals like mouse (NPL1) or even humans (NPL21), the need for improved protocols became obvious. In spite of promising initial attempts for mouse whole-brain staining (NPL19), reliable protocols for en-bloc staining of 2-3-mm-to-centimeter scale samples with high staining contrast are still missing. This is particularly challenging since EM imaging and reconstruction have progressed to a stage at which large-sample analyses appear to become possible (NPL9, NPL12, NPL20).

Starting from the previously reported 1 mm protocol (NPL11), the inventors in dedicated research developed methods for the homogenous, high-contrast en-bloc staining of biological tissue samples ranging up to the centimeter size and thereby, surprisingly found that:
- extending the first incubation with the heavy metal compound prior to the reducing reaction enhances membrane contrast (corresponds to step a))
- decreasing the temperature in the reducing reaction protects the sample (corresponds to step c))
- reducing agents such as ferrocyanide and/or ferricyanide compounds enhance membrane contrast by coordination reaction with osmium species in oxidation state vi
- washing with H₂O instead of buffered aqueous solution before the 1,2,3-Trihydroxybenzene step maintains tissue contrast (corresponds to step g))
- replacing thiocarbohydrazide (TCH) by an aqueous solution of 1,2,3-Trihydroxybenzene avoids sample breakages (corresponds to step h))
- using a graded resin infiltration protocol slows down polymerization and allows whole-sample homogenous stability also in the core
- omitting the lead aspartate incubation step yields sufficient sample conductivity as well as staining contrast and overcomes insufficient diffusibility (after step n)).

The protocols of the present invention can serve for large-scale connectomic projects in mouse and other species. In particular, the volume of a mouse brain also approaches relevant cortical and subcortical volumes in higher mammals as non-human primates and humans. The ultimate goal of obtaining large connectomes from fractions or the entirety of a human cortex (NPL21) will also profit from the advances described here, both for fundamental research and clinical applications.

### Summary of the invention

The present invention provides new methods for en-bloc staining and postprocessing of biological tissue samples and uses thereof. The methods of the present invention are defined in claims 1 and 2. Further preferred embodiments of the present invention are defined in the dependent claims. In particular, the present invention solves the technical problem of homogeneous staining of centimeter-sized neuronal biological tissue samples leading to high membrane contrast with preserved postsynaptic density (PDS) and without causing tissue breakages at the macroscopic as well as microscopic level.

In particular, the methods of the present invention provide improved homogeneity and contrast when staining biological tissue samples preferably neuronal tissue ranging from 2-3 mm to 10 mm in size without damaging the sample, which could not have been achieved by previously known methods. Further, the method of the present invention enables obtaining samples for three-dimensional electron microscopy and subsequent connectomic analyses (e.g., high-resolution connectomic analyses for example in the pathological examination of neuronal tissue samples).

In a first main aspect, the present invention relates to a method for staining a biological tissue sample.

The method of the first aspect comprises the following steps:
a) incubating the sample in a buffered aqueous solution of 1 to 3 %, preferably 1.5 to 2.5 %, more preferably 1.8 to 2.2 %, even more preferably 2 % heavy metal compound,
b) washing the sample in a buffered aqueous solution,
c) incubating the sample in a buffered aqueous solution of 1.5 to 3.5 %, preferably 2 to 3 %, more preferably 2.2 to 2.75 %, even more preferably 2.5 % reducing agent,
d) repeating step b),
e) repeating step a),
f) repeating step b),
g) washing the sample in water,
h) incubating the sample in an aqueous solution of 2.5 to 5.5 %, preferably 3 to 5 %, more preferably 3.5 to 4.5 %, even more preferably 4 % of a staining amplification agent, wherein the staining amplification agent is selected from the group consisting of dihydroxy-, trihydroxy-and tetrahydroxy derivatives of benzene,
i) repeating step g),
j) repeating step a),
   wherein the heavy metal compound is dissolved in an aqueous solution,
k) repeating step g),
l) incubating the sample in an aqueous solution of 3 to 5 %, preferably 3.5 to 4.5 %, more preferably 3.75 to 4.25 %, even more preferably 4 % heavy metal compound,
   wherein the heavy metal compound is different to the one of step a),
m) further incubating the sample of step l),
   wherein the temperature is increased to at least 35 °C,
   and
n) repeating step g).

In some aspects the present invention relates to a method for postprocessing, including dehydrating and embedding the stained biological tissue sample obtained in step n).

In a third aspect of the present invention, the biological sample processed by the presently claimed methods is analyzed by electron-microscopy.

In some aspects of the present invention, the three-dimensional electron-microscopy is preferably by (three-dimensional) high-throughput electron microscopy.

Some particular aspects of the invention can be summarized as follows:
In some aspects of the present invention, the heavy metal compound of step a) is osmium tetroxide (OsO₄) and of step l) is uranyl acetate (UA).

In some aspects of the present invention the reducing agent is a ferrocyanide and/or ferricyanide.

In some aspects of the present invention, the incubation in step a) is performed at a temperature of 2 to 30°C and for 3 to 120h.

In some aspects of the present invention, the washing in step b) is performed at a temperature below 10 °C, preferably at 2 to 6 °C, more preferably at 3 to 5 °C, even more preferably at 4 °C and wherein the washing is performed 0.5 to 190 h.

In some aspects of the present invention, the incubation of step c) is performed at a temperature below 10 °C, preferably at 2 to 6 °C, more preferably at 3 to 5 °C, even more preferably at 4 °C and wherein the incubation is performed 12 to 96 h.

In some aspects of the present invention, the washing in step d) is performed at a temperature higher than 4°C, preferably at 4 to 30°C, more preferably at 15 to 25°C, even more preferably at 25°C and wherein the washing is performed 0.5 to 120 h.

In some aspects of the present invention, the incubation in step e) is performed at a temperature higher than 4 °C, preferably at 4 to 30 °C, more preferably at 15 to 25 °C, even more preferably at 25 °C and wherein the incubation is performed 1.5 to 72 h.

In some aspects of the present invention, the washing in step f) is performed at a temperature higher than 4 °C, preferably at 4 to 30 °C, more preferably at 15 to 25 °C, even more preferably at 25 °C and wherein the washing is performed 0.5 to 96h.

In some aspects of the present invention, the washing in step g) is performed at a temperature higher than 4°C, preferably at 4 to 30 °C, more preferably at 15 to 25 °C, even more preferably at 25°C and wherein the washing is performed 1 to 96 h.

In some aspects of the present invention, the incubation in step h) is performed at a temperature higher than 4 °C, preferably at 4 to 30 °C, more preferably at 15 to 25 °C, even more preferably at 25 °C and wherein the incubation is performed 10 to 64 h.

In some aspects of the present invention, the washing in step i) is performed at a temperature higher than 4 °C, preferably at 4 to 30 °C, more preferably at 15 to 25 °C, even more preferably at 25 °C and wherein the washing is performed 1 to 96 h.

In some aspects of the present invention, the incubation in step j) is performed at a temperature higher than 4 °C, preferably at 4 to 30 °C, more preferably at 15 to 25 °C, even more preferably at 25 °C and wherein the incubation is performed 5 to 120 h.

In some aspects of the present invention, the washing in step k) is performed at a temperature higher than 4 °C, preferably at 4 to 30 °C, more preferably at 15 to 25 °C, even more preferably at 25 °C and wherein the washing is performed for 1 to 96 h.

In some aspects of the present invention, the incubation in step l) is performed at low temperature, preferably at 2 to 6 °C, more preferably at 3 to 5 °C, even more preferably at 4 °C and wherein the incubation is performed 10 to 64 h and the incubation in step m) is performed at 40 to 60 °C, preferably at 45 to 55 °C, more preferably at 50 °C and wherein the incubation is performed 1 to 6 h.

In some aspects of the present invention, the incubation in step m) is performed at 40 to 60 °C, preferably at 45 to 55 °C, more preferably at 50 °C and wherein the incubation is performed 1 to 6 h.

In some aspects of the present invention, the washing in step n) is performed at a temperature higher than 4 °C, preferably at 4 to 30 °C, more preferably at 15 to 25 °C, even more preferably at 25 °C and wherein the washing is performed 1 to 96 h.

In some aspects of the present invention, the sample is dehydrated by using a graded ethanol series (step o)).

In some aspects of the present invention, the graded ethanol series ranges from 25 to 100 %, preferably in steps of 25 % and wherein each step is performed 0.5 to 24 h.

In some aspects of the present invention, step o) is followed by incubating the sample in pure acetone at higher than 4 °C, preferably at 4 to 30 °C, more preferably at 15 to 25 °C, even more preferably at 25 °C (step p)).

It is further preferred that the sample is embedded by using a low viscosity epoxy resin infiltration method.

In the low viscosity epoxy resin infiltration method of the present invention the epoxy resin is preferably gradually increased.

In some aspects of the present invention, the incubation of step p) is performed 2 to 32 h. The length of the incubation step of step p) can be furthermore adapted to the volume/size of the sample. Typically, the incubation of step p) is performed between 2 to 32 h for samples of at least 2-3mm, and/or 5mm (~ size of mouse hemisphere), and/or 10 mm (~ size of mouse whole-brain) and between 48 to 120 h and preferably for 72 h for samples of 10 mm (~ size of mouse whole-brain) which are to be fully embedded (corresponding to the full-volume embedding protocol).

In some aspects of the present invention, the biological tissue sample is preferably derived from neuronal tissue.

In a preferred embodiment of the present invention, the size of the biological tissue sample is 10 mm, 5 mm, and/or 2 to 3 mm.

In another aspect, the present invention is used in en-bloc staining of mouse hemispheres, mouse whole brains, cortical and/or subcortical volumes in higher mammals.

In some aspects of the present invention, the biological sample processed and analyzed by the presently claimed methods is used in (dense) neuronal circuit reconstruction or connectomic analyses, preferably high-resolution connectomic analyses.

In some aspects of the present invention is used in the pathological examination of human neuronal tissue samples.

In a second main aspect, the present invention relates to a method for staining of a biological tissue sample. The method of this aspect comprises the following steps:
Aa) incubating the sample in a buffered aqueous solution of 1 to 3 %, preferably 1.5 to 2.5 %, more preferably 1.8 to 2.2 %, even more preferably 2 % heavy metal compound,
Ab) washing the sample in a buffered aqueous solution,
Ac) incubating the sample in a buffered aqueous solution of 1.5 to 3.5 %, preferably 2 to 3 %, more preferably 2.2 to 2.75 %, even more preferably 2.5 % reducing agent,
Ad) washing the sample in the buffered aqueous solution of step Ab) or in an aqueous salt solution,
Ae) incubating the sample in an aqueous solution of 2.5 to 5.5 %, preferably 3 to 5 %, more preferably 3.5 to 4.5 %, even more preferably 4 % of a staining amplification agent, wherein the staining amplification agent is selected from the group consisting of dihydroxy-, trihydroxy-and tetrahydroxy derivatives of benzene,
Af) repeating step Ad),
Ag) repeating step Aa),
wherein the heavy metal compound is dissolved in an aqueous solution or a buffered aqueous solution,
Ah) washing the sample in an aqueous salt solution,
Ai) incubating the sample in an aqueous salt solution of 3 to 5 %, preferably 3.5 to 4.5 %, more preferably 3.75 to 4.25 %, even more preferably 4 % heavy metal compound,
wherein the heavy metal compound is different to the one of step Aa),
Aj) further incubating the sample of step Ai),
wherein the temperature is increased to at least 35 °C,
   and
Ak) repeating step Ah).

In some aspects, the present invention relates to a method for postprocessing, including dehydrating and embedding the stained biological tissue sample obtained in step Ak).

Some particular further aspects of the invention can be summarized as follows:
In some aspects of the present invention, the heavy metal compound of step Aa) is osmium tetroxide (OsO4) and of step Ai) is uranyl acetate (UA).

In some aspects of the present invention, the reducing agent in step Ac) is a ferrocyanide and/or ferricyanide.

In some aspects of the present invention, the incubation in step Aa) is performed at a temperature of 2 to 30°C and for 3 to 120h.

In some aspects of the present invention, the washing in step Ab) is performed at a temperature below 10 °C, preferably at 2 to 6 °C, more preferably at 3 to 5 °C, even more preferably at 4 °C and wherein the washing is performed 0.5 to 190 h.

In some aspects of the present invention, the incubation of step Ac) is performed at a temperature below 10 °C, preferably at 2 to 6 °C, more preferably at 3 to 5 °C, even more preferably at 4 °C and wherein the incubation is performed 12 to 96 h.

In some aspects of the present invention, the washing in step Ad) is performed at a temperature higher than 4°C, preferably at 4 to 30°C, more preferably at 15 to 25°C, even more preferably at 25°C and wherein the washing is performed 0.5 to 120 h.

In some aspects of the present invention, the incubation in step Ae) is performed at a temperature higher than 4 °C, preferably at 4 to 30 °C, more preferably at 15 to 25 °C, even more preferably at 25 °C and wherein the incubation is performed 10 to 64 h.

In some aspects of the present invention, the incubation in step Ag) is performed at a temperature higher than 4 °C, preferably at 4 to 30 °C, more preferably at 15 to 25 °C, even more preferably at 25 °C and wherein the incubation is performed 5 to 120 h.

In some aspects of the present invention, the aqueous salt solution is KCl or NaCl.

In some aspects of the present invention, the washing in step Ah) is performed at a temperature higher than 4 °C, preferably at 4 to 30 °C, more preferably at 15 to 25 °C, even more preferably at 25 °C and wherein the washing is performed for 1 to 96 h.

In some aspects of the present invention, the incubation in step Ai) is performed at low temperature, preferably at 2 to 6 °C, more preferably at 3 to 5 °C, even more preferably at 4 °C and wherein the incubation is performed 10 to 64 h.

In some aspects of the present invention, the incubation in step Aj) is performed at 40 to 60 °C, preferably at 45 to 55 °C, more preferably at 50 °C and wherein the incubation is performed 1 to 6 h.

In some aspects of the present invention, wherein the washing in step Ak) is performed at a temperature higher than 4 °C, preferably at 4 to 30 °C, more preferably at 15 to 25 °C, even more preferably at 25 °C and wherein the washing is performed 1 to 96 h.

In some aspects of the present invention, step Ak) is followed by dehydrating the sample, preferably by incubating the sample in a graded ethanol series (step Al)).

In some aspects of the present invention, the graded ethanol series in step Al) ranges from 25 to 100 %, preferably in steps of 25 % and wherein each step is performed 8 to 24 h.

In some aspects of the present invention, step Al) is followed by incubating the sample in pure acetone at higher than 4 °C, preferably at 4 to 30 °C, more preferably at 15 to 25 °C, even more preferably at 25 °C (step Am)).

In some aspects of the present invention, the incubation in step Am) is performed 32 to 48 h.

In some aspects of the present invention, step Am) is followed by embedding the sample, by using a low viscosity epoxy resin infiltration method.

In some aspects of the present invention, the concentration of the epoxy resin in step Am) is gradually increased.

In some aspects of the present invention, the biological tissue sample is derived from neuronal tissue, preferably selected from the group consisting of cerebellum of higher mammals and human cortical tissue samples.

In some aspects of the present invention, the human cortical tissue sample has a size of 2 to 4 mm in plane (base area) and 2 to 5 mm in thickness, preferably 2 to 3 mm in plane (base area) and a thickness of ≤ 2 mm.

In some aspects of the present invention, the biological tissue sample is analyzed by electron microscopy, preferably three-dimensional electron microscopy.

In some aspects of the present invention, the three-dimensional electron microscopy is preferably high-throughput electron microscopy.

In some aspects of the present invention, the biological sample processed and analyzed by the presently claimed methods is used in (dense) neuronal circuit reconstruction or connectomic analyses, preferably high-resolution connectomic analyses.

In some aspects of the present invention is used in the pathological examination of human neuronal tissue samples.

### Brief description of the Figures

In the following, preferred embodiments of the present invention are described in detail with respect to the Figures.

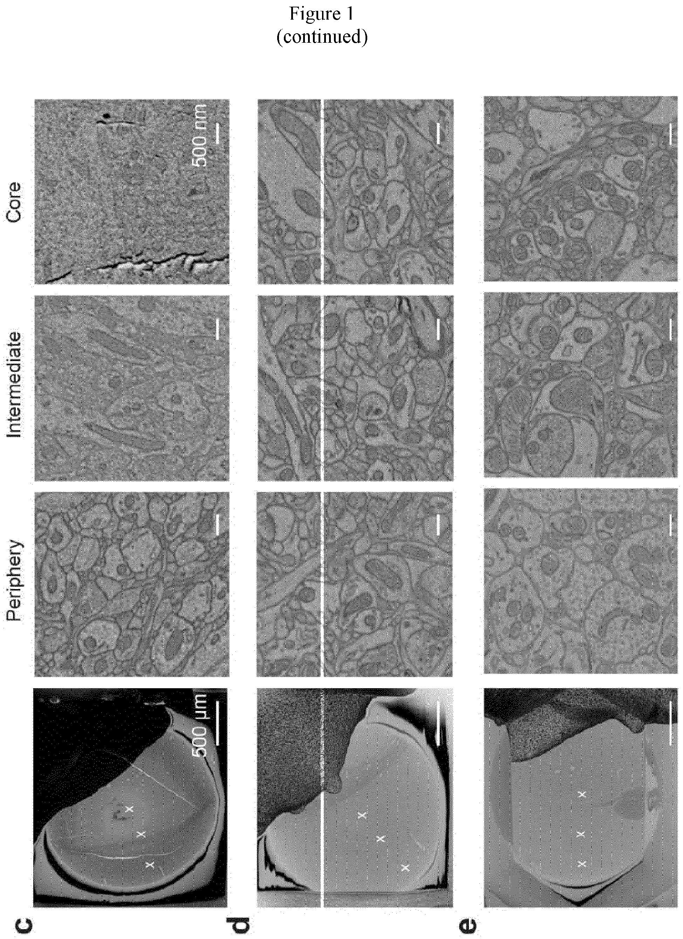

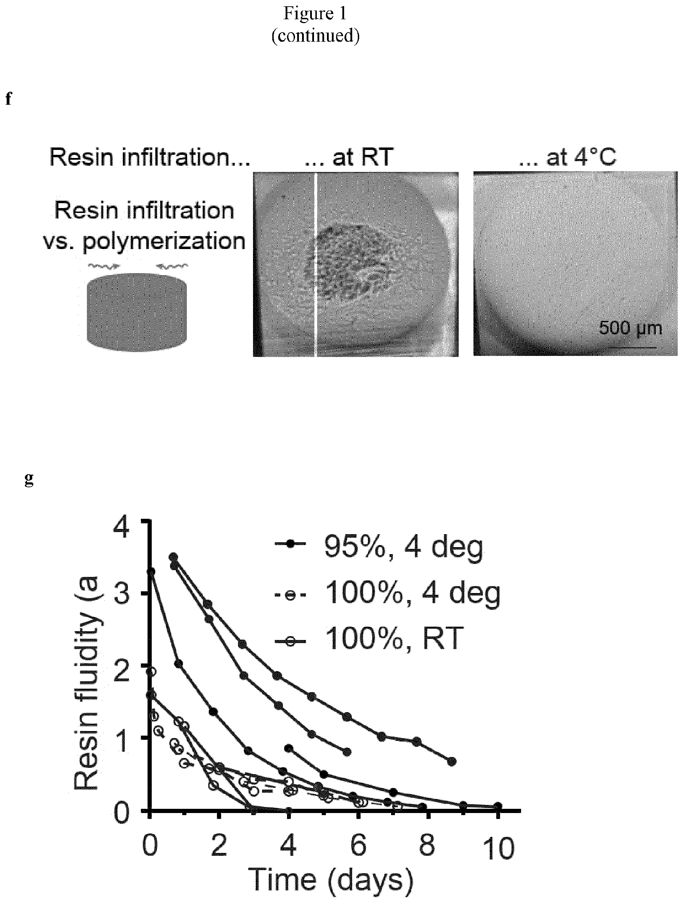

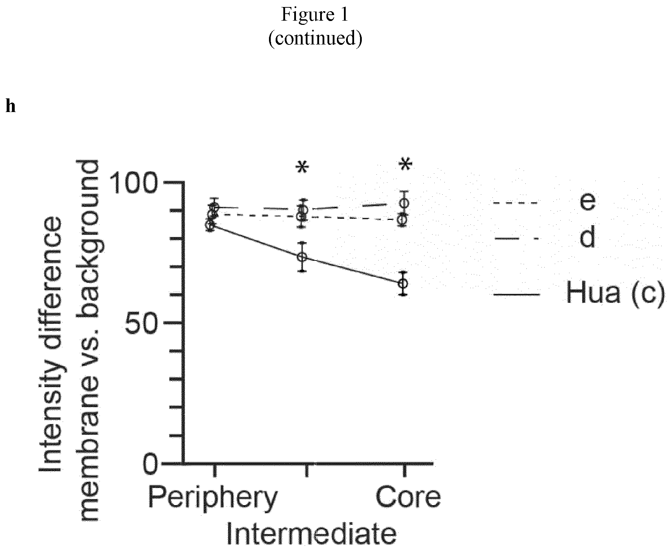

Fig. 1 **High-contrast staining protocol for 2-3 mm sized samples. (a), (b)** Staining gradients were the key limitation to sample size for decades. The initial reduced osmium-thiocarbohydrazide (TCH) protocols (NPL3, NPL13) yielded high-contrast homogeneous staining for samples up to about 200-250 µm thickness. Heavy metal atomic nuclei were provided mainly by Osmium and Uranium compounds, with enhancement by TCH (NPL29) and ferrocyanide (NPL3, NPL13, NPL37). A modified protocol from Hua et al., 2015 (NPL11) allowed the staining of up to 1 mm sized samples. The protocol reported here expands this to 2-3 mm sized samples, large enough to cover the depth of the human cortex. (c) Staining of 2 mm sized sample using the Hua et al., 2015-protocol (NPL1 1) yields staining gradient beyond 1mm with low-contrast core. From left to right: overview image showing three layers of gradient; high-res EM image of outer position in sample, note the contrast was comparable to 1 mm samples; middle position shows sharply decreased contrast; in center, no meaningful images can be acquired due to low signal. (d), (e) This protocol removed these gradients. See Table 1 for protocol steps and their relevance; note even better contrast after prolonged initial OsO4 incubation length (e). (f), (g) Resin infiltration speed in dependence of temperature. Resin infiltration of larger samples requires separation of diffusion from polymerization to avoid softer core of sample (f). With appropriate infiltration protocol (Table 2), soft core can be avoided. (h) Quantification of membrane contrast in dependence of location within sample for Hua protocol (NPL11) (c), the present 2 mm protocol-Os3 (d) and Os24 (e), quantified as pixel intensity difference between membrane and non-membrane voxels (see Example 1, section "Membrane contrast quantification"). It should be noted that the contrast was significantly different between conditions (two-way ANOVA and tukey's multiple comparisons, see Methods) and higher for intermediate and core locations for this protocol (post-hoc one-sided t-test, n=4.75*10⁶ voxels, p<10⁻⁴) and does not decrease for this protocol in dependence of location within sample (Tukey's multiple comparison, p>0.4).

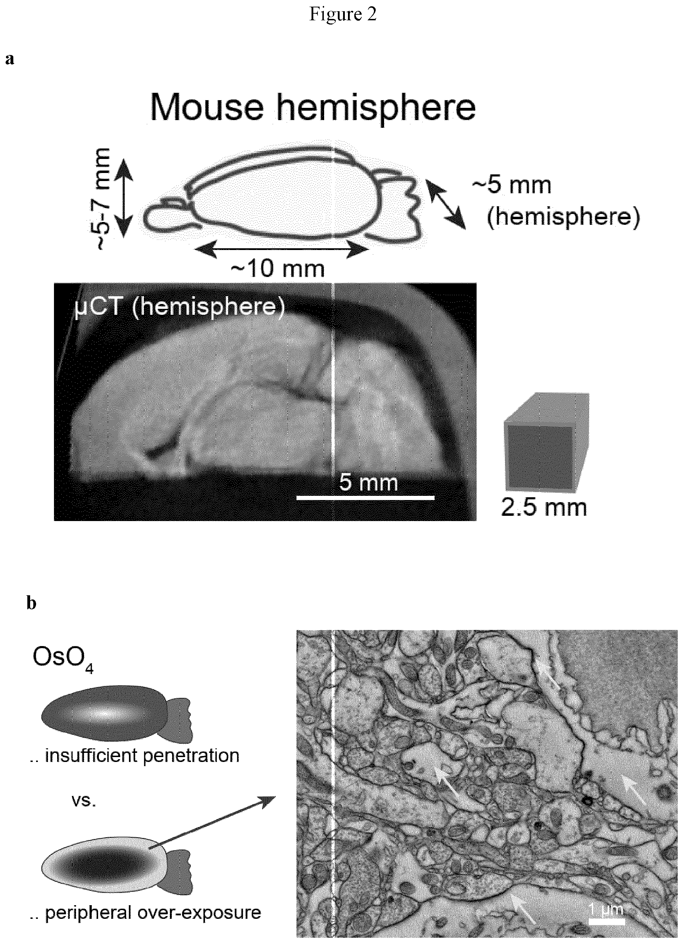

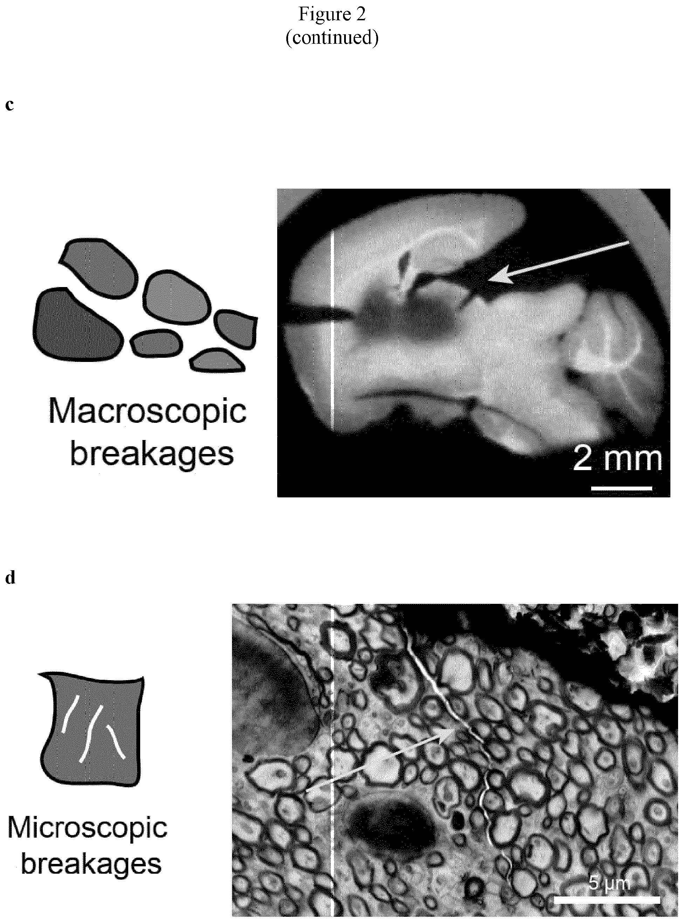

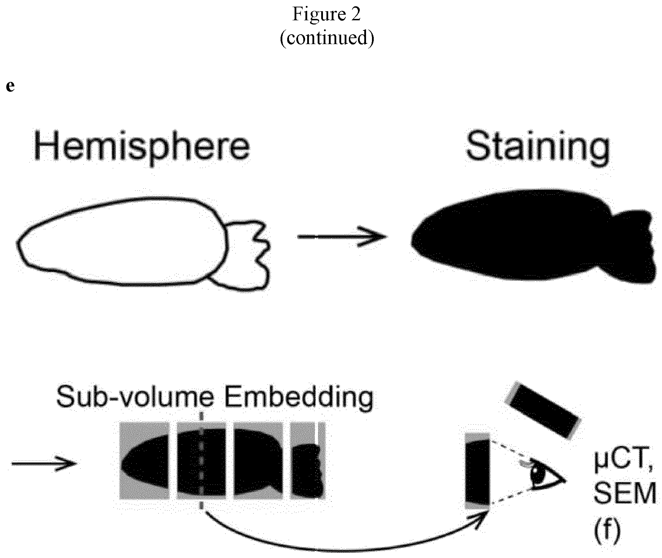

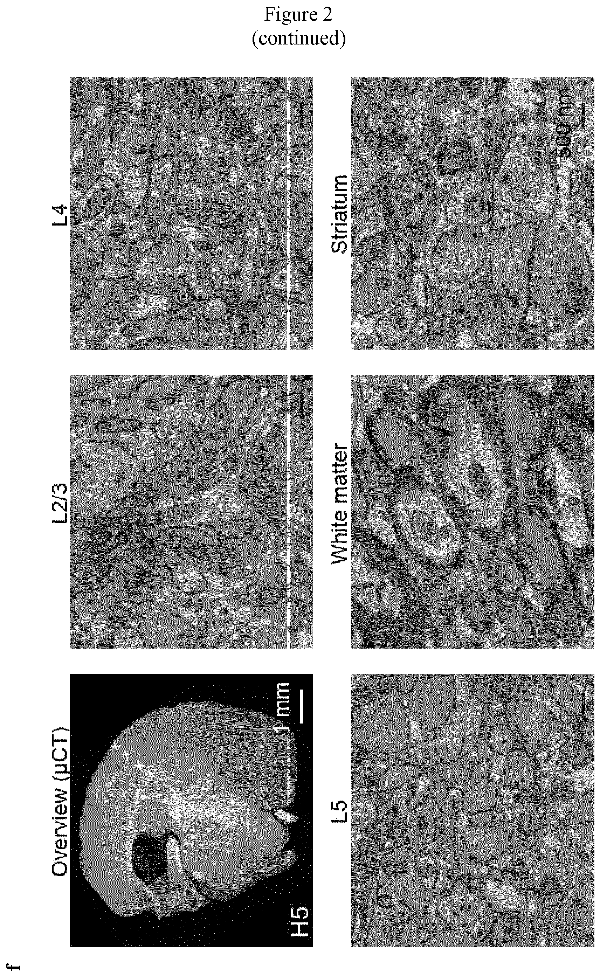

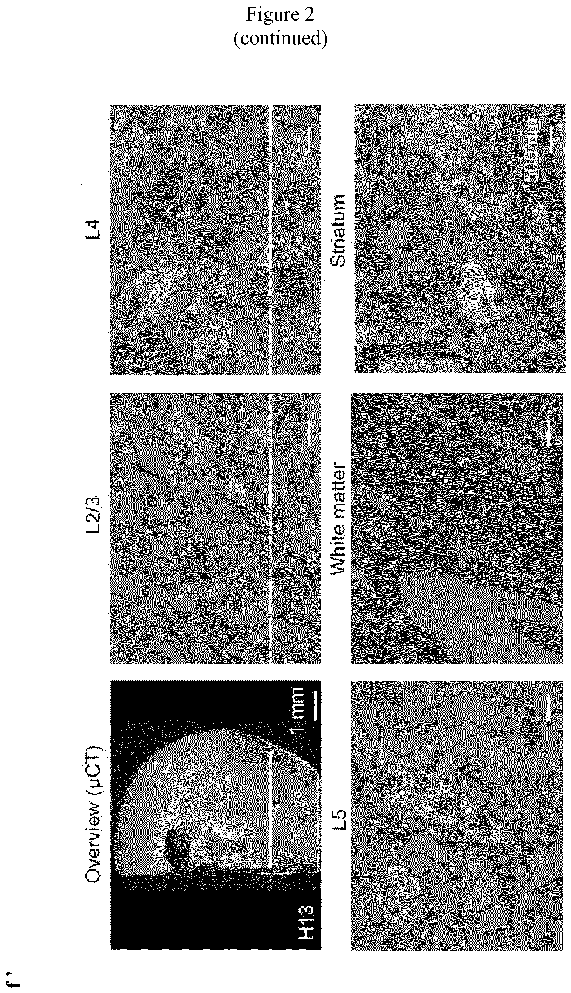

Fig. 2 **High-contrast staining protocol for mouse brain hemispheres. (a)** Size of mouse brain hemisphere compared to the 2-3mm block size reported in Fig. 1, and micro-computed tomography (µCT) image of mouse hemisphere as used for protocol development. **(b)-(d)** Key challenges of hemisphere and whole-mouse brain staining were sufficient infiltration of OsO4 without over-exposure of OsO₄ in the periphery, that contains the very relevant gray matter of the cerebral cortex **(b);** breakages of the sample at macroscopic (c) or microscopic **(d)** scale. Note only the macroscopic breakages could be clearly identified in µCT, but the microscopic were as destructive to the goal of whole-brain connectomic analysis. **(e)** For evaluation of staining quality, stained hemispheres were cut coronally into 4 chunks, and then embedded separately. The chunk that contained the center of the hemisphere was cut into half, and staining quality was investigated by SEM. **(f)** Homogeneously stained mouse brain hemisphere (H5) using the protocol developed here (see Tables 1 and 4, Exp. 19: step b-c was performed at RT), note high contrast from cortical to subcortical positions (approximate locations of high-resolution EM images indicated in µCT overview). **(f ')** Homogeneously stained mouse brain hemisphere (H13) using the protocol developed here (see Tables 1 and 4, Exp. 20: step b-c was performed at 4°C) showing homogeneous high-contrast staining at cortical and subcortical positions as well as white matter myelin axon preservations (approximate locations of high-resolution EM images indicated in µCT overview). For illustration of staining quality, high-resolution images were at pixel size in f: 5.62x5.62 nm², electron dose: 113 e-/nm².

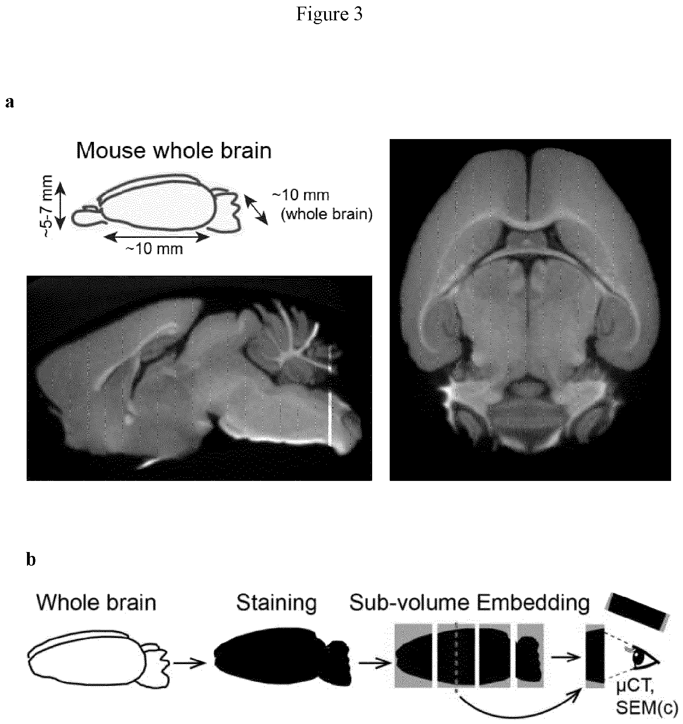

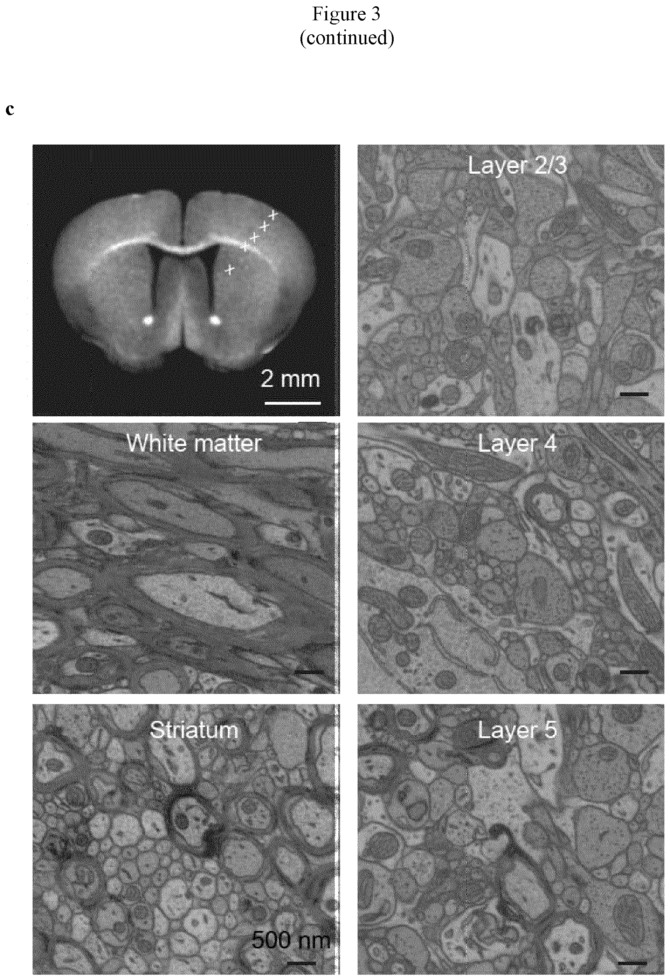

Fig. 3 **High-contrast staining protocol for whole mouse brains. (a)** Size of whole mouse brain, and µCT cross-sections of fully and homogeneously stained whole mouse brain (sagittal plane, bottom; transversal plane, right) using the protocol developed here (Table 1). (b) The whole brain after staining was first cut coronally into 4 chunks, that were then embedded separately. The chunk that contained the center of the whole brain was cut into half, and staining quality was investigated by SEM. (c) High-resolution EM images acquired at various positions along the mouse brain from superficial cortex to subcortical tissue, approximate positions indicated in µCT overview (top left). For illustration of staining quality, high-resolution images were at pixel size of 5.62x5.62 nm²; electron dose 113 e⁻/nm².

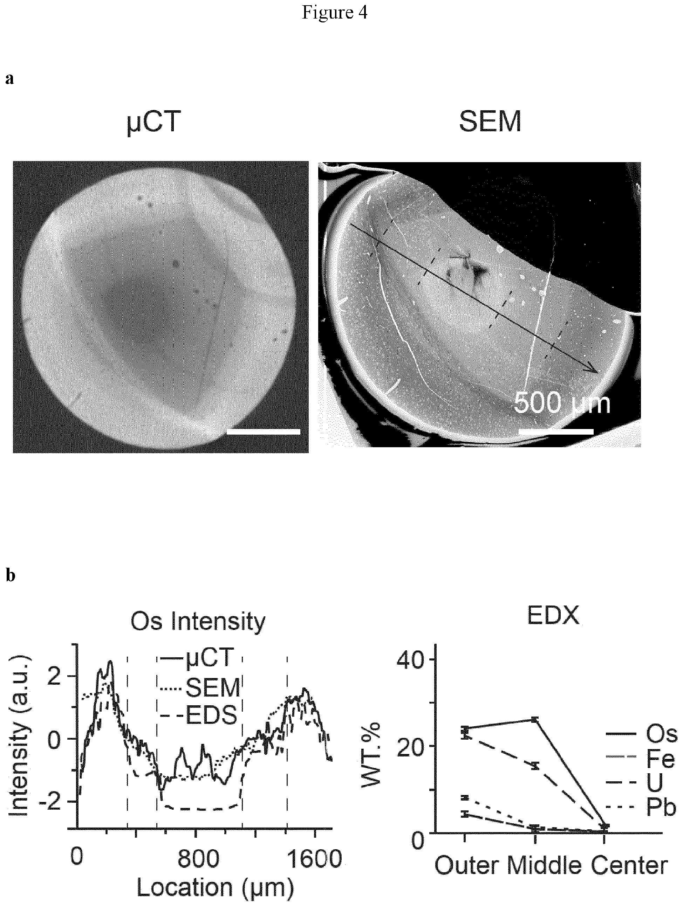

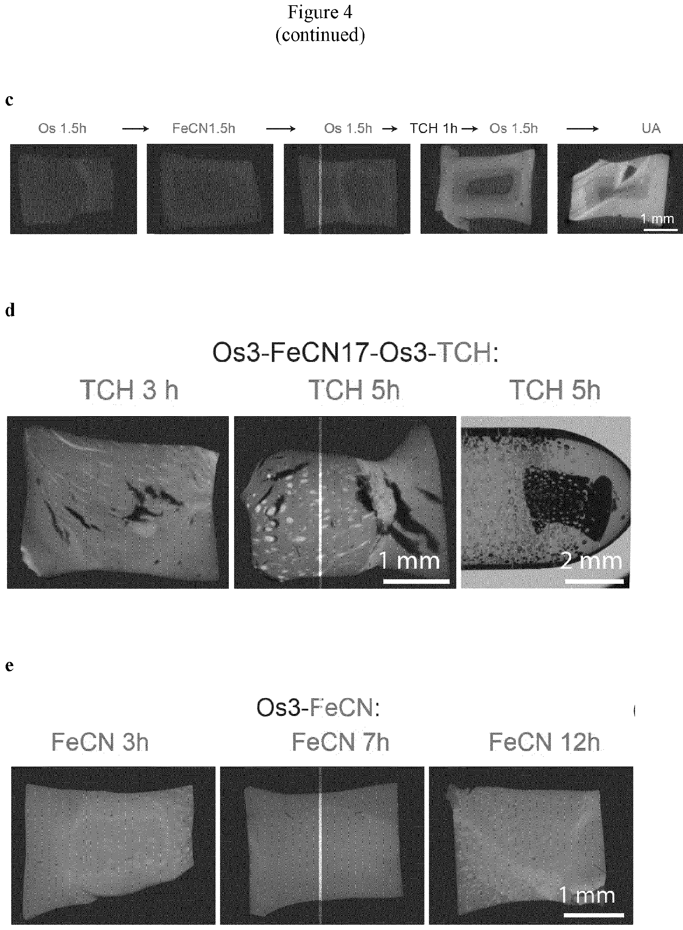

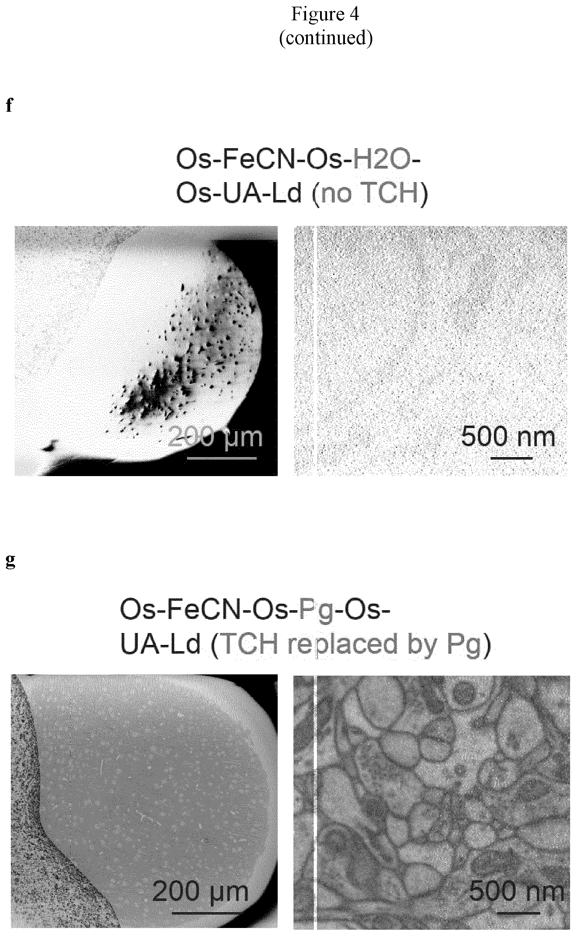

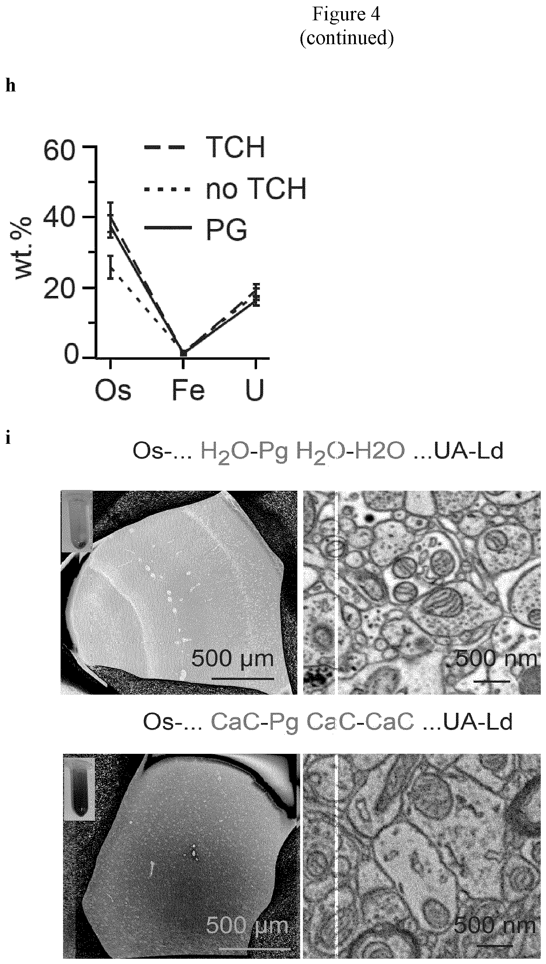

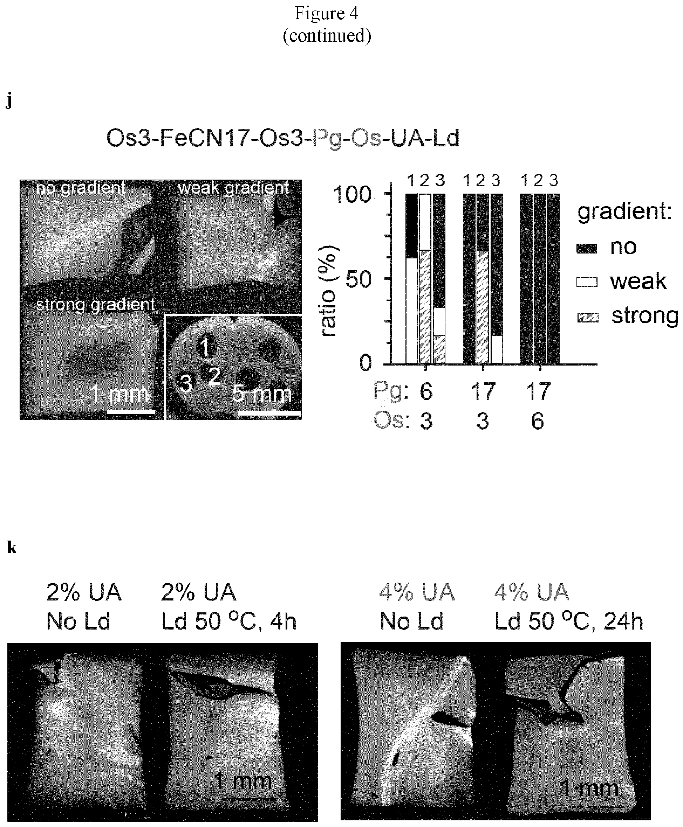

Fig. **4** **Analysis of staining gradients for 2-3 mm samples. (a)** Left: µCT image of staining gradient produced on 2 mm samples with Hua protocol (NPL11) and confirmation with scanning electron microscopy (SEM) (right). **(b)** EDS analysis of staining gradient from sample in **(a). (c)** µCT diagnosis of staining gradient after each consecutive step of the Hua staining protocol (NPL11) indicating that gradients occurred after FeCN and TCH steps. **(d)** Extension of FeCN step from 3 h to 12 h removed FeCN-related gradient. **(e)** Extending TCH incubation caused substantial breakages in the samples. **(f)** Omission of TCH step yielded very low sample conductivity; no meaningful images could be acquired in high vacuum SEM due to sample charging. **(g)** Replacing TCH by pyrogallol (Pg) (NPL19) restored sample conductivity. **(h)** EDS analysis showing that with PG incubation, the final osmium concentration in the samples reached the same level as using TCH. **(i).** Comparison of pyrogallol-related steps in water (top) vs. in CaC (bottom). When CaC buffer was used, the final contrast was decreased; a gradient was also observed. Electron dose for high resolution EM images in **(f), (g), (i):** 18 e⁻/nm². **(j)** Effect of duration of pyrogallol related steps. Left: pyrogallol related gradient was dependent on location of tissue sample, with myelin-rich subcortical regions yielding stronger gradients; right: extension of pyrogallol incubation and 3^{rd} OsO₄ step removed gradient for all sampling locations. **(k)** Gradients related to UA and Ld (lead aspartate) incubation. UA-related gradient could be removed by increasing concentration from 2% to 4%. Ld (lead aspartate) gradient could not be removed due to limited solubility and was omitted.

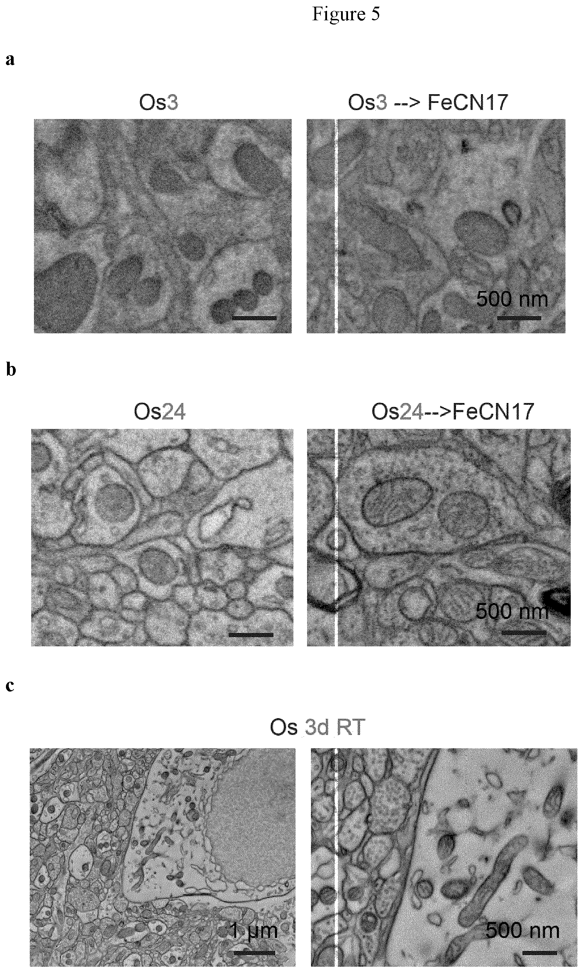

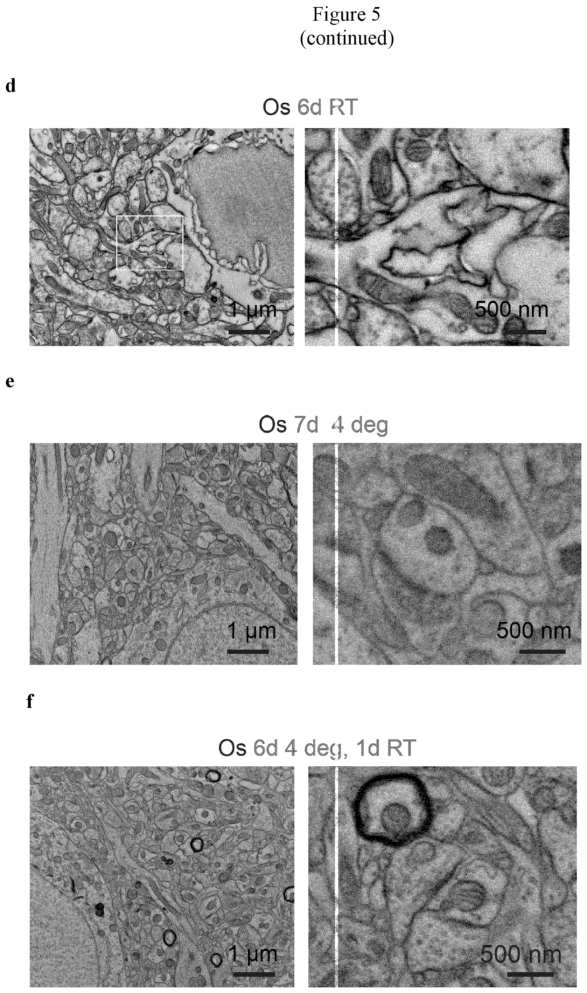

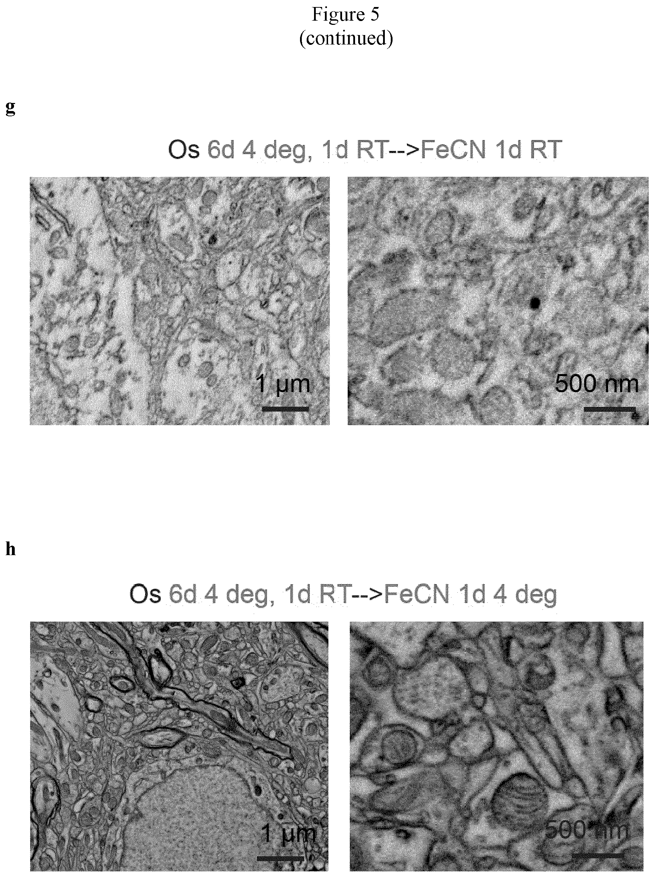

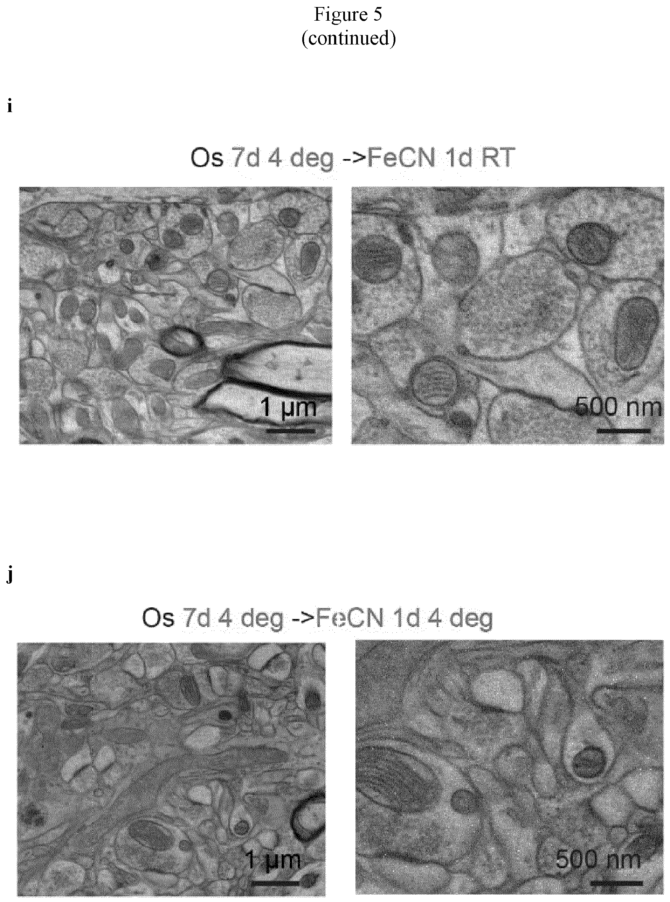

Fig. 5 **Effect of Os and FeCN incubation time and temperature on membrane contrast in 2-3 mm samples. (a)** Membrane contrast was not enhanced in samples stained with 3 h of OsO₄ (left) or with 3 h OsO₄ followed by 17 h of FeCN. **(b)** Membrane contrast was not enhanced in samples stained with 24 h of OsO₄ (left) but was enhanced in samples stained 24 h of OsO₄ followed by 17 h of FeCN. **(c), (d)** 3 **(c)** and 6 **(d)** days of OsO₄ at RT yielded increased membrane contrast, respectively, but also substantial background extractions. **(e)** 7d incubation of OsO₄ at 4 °C avoided background extraction but yielded less contrast; **(f)** 6d incubation of OsO₄ at 4 °C followed by 1 d incubation at RT avoided background extraction and yielded better contrast. **(g)** 6d incubation of OsO₄ at 4 °C followed by 1 d incubation at RT, plus 1 day FeCN incubation at RT yielded destroyed ultrastructure; **(h)** 6d incubation of OsO₄ at 4 °C followed by 1 d incubation at RT, plus 1 day FeCN incubation at 4 °C restored ultrastructural quality. **(i)** Membrane contrast enhancement also observed in samples stained for 7 days with OsO₄ at 4 °C followed by 1 day of FeCN at RT. **(j)** Membrane contrast enhancement also observed in samples stained for 7 days with OsO₄ at 4 °C followed by 1 day of FeCN at 4 °C. All images were acquired in low vacuum SEM at 30 Pa, with maximum electron dose 70 e⁻/nm².

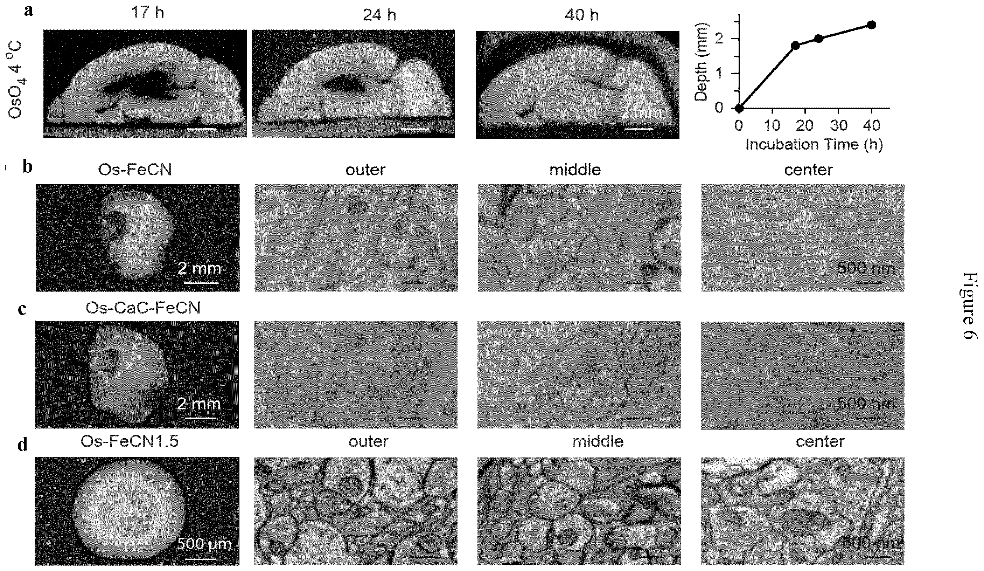

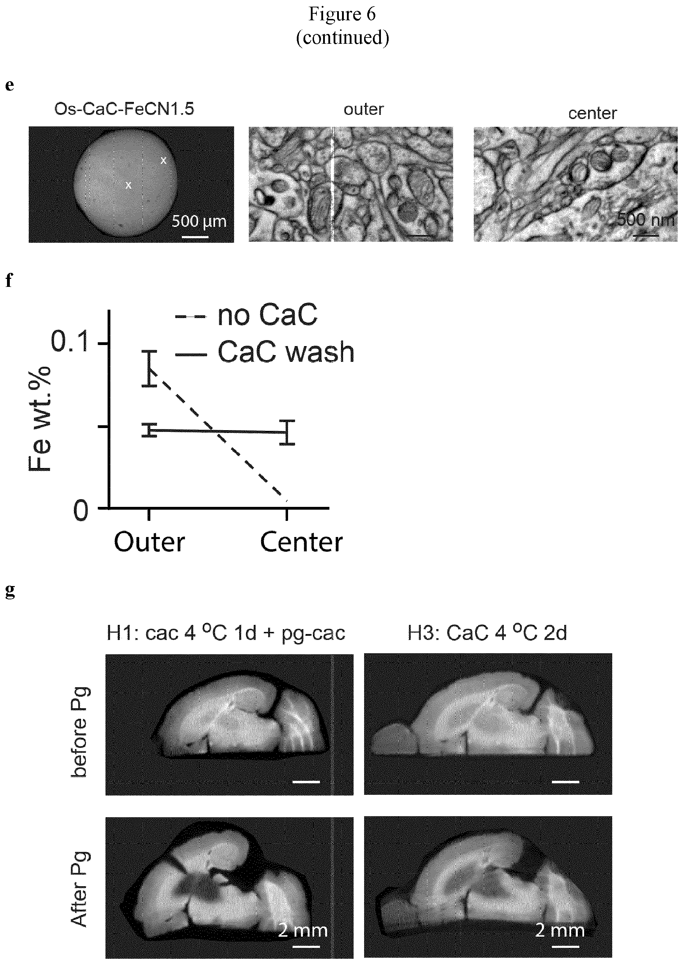

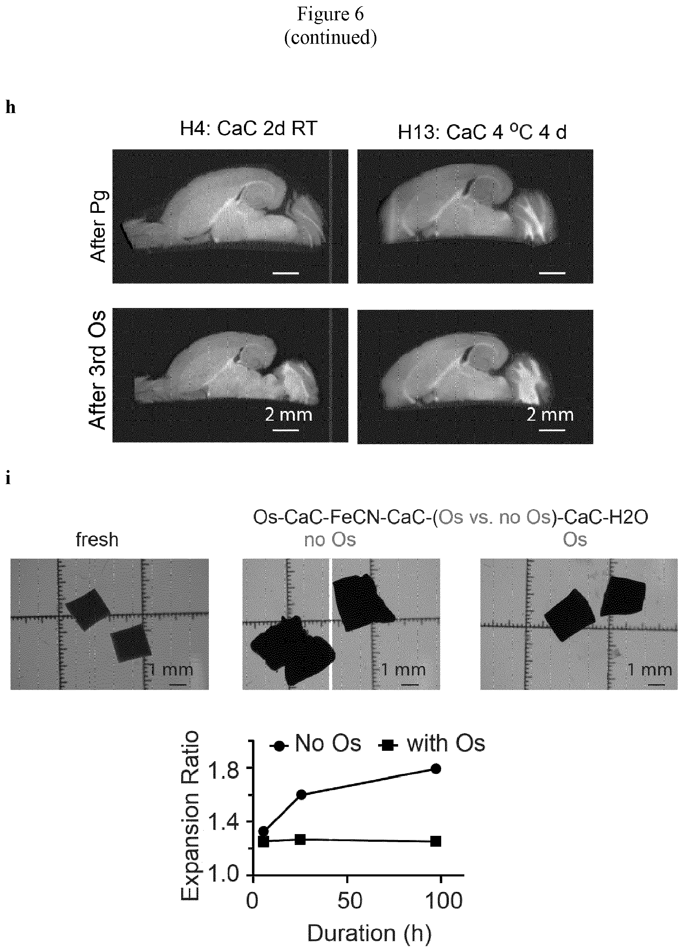

Fig. 6 **Gradients and breakages in mouse hemispheres. (a)** Observation of OsO₄ diffusion into mouse hemisphere sample at successive time points at 4 °C using µCT. **(b)** OsO₄-FeCN incubation yielded macroscopic double-gradient with staining intensity decrease at the outer and innermost part of the sample. **(c)** Buffer rinsing step between OsO₄ and FeCN avoided the OsO₄-FeCN double gradient. **(d)** except for generating double gradient, OsO₄-FeCN incubation slows down FeCN diffusion, causing no membrane contrast enhancing in the sample center. **(e)** Buffer rinsing step between OsO₄ and FeCN speed up the FeCN diffusion, lead to enhanced membrane contrast in sample center. **(f)** EDS measurement of the center of samples from **(d),** (e) show the penetration depth of FeCN in **(c), (d). (g)** if the buffering step is 1 or 2 days at 4 °C, the OsO₄ could not be easily washed out and would cause gradient (top), which would be amplified by Pg and also cause breakages (bottom) (note also in H1, CaC interaction due to not long enough H₂O rinsing before Pg). **(h)** if the buffering step is 2 days RT or 4 days 4 °C, the OsO₄ could be washed out and gradient would occur both before Pg (top) and after Pg (bottom). (i) adding an extra OsO₄ incubation step after FeCN increases the sample stability in H₂O for up to 100 h. All SEM images were acquired in low vacuum SEM at 30 Pa, with maximum electron dose 70 e⁻/nm².

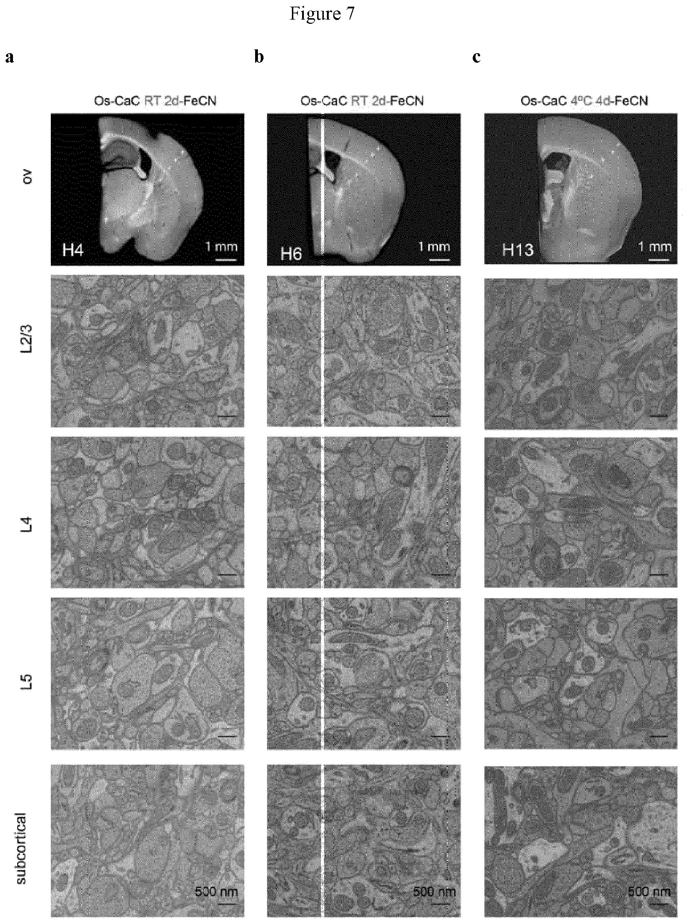

Fig. **7** **Reproduction of mouse hemisphere stainings. (a), (b)** Hemispheres H4 and H6 stained as in Table 1, Table 4. (c) Hemisphere H13 stained as in Table 1, Table 4. Together with H5 (Fig. 2) and H13, a total of n=4 hemispheres were successfully stained with parameters reported in Table 1, Table 4. Note also in H13, the postsynaptic density (PSD) preservation is better. All SEM images were taken at high vacuum with a maximum dose of 84 e⁻/nm².

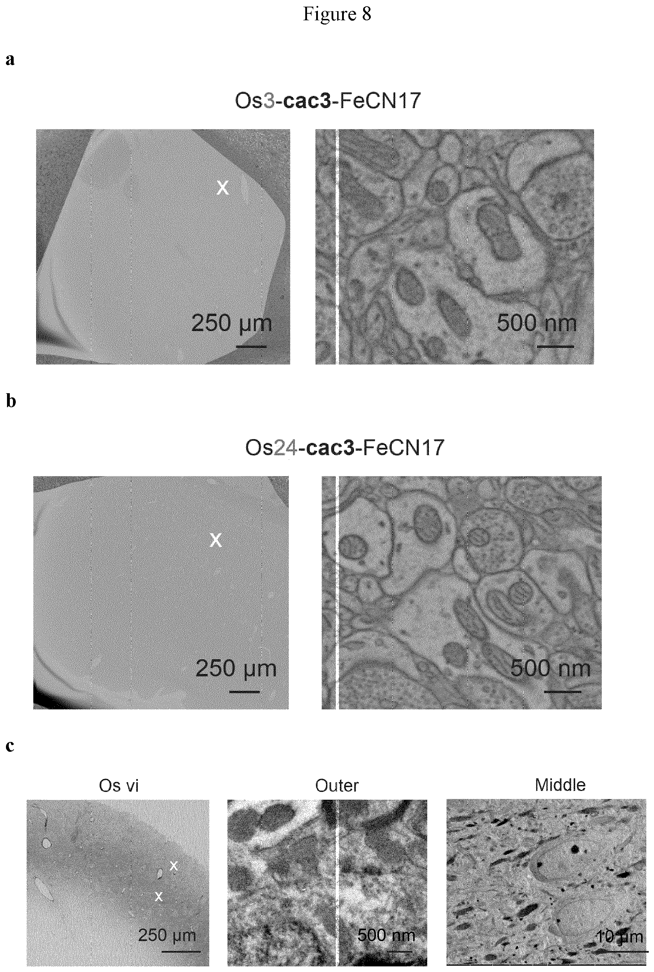

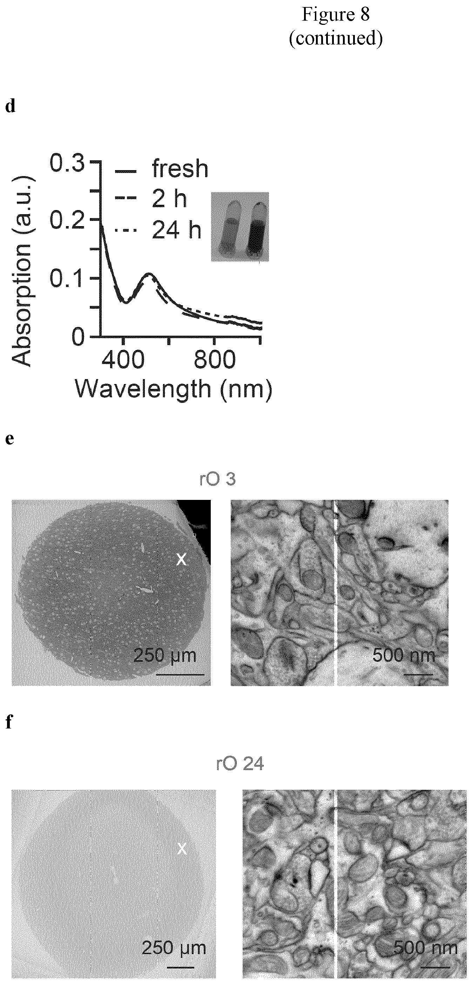

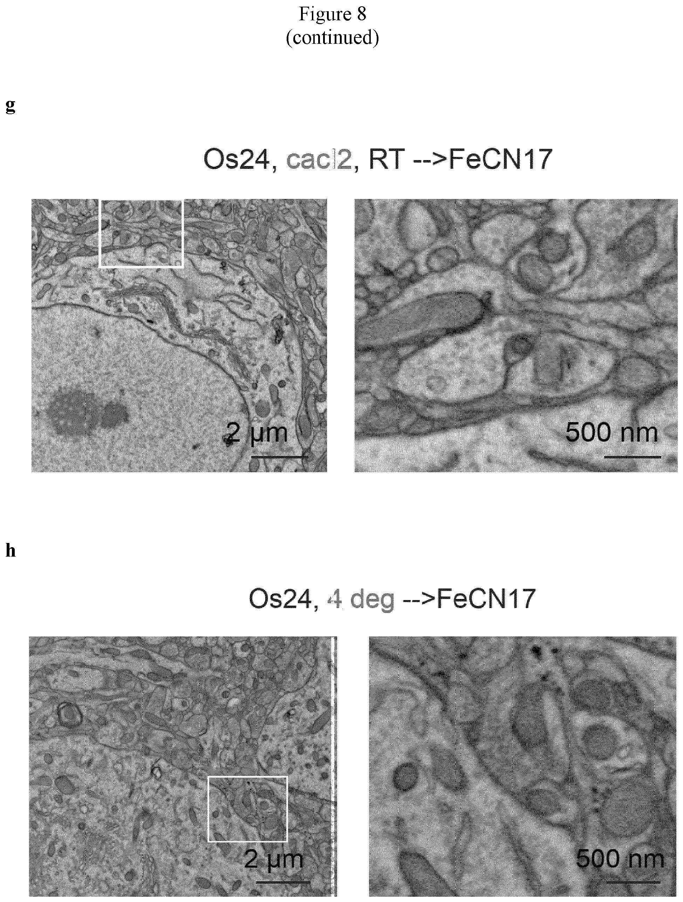

Fig. 8 **Experiments conducted for exploring possible chemical mechanisms underlying staining contrast generation. (a), (b)** When adding an intermediate CaC washing step between OsO₄ and FeCN, the final contrast remained similar to 2 mm protocols (Fig. 1(c), **(d).** Imaged in SEM in high vacuum, electron dose 18 e⁻/nm². **(c)** Staining with potassium osmate (vi) yielded a precipitation band, however, did not yield enhanced contrast. **(d)** UV-vis spectrum of potassium osmate (vi) in sodium cacodylate buffer over 24 h. **(e), (f)** 2 mm samples stained with "reduced osmium" protocol for 3 h vs. 24 h. **(g)** adding CaCl₂ into OsO₄ abolished the membrane contrast enhancement of FeCN. **(h)** OsO₄ incubation at 4 °C also abolished the membrane contrast enhancement effect of FeCN. SEM acquisition for panels **(c), (e), (f), (g), (h)** was performed in low vacuum at 30 Pa, maximum electron dose of 70 e⁻/nm².

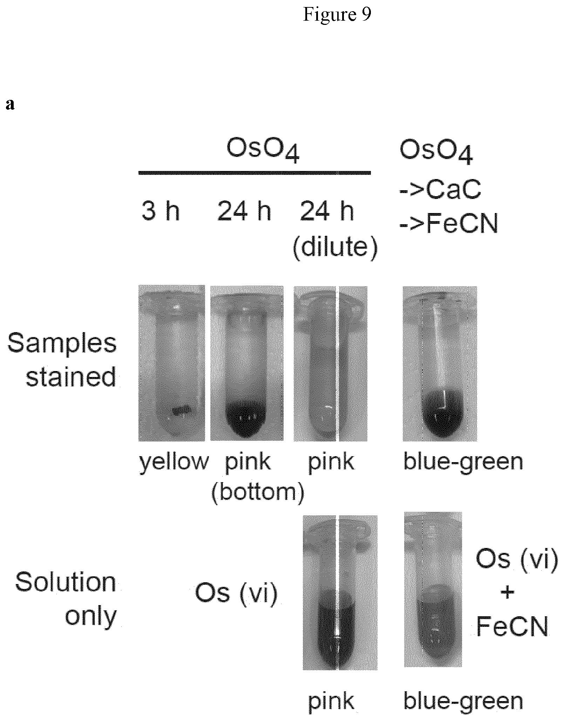

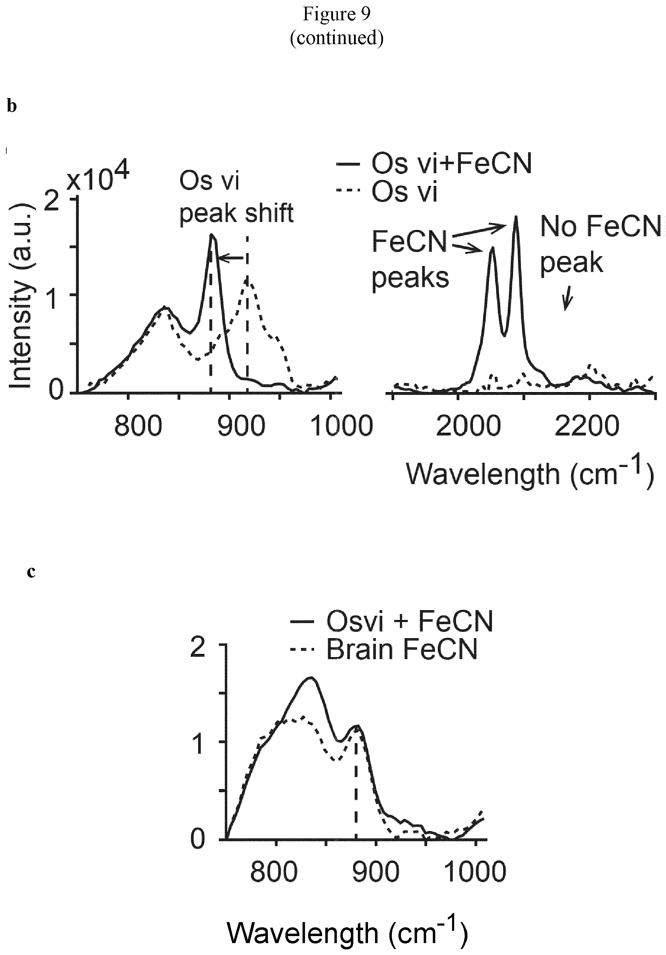

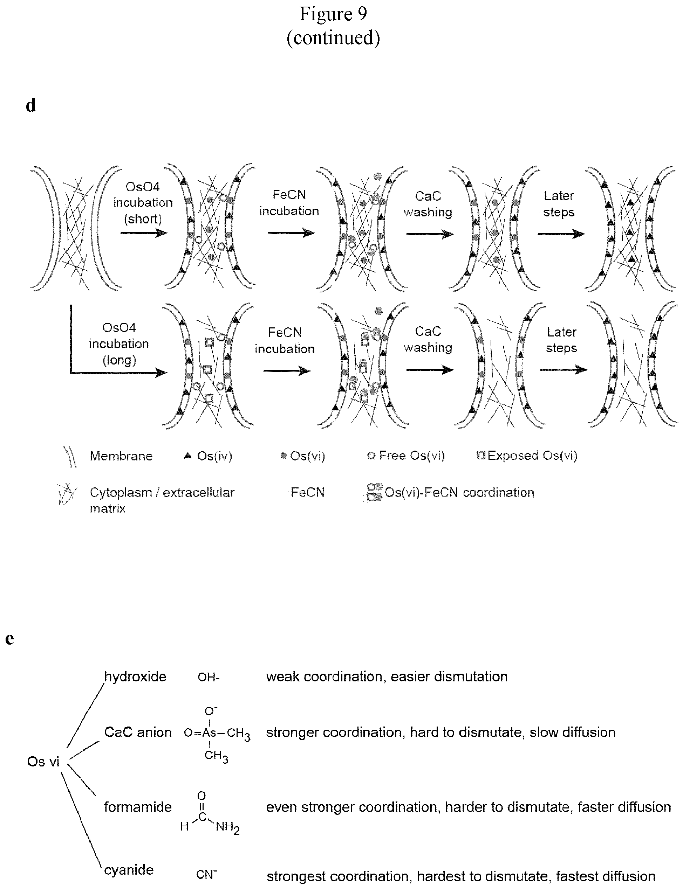

Fig. 9 **Possible chemical logic underlying staining results. (a)** Comparison of bright-field color appearance of samples stained in OsO₄ for 2 h, 24 h, 24 h (diluted to evaluate color), and stained in OsO₄(24h)->CaC->FeCN (intermediate CaC wash to remove OsO₄), top row. For comparison, pure staining solutions are shown below: Os(vi) and in vitro reaction of Os(vi) with FeCN (bottom). Note that sample solution after 24 h OsO₄ incubation appears similarly colored as Os(vi) solution (pink); and sample solution after Os-CaC-FeCN staining appears similarly colored as Os(vi)+FeCN reaction in vitro (blue-green). **(b)** left: Raman spectrum measurements of the product of Os(vi) + FeCN showing a shifted Os(vi) peak, indicating potential coordination reaction between Os(vi) and FeCN; middle: in the wavelength range corresponding to FeCN(ii) and FeCN(iii), however, the present inventors only found signal consistent with FeCN(ii) peaks, but not FeCN(iii), suggesting the reaction between Os(vi) and FeCN was not a redox reaction. **(c)** The same Os(vi) signal was observed in brain staining solution after FeCN staining and in-vitro Os(vi) + FeCN reaction. **(d)** Sketch summary of the possible chemical reactions. Short OsO₄ incubation ("Os short") may deposit Os into both membrane and background (primarily proteins in the cytosol). Os(vi) would be produced on the membrane surface and also within the extracellular matrix. If FeCN was then applied to the sample, it would donate CN⁻ as coordination ligand to Os(vi); however, this would only occur for Os(vi) on the membrane surface since Os(vi) in the background would not yet be as accessible for FeCN. This would keep osmium was kept in both membranes and backgrounds, resulting in no contrast enhancement. But if the first OsO₄ incubation was prolonged ("Os long"), the OsO₄ over-oxidization will cause the 3D-conformational change of background proteins and expose the hidden Os(vi) to aqueous phase. If FeCN was applied afterwards, FeCN will donate CN⁻ to Os(vi) both on membrane surface and on the cytoplasmic and extra cellular matrix. Consequently, osmium stays only in the membrane and thus, the local contrasts are increased. **(e)** Summary of Os(vi) coordination chemistry potentially relevant for staining mechanisms.

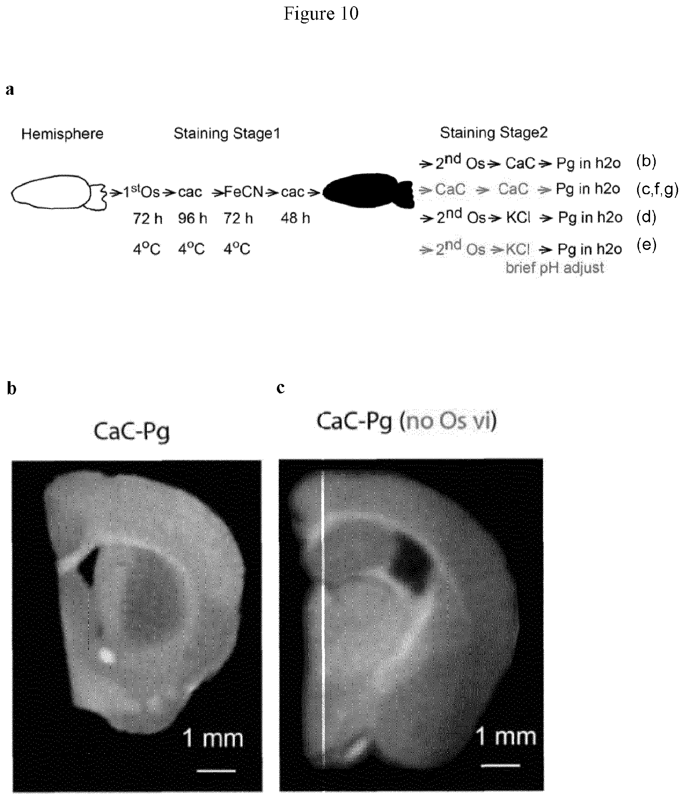

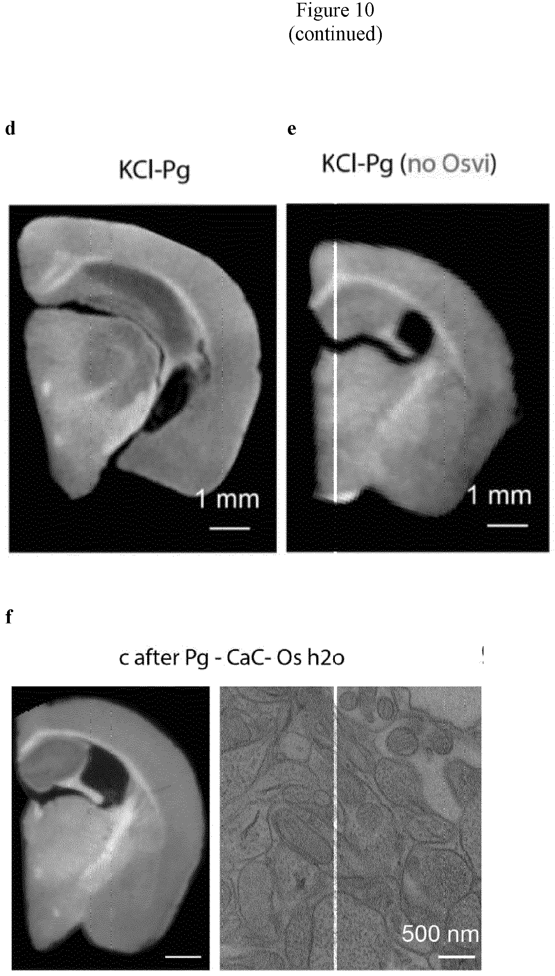

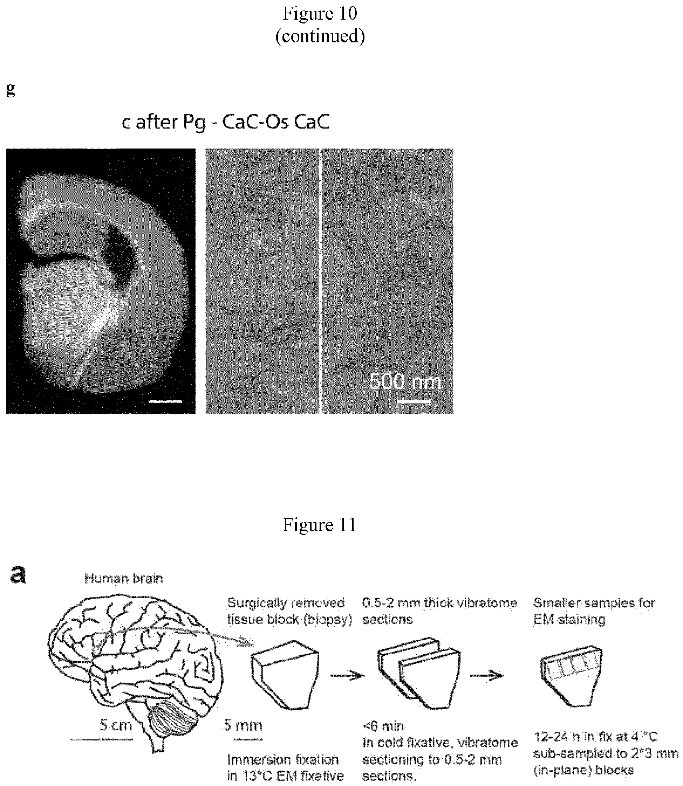

Fig. 10 **Alternative protocol approach for sensitive samples. (a)** Sketch of experiments performed to explore alternatives to incubation in plain H₂O around Pg step, which may create high osmotic stress. In brief, hemispheres were first stained with our final hemisphere protocol but only for the steps from 1st Os to the CaC rinse after FeCN; afterwards, alternatives were explored to control the presence of Os(vi) before the Pg step (see Example 3, section "Additional protocol variants for highly fragile samples"): **(b, d)** vs. **(c, e). (b).** When CaC was used between 2nd Os and Pg (presence of Os(vi)), a staining gradient appeared in Pg step. **(c)** When 2nd Os step was omitted (no Os(vi) present), the staining gradient also disappeared in the Pg step. **(d)** Similar to c, when KCl was used between 2nd Os and Pg to stabilize Os(vi), a staining gradient occurred during Pg. **(e)** When removing Os(vi) by adjusting the pH of KCl briefly to 1 (instead of cancelling 2nd Os), there would also be no staining gradient in Pg step. **(f)** Samples from c further stained with Os in water resulted in acceptable membrane contrast. **(g)** Samples from c further stained with Os in CaC resulted in acceptable membrane contrast. **(f, g)** imaged under low-vacuum SEM (60 pa, beam current ~55 pA), pixel size 11.24 nm, electron dose ~25 e⁻/nm². These experiments indicate an alternative protocol for highly fragile samples that omits 2nd Os step or uses the other tested measures to avoid pure H₂O incubation.

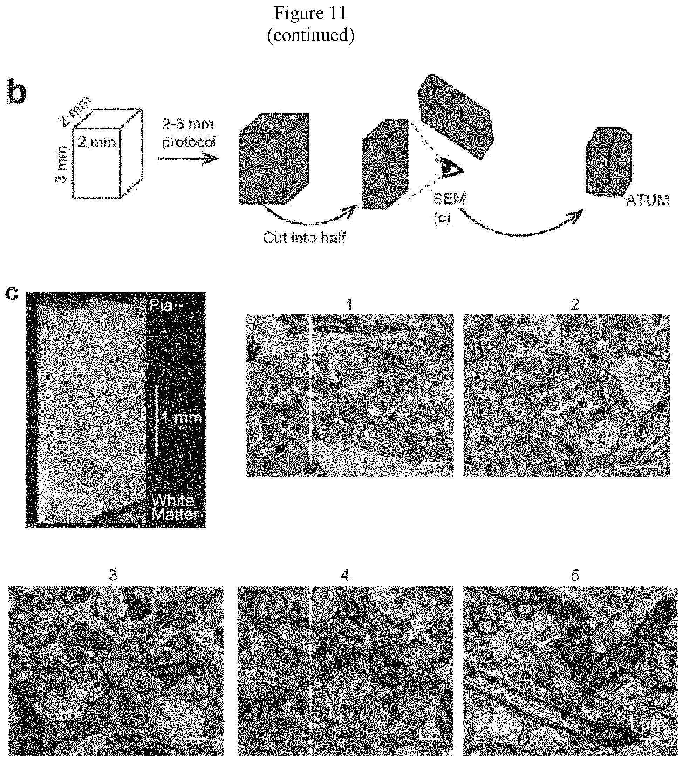

Fig. 11 **Staining of multi-mm human brain biopsy samples spanning the cortical thickness. (a)** Immersion fixation, vibratome slicing and sample generation from human brain biopsies from neurosurgical samples (same procedure as in (NPL40)). **(b)** Processing of human brain sample using this protocol for large-volume staining (here: 2x3x2 mm block = 12mm³). **(c)** Overview EM of tissue block sized 3mm in height covering pia and L1-6 of human cortical sheet (left) and high-resolution EM images of various locations along cortical axis showing high-quality staining. Note an ATUM ultrathin section series was successfully cut from this sample, as well, illustrating infiltration quality. Pixel size in c: 11.24 nm; electron dose 42 e⁻/nm².

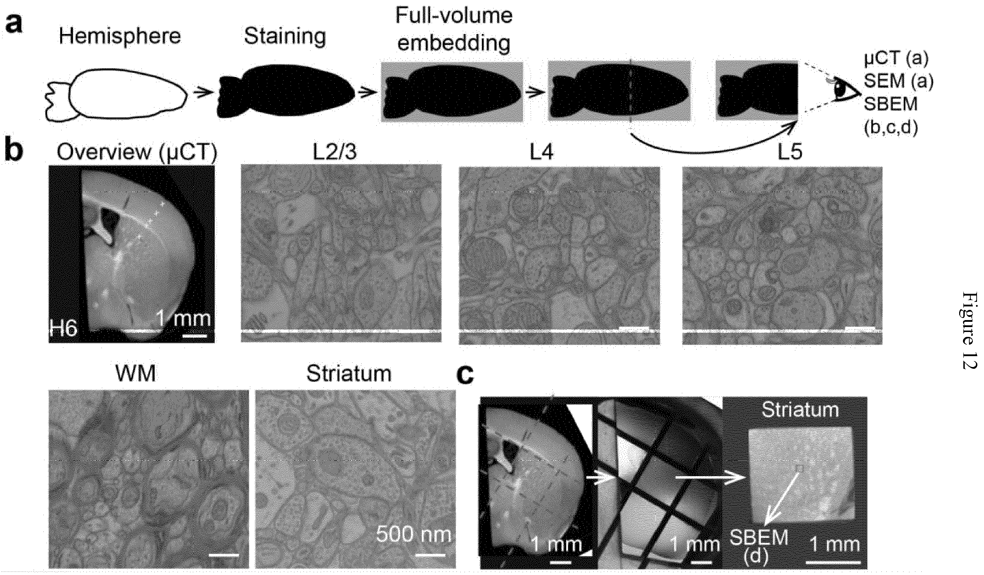

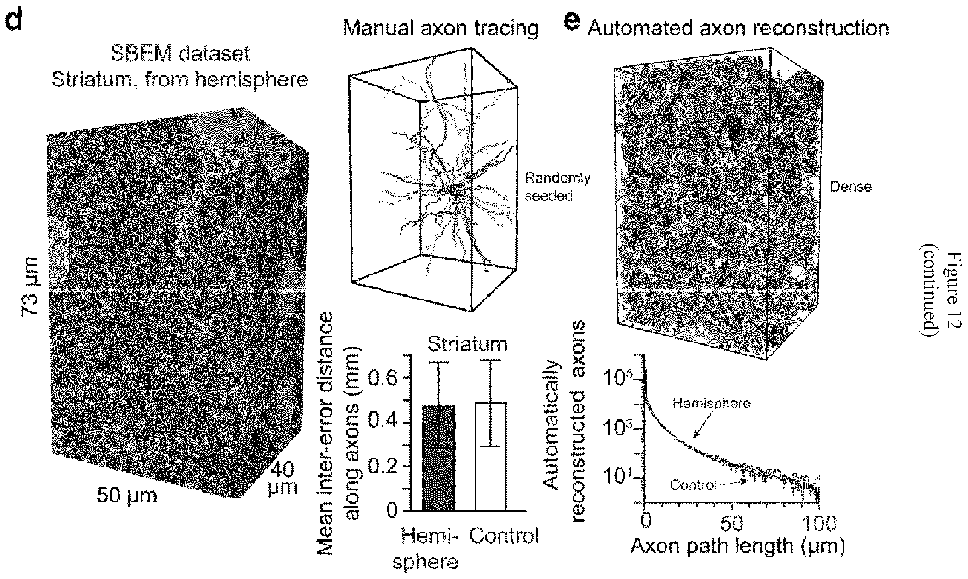

Fig. 12 **3D EM from fully embedded mouse brain hemisphere and neurite reconstruction quantification.** (a) Staining and full-volume embedding of mouse brain hemisphere; cut into two halves at the center for obtaining 3D EM stack. **(b)** SEM imaging at various locations at the blockface showing homogenous high contrast staining in cortex and subcortical regions. (c) Trimming of hemisphere block into 9 parts, using the center block to acquire SBEM stack (located in striatum). **(d)** SBEM dataset (pixel size 11.24x11.24 nm², 35nm cutting thickness). 20 randomly seeded axons (from a bounding box 3*3*3 µm³ in size) were manually reconstructed in the entire dataset. For comparison, a SBEM dataset of mouse striatum from conventional 1x1x0.5mm³ sized sample stained using the Hua protocol (NPL11) was analyzed in same way. Mean inter-error distance for axon reconstruction was similar between hemisphere-stained and control striatum dataset. **(e)** Automated dense axon reconstruction (method as described in (NPL40)) yielded axon path length distribution similar between the hemisphere striatum and control striatum dataset. Pixel size **(b, c)** 5.62 nm, **(d)** 11.24 nm. Electron dose: **(b, c):** 113 e⁻/nm². Electron dose for 3D stack acquisition: 28 e⁻/nm².

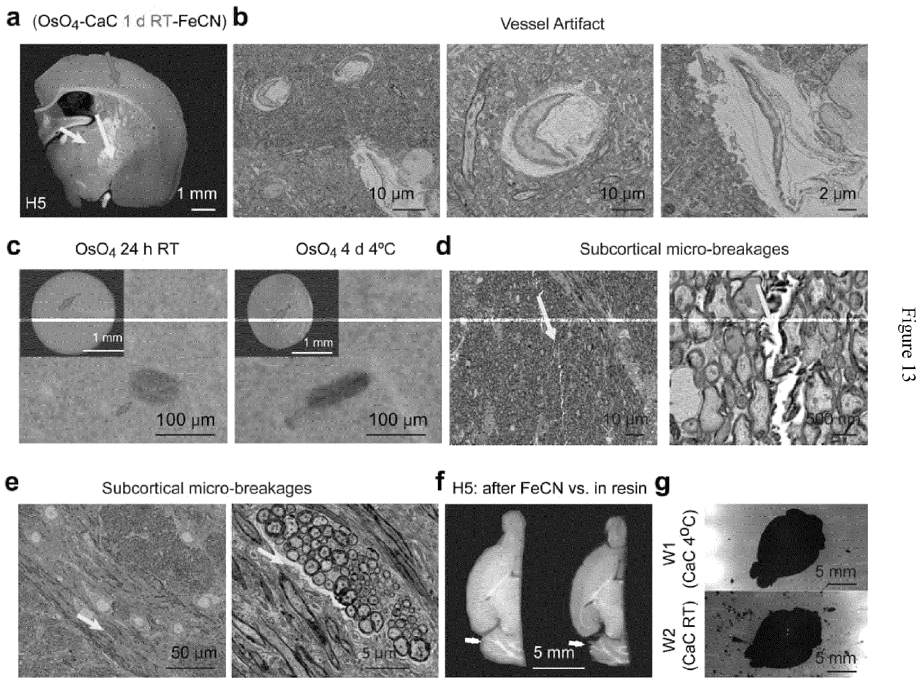

Fig. 13 **Summary of remaining artifacts in whole-brain staining protocol. (a)** µCT cross section of H5 showing locations with artifacts detailed in **b-e. (b)** Red arrow: "Vessel artifact": disruption of blood vessel pericytes from surrounding neuropil. **(c)** Vessel artifact visible in µCT images of 2 mm samples stained with OsO₄ RT 1 day or 4°C for 4 days. **(d, e)** Yellow arrows: Micro-breakages with width of less than 1 µm were occasionally observed in subcortical areas, in particular in highly myelinated regions. **(f)** During H₂O incubation, the cerebellum was especially sensitive to macroscopic damage. **(g)** Changing the CaC rinsing step between 1^{st} OsO4 and FeCN to 4°C improved the stability of the cerebellum for whole brain staining. All SEM images were acquired at high vacuum, with maximum dose of 21 e⁻/nm².

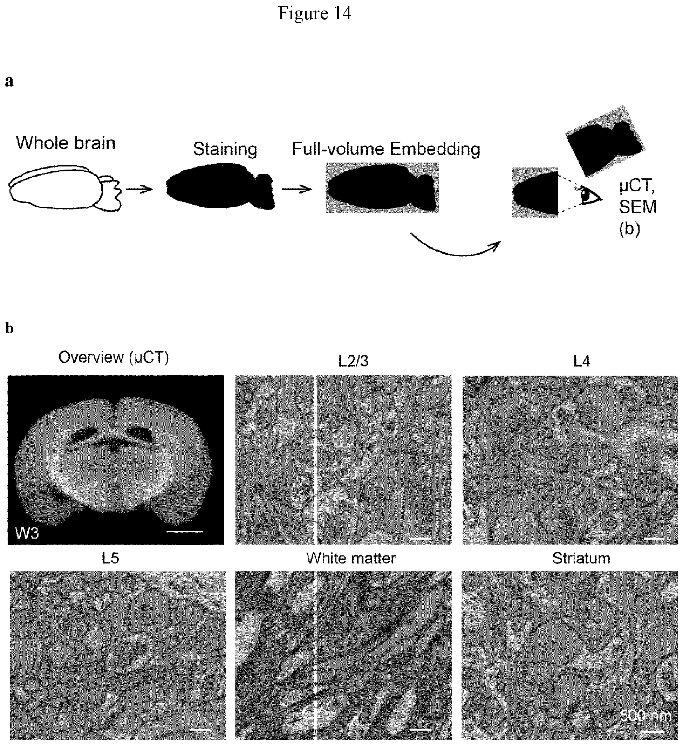

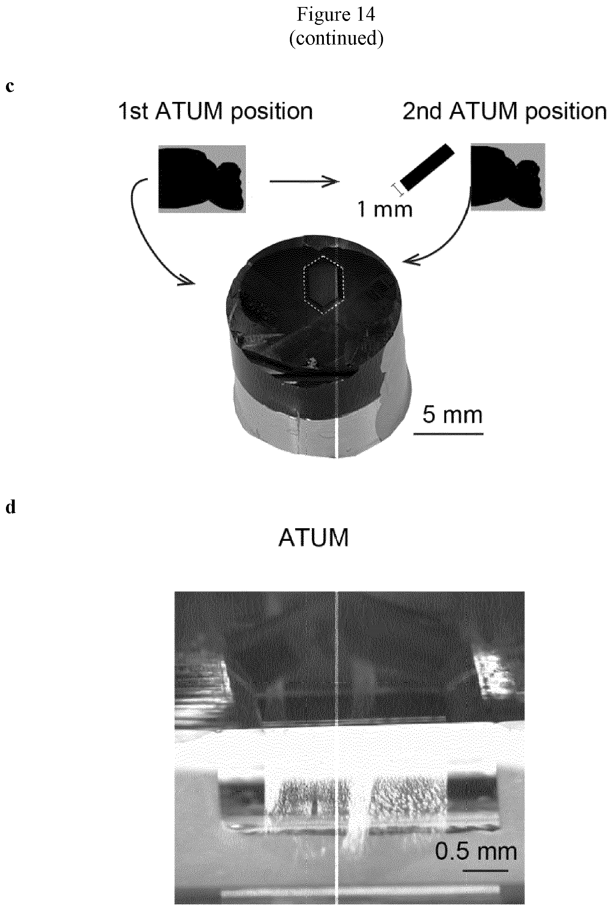

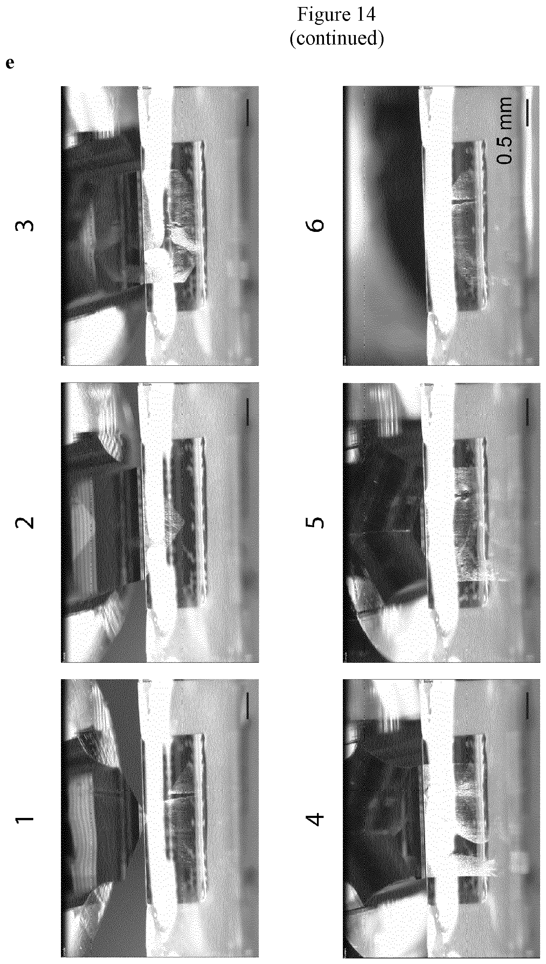

Fig. 14 **3D EM from full-volume embedded mouse whole brain. (a)** The whole brain (W3) was first stained and fully embedded by using the protocols described herein (Tables 1 and 2 for staining and embedding, respectively steps). The whole brain after full-volume embedding was cut into half, and staining quality was investigated by SEM. **(b)** Ultrathin sections of 38 nm were cut from the center of the fully stained and fully embedded mouse whole brain and high-resolution EM images were acquired at various positions along the mouse brain from superficial cortex to subcortical tissue, approximate positions are indicated in the µCT overview (top left). For illustration of staining quality, high-resolution images were at pixel size of 5.62x5.62 nm²; electron dose 113 e-/nm². (c) After cutting into half, the surface of the exposed whole brain sample was trimmed into a hexagon shape (~4x2 mm) to test ATUM cutting. Two rounds of testing were performed. For the second ATUM test, the top 1 mm surface was trimmed away, and a new hexagon was made. **(d)** Photography of the ATUM cutting procedure. **(e)** Photography series of the ATUM cutting procedure showing a complete cutting cycle, in which an ultrathin section of 38 nm thickness was generated.

### Detailed description of the invention

The present invention provides methods for en-bloc staining and postprocessing of biological tissue samples for electron microscopy. In particular, the methods of the present invention relate to homogenous and high-contrast staining of neuronal tissues up to the centimeter range without damaging the sample at the macro- as well as microscopic level, which was not achieved by previously known methods. In the method of the present invention, neuronal tissues including cortical volumes with sizes of 2-3 mm, mouse hemispheres with a size of 5 mm and mouse whole-brains with a size of 10 mm were homogenously stained without detectable staining gradients and breakages (see Example 2). Further, the method of the present invention relates to homogenous resin infiltration during embedding of the sample resulting in improved sample stability also in the sample center. The method of the present invention enables to obtain high quality samples for electron microscopy and subsequent high-resolution connectomics.

In a first aspect, the present invention relates to a method for staining a biological tissue sample. The present invention relates to a chemically logic staining protocol, including heavy metal deposition/incorporation via incubation with heavy metals and reactions enhancing the same. Occasionally, the sample is thoroughly washed with (buffered) aqueous solutions and water, to wash out previous reagents which might interfere with the reagents of the following steps.

The method of the first aspect of the present invention comprises the following steps:
a) incubating the sample in a buffered aqueous solution of 1 to 3 %, preferably 1.5 to 2.5 %, more preferably 1.8 to 2.2 %, even more preferably 2 % heavy metal compound,
b) washing the sample in a buffered aqueous solution,
c) incubating the sample in a buffered aqueous solution of 1.5 to 3.5 %, preferably 2 to 3 %, more preferably 2.2 to 2.75 %, even more preferably 2.5 % reducing agent,
d) repeating step b),
e) repeating step a),
f) repeating step b),
g) washing the sample in water,
h) incubating the sample in an aqueous solution of 2.5 to 5.5 %, preferably 3 to 5 %, more preferably 3.5 to 4.5 %, even more preferably 4 % of a staining amplification agent, wherein the staining amplification agent is selected from the group consisting of dihydroxy-, trihydroxy-and tetrahydroxy derivatives of benzene,
i) repeating step g),
j) repeating step a),
   wherein the heavy metal compound is dissolved in an aqueous solution,
k) repeating step g),
l) incubating the sample in an aqueous solution of 3 to 5 %, preferably 3.5 to 4.5 %, more preferably 3.75 to 4.25 %, even more preferably 4 % heavy metal compound,
   wherein the heavy metal compound is different to the one of step a),
m) further incubating the sample of step l),
   wherein the temperature is increased to at least 35 °C,
   and
n) repeating step g).

### Staining

The present invention relates to large-volume en-bloc staining of biological tissue samples for connectomic analysis. En-bloc staining methods for connectomics aim at homogeneous and high-contrast labeling of membranes with heavy metals without decreasing staining intensity with penetration depth and without destroying the sample. Unless specified otherwise, the concentrations of the reagents used herein refer to the weight/volume percentage concentration (w/v). In the context of the present invention, the term "room temperature (RT)" relates to temperatures between 20 °C to 26 °C. Unless specified otherwise, the term "repeating" herein typically relates to a single repetition of the indicated action, i.e., step.

### Biological Tissue Sample

The term "sample" used herein refers to the material, preferably a tissue which is to be stained and postprocessed, i.e., dehydrated and embedded for further EM analysis. Typically, the sample to be used in the method of the present invention is a biological tissue sample. Herein, the biological sample can include any type of biological tissue sample collected from a living or dead subject, including biopsies or autopsies. According to the present invention, the biological tissue sample is preferably collected from mammals.

In the context of the present invention, a biological tissue sample containing neurons is preferred. The neuronal tissue-of-interest may be a structure of several hundred micrometers in diameter, such as barrels in the mouse S1 cortex, subnuclei in the thalamus, or directional preference columns in the visual cortex.

The neuronal tissue according to the present invention is preferably selected from the group consisting of whole brains, hemispheres, cortical and/or subcortical volumes, spinal cords and peripheral tissues containing nerve endings and the like. Particularly preferred embodiments include the cortex such as the somatosensory cortex, parietal cortex and the like.

### Fixation

The methods of the present invention relate to the use of fixed biological tissue samples and any means suitable for fixing biological tissue samples known in the art, such as perfusion, immersion and the like, can be used. The skilled person will understand that any fixative reagent, such as paraformaldehyde, glutaraldehyde and the like as well as mixtures of fixative reagents known in the art may be used in the context of the present invention. The sample to be used according to the present invention is fixed with a buffered aqueous solution of paraformaldehyde, glutaraldehyde and calcium chloride. Preferably, the sample is fixed with a buffered aqueous solution of 2.5 % paraformaldehyde, 1.25 % glutaraldehyde and 2mM calcium chloride. Particularly, the buffered aqueous solution used for fixation is preferably 0.08 M cacodylate buffer having a pH of 7.4.

In the methods of the present invention, the biological tissue sample has a size bigger than 1 mm. Preferably, the size of the biological tissue sample ranges from 2 to 15 mm. Typical sizes are 5 to 15 mm or 10 to 15 mm. In a particularly preferred embodiment of the present invention, the biological tissue sample has a size of at least 2-3mm, and/or 5mm (~ size of mouse hemisphere), and/or 10 mm (~ size of mouse whole-brain). In case the biological sample is a human sample, the sample may typically have a size of 2x3x2 mm, i.e., the human sample may have a base area of 2 to 3 mm and a thickness of up to 2 mm, preferably a thickness of 2 mm. In case the human sample is a large sample derived from human cortical tissue, i.e., a large human cortical tissue sample, a useful sample size in the context of the present invention ranges from a base area of 2 to 4 mm in plane, and from 2 to 5 mm in thickness. Typically, the sample with a desired size to be used in the method of the present invention is obtained by any means suitable for cutting biological specimen, including but not limited to, a microtome, a vibratome, a razorblade and the like. The term size herein refers to all three dimensions, i.e., length, width and height of the sample (also see Fig. 1 a and b).

In a preferred embodiment, the sample to be used in the present invention is stored in a buffered aqueous solution for at least 24 h before staining.

Biological tissue samples may be stained and postprocessed using the methods described herein and may be subjected to analysis immediately following processing or may be preserved and subjected to analysis at a future time, e.g., after storage for an extended period of time. For example, biological tissue samples may be processed as described above and then stored for future analysis.

The sample containers used in the methods of the present inventions relate to any means suitable for bringing a reagent into contact with the sample to be processed. The sample containers used herein have chemical, as well as thermal stability and are lightproof when light-sensitive reagents are to be contained. Sample containers used herein are not particularly limited and include commercially available containers such as micro reaction vessels (such as Eppendorf^{®} Tubes), centrifuge tubes (such as Falcon^{™} Tubes), glassware and the like. With increasing sample size, the volume of the reagents and consequently the size of the sample container needs to be increased.

### Buffered Aqueous Solutions

In the context of the present invention, buffered aqueous solutions are not particularly limited and can be any buffer suitable for the processing of biological samples for electron microscopy known in the art, including phosphate buffers (such as Sörensen's buffer, Millonig's buffer, sodium phosphate buffer), sulfonic acid buffer, Sym-Collidine buffer and the like.

According to the present invention a buffered aqueous solution is preferably a cacodylate buffer, such as sodium cacodylate, potassium cacodylate and the like. In a particularly preferred embodiment of the present invention the buffered aqueous solution is sodium cacodylate (CaC). The concentration of the cacodylate buffer used in the present invention is 0.08 to 0.3 M, more preferably 0.08 to 0.2 M, even more preferably 0.08 and/or 0.15 M.

The pH of the buffered aqueous solution in the context of the present invention is preferably adjusted to a value of 3 to 10, preferably 4 to 9, more preferably 5 to 8, even more preferably 7.4.

Means for adjusting the pH value are not limited and any suitable means known to the skilled person may be employed. In the context of the present invention, the pH of the sodium cacodylate buffer is adjusted by using sodium hydroxide (NaOH).

The protocol steps in pure water (i.e., the washing in steps g), i), k) and n)) create substantial osmotic stress, which can be critical for large fragile samples. In order to balance these osmolarity changes, it is useful in the context of the present invention that the washing in step g), i), k) and n) is performed with buffered aqueous solution when biological tissue samples being sensitive to osmotic stress such as cerebellum are used. Typically, these samples may be washed with cacodylate buffer, aqueous solutions containing organic substances/molecules, including but not limited to, sucrose, ethanol, acetone and the like, or aqueous salt solutions including KCl, NaCl and the like.

In the context of the present invention, aqueous salt solutions are preferably selected from the group consisting of 0.15 M KCl and 0.15 M NaCl.

Residuals of reduced osmium, i.e., Os(vi), present after step e) (corresponding to the second incubation step with the heavy metal solution) may negatively influence subsequent staining amplification in step h) (corresponding to the incubation step with the staining amplification agent, e.g., Pyrogallol). This is especially the case, when aqueous salt solutions (e.g., KCl, NaCl) are used to balance osmolarity of biological tissue samples being sensitive to osmotic stress in step g). Therefore, it may be particularly useful to remove the residual Os(vi) prior to staining amplification in order to protect the integrity of fragile samples and any means suitable for depositing the remaining Os(vi) into the sample known in the art may be employed.

In the context of the present invention, Os(vi) residues may be removed by incubating the fragile sample in an aqueous solution containing a reducing agent (as specified in section "Reducing agents" below) between the third washing step (i.e., step f)) and the fourth washing step (i.e., step g)). Afterwards, the washing step with water (i.e., steps g), i), k) and n) can be replaced with washing steps with a buffered aqueous solution described herein (i.e., corresponding to step f).

In this respect, it is particularly preferred that the fragile sample is incubated for at least 24 h in an aqueous solution containing 2.5% of a reducing agent, (e.g., 2.5 % potassium ferrocyanide) dissolved in water. Further useful reducing agents and types of water in the context of the present invention are described below.

Alternatively, residual Os(vi) may be deposited into the sample by temporarily adjusting the pH of the aqueous salt solution. In this respect, it is preferred that the pH of the aqueous salt solution is decreased to a value between 1 to 2 (which triggers the dismutation of Os(vi)), preferably for at least 1 to 2 h, and afterwards put back to the initial pH value (i.e., pH 7).

The aforementioned pH adjustment may be done by actively adjusting, i.e., by changing the pH of the aqueous salt solution via adding acids/bases or by exchanging to the same aqueous salt solution at the different pH.

Yet another useful alternative to stabilize fragile biological tissue samples may be to replace the second incubation step with the heavy metal solution in step e) by a incubation step with a buffered aqueous solution, e.g., cacodylate buffer, or a buffered aqueous solution of a fixative reagent used herein, (e.g., paraformaldehyde, glutaraldehyde dissolved in cacodylate buffer according to the present invention), or an aqueous salt solution including KCl, NaCl, CaCl₂ or the like. It is preferred that KCl, preferably at a concentration of 0.1 to 0.4M, even more preferably at a concentration of 0.15 M is used. In the context of the present invention, the aforementioned incubation step may vary in time (e.g., 24 h, 48 h), temperature (e.g., 4 °C, RT) and the like, Furthermore, this incubation step may be repeated several times. It is particularly useful, that this incubation step herein is repeated four times in a row.

In the case of human samples sensitive to osmotic stress (e.g., human samples with large blood vessels such as human cortical tissue samples), despite the above measures to balance osmolarity, it may be further useful to gradually decrease/increase the osmolarity of the incubation solutions to/from washing steps with pure water (i.e., from steps f) to g), from steps g) to h), from steps h) to i), from steps i) to j), from steps j) to k), from steps k) to l) and from steps l) to m) to preserve sample integrity. For instance, in view of steps f) to g), instead of changing the buffered aqueous solution to water in one step, gradually changing to solutions with decreasing osmolarity in two or more steps may be performed. Gradual changes herein similarly relate to gradual decreases and gradual increases in the osmolarity of the incubation solutions. For instance, in view of steps g) and h), the osmolarity of the aqueous solution of the staining amplification agent may be increased in a stepwise/gradual manner as well.

### Heavy metal solutions

In the context of the present invention, in order to increase the density of the biological tissue sample for EM, heavy metal atoms may be incorporated from solution into the tissue-of-interest. These heavy metal atoms attach to subcellular structures within the tissue, increasing their electron density. As a result, the subcellular structures appear dark and stand out against a lighter background.

Typically, heavy metals/heavy metal compounds to be used according to the present invention include but are not limited to osmiumtetroxide, osmic acid, uranyl acetate (UA), uranyl formate, lanthanum nitrate, phosphotungstic acid, phosphomolybdic acid, ammonium molybdate, sodium urinate, lead perchlorate, erbium acetate, gadolinium acetate, methylamine tungstate, samarium acetate, thulium acetate, sodium silicotungstate, sodium phosphotungstate, lead hydroxide/citrate and the like. In case heavy metal solutions containing lead are used in the methods of the present invention, it is suggested to extend the incubation time to preferably 24 to 48 h and to renew the solution preferably 5 to 10 times.

According to the present invention, water-soluble heavy metals/heavy metal compounds are preferred. In a particularly preferred embodiment of the present invention the heavy metal compound in steps a), e) and j) is osmiumtetroxide and the heavy metal compound in step l) is uranyl acetate. Herein, the terms "OsO₄" and "osmium(viii)oxide" are interchangeably used and refer to osmiumtetroxide, which is also known as osmic acid in the art.

The water-soluble heavy metal compound can be dissolved either in an aqueous solution and/or a buffered aqueous solution and/or an aqueous salt solution.

It is particularly preferred that the heavy metal compound of steps a) and e) are dissolved in a buffered aqueous solution. Preferably, in the context of the present invention a buffered aqueous solution of 1 to 3 %, preferably 1.5 to 2.5 %, more preferably 1.8 to 2.2 %, even more preferably 2 % Osmium tetroxide (OsO₄) is used for steps a) and e).

It is also particularly preferred that the heavy metal compound of steps j) and l) are present as aqueous solution. Preferably, in the context of the present invention an aqueous solution of 1 to 3 %, preferably 1.5 to 2.5 %, more preferably 1.8 to 2.2 %, even more preferably 2 % Osmium tetroxide (OsO₄) is used for step j) and an aqueous solution of 3 to 5 %, preferably 3.5 to 4.5 %, more preferably 3.75 to 4.25 %, even more preferably 4 % uranyl acetate (UA) is used in step l).

In another preferred embodiment of the present invention, the heavy metal compound in steps Aa) and Ag) is osmiumtetroxide and the heavy metal compound in step Ai) is uranyl acetate.

It is particularly preferred that the heavy metal compound of step Aa) and Ag) are dissolved in a buffered aqueous solution. Preferably, in the context of the present invention a buffered aqueous solution of 1 to 3 %, preferably 1.5 to 2.5 %, more preferably 1.8 to 2.2 %, even more preferably 2 % Osmium tetroxide (OsO4) is used for steps Aa) and Ag). Alternatively, the heavy metal compound of step Ag) can be present as aqueous solution. Preferably, in the context of the present invention an aqueous solution of 1 to 3 %, preferably 1.5 to 2.5 %, more preferably 1.8 to 2.2 %, even more preferably 2 % Osmium tetroxide (OsO4) is used for step Ag). It is also particularly preferred that the heavy metal compound of steps Ai) is present as aqueous salt solution. Preferably, in the context of the present invention an aqueous salt solution of 3 to 5 %, preferably 3.5 to 4.5 %, more preferably 3.75 to 4.25 %, even more preferably 4 % uranyl acetate (UA) is used in step Ai).

### Reducing agents

In order to enhance membrane contrast and/or to accelerate contrast enhancement, reducing reagents may be used in the methods of the present invention and any reducing reagents known in the art (such as K₃Co(CN)₆, K₂Ru(CN)6, K₄Os(CN)₆) can be used. Preferably, potassium ferrocyanide (K₄Fe(CN)₆), potassium ferricyanide (K₃Fe(CN)₆), calcium ferrocyanide Ca₂[Fe(CN)₆], sodium ferrocyanide (Na₄Fe(CN)₆) and the like, as well as mixtures of said reducing agents may be used in the methods of the present invention. Using mixtures of ferricyanide (Fe(iii)CN) and ferrocyanide (Fe(ii)CN) is particularly useful in the methods of the present invention to titrate the background contrast when conductivity needs to be increased. According to the present invention, potassium ferrocyanide and/or potassium ferricyanide is most preferred.

In order to protect background proteins after prolonged OsO₄ incubation (i.e., when samples with a size of 5 mm and 10 mm are to be used), steps a), b) and c) are performed below 10 °C, more preferably 2 to 6 °C, even more preferably 4 °C.

Alternatively, or in combination with the aforementioned means for inhibiting membrane contrast enhancement of the reducing agent, the buffered aqueous solution used in steps a), b) and c), preferably in steps a) and b), more preferably in step c) may further contain calcium chloride (CaCl₂). Typically, useful concentrations of CaCl₂ herein, include but are not limited to, 1 to 10 mM, preferably 2 to 5 mM, more preferably 2 to 3 mM. In a particularly preferred embodiment, a buffered aqueous solution with 3 mM of CaCl₂ is used in steps a), b) and/or c).

In the context of the present invention, the terms "FeCN" and "K₄Fe(CN)₆" are used interchangeable and refer to potassium ferrocyanide. Preferably, in the context of the present invention a buffered aqueous solution of 1.5 to 3.5 %, preferably 2 to 3 %, more preferably 2.2 to 2.75 %, even more preferably 2.5 % of FeCN is used as reducing agent.

### Water

According to the present invention, the term "water" refers to purified water. Purified water refers to water that has been mechanically filtered or otherwise processed to remove impurities. Purified water herein refers to distilled water, deionized water, autoclaved water, Nanopure^{™} water, Milli-Q^{®} water and the like. The use of Milli-Q^{®} water is particularly preferred.

### Staining amplification agents such as Pyrogallol

In order to further enhance the staining contrast for osmophilic components of the cell, especially lipids, and to increase the electric conductivity of the sample, the sample can be incubated with a staining amplification agent (contrast enhancing agent). These staining amplification agents typically include dihydroxy-, trihydroxy- and tetrahydroxy derivatives of benzene such as 1,2,3-Trihydroxybenzene (Pyrogallol), 1,2,4,5-Tetrahydroxybenzene, 3-Methyl-1,2-Benzenediol (3-Methylcatechol), and 4-Methyl 1,2-Benzenediol (4-Methylcatechol). Pyrogallol (abbreviated "Pg" herein) is most often used for this purpose and the preferred staining amplification agent herein.

An incubation with the staining amplification agent, preferably 1,2,3-Trihydroxybenzene, is performed in the methods of the present invention. In the context of the present invention, the terms "1,2,3-Trihydroxybenzene", "Pyrogallol" and "Pg" are used interchangeably. Whenever, "Pg" is used in the methods of the invention, it can in alternative embodiments be replaced by other staining amplification agents such as 1,2,4,5-Tetrahydroxybenzene, 3-Methyl-1,2-Benzenediol (3-Methylcatechol), and 4-Methyl 1,2-Benzenediol (4-Methylcatechol). Preferably, in the context of the present invention an aqueous solution of 2.5 to 5.5 %, preferably 3 to 5 %, more preferably 3.5 to 4.5 %, even more preferably 4 % of the staining amplification agent, preferably 1,2,3-Trihydroxybenzene, is used in step h).

In another preferred embodiment of the present invention the staining amplification agent, preferably Pg, is prepared within less than 1 month, preferably within less than 2 weeks, more preferably within less than 3 days, even more preferably within less than 1 h.

### Incubation and washing times

According to the present invention, the incubation times is sufficiently long to enable the relevant reagents to diffuse from the exterior to the sample center but also sufficiently short to not lead to damages at the macro- and microscopic level. Furthermore, the washing times used herein are sufficiently long to remove the previous reagent and thus, to avoid potential undesired chemical interactions. Incubation and/or washing times used herein may vary depending on the size of the sample.

In the context of the present invention, the incubation and washing time with respect to samples with a size of 2 to 3 mm in step a) is preferably 3 to 30 h, more preferably 18 to 28 h, even more preferably 24 h, in step b) is preferably 0.5 to 24 h, more preferably 1 to 12 h, even more preferably 2 h, in step c) is preferably 12 to 48 h, more preferably 15 to 24 h, even more preferably 17 h, in step d) is preferably 0.5 to 24 h, more preferably 1 to 12 h, even more preferably 2 h, in step e) is preferably 1.5 to 24 h, more preferably 3 to 10 h, even more preferably 3 h, in step f) is preferably 0.5 to 24 h, more preferably 1 to 12 h, even more preferably 1 h, in step g) is preferably 1 to 24 h, more preferably 1 to 17 h, even more preferably 2 h, in step h) is preferably 10 to 48 h, more preferably 12 to 24 h, even more preferably 17 h, in step i) is preferably 1 to 24 h, more preferably 1 to 17 h, even more preferably 2 h, in step j) is preferably 5 to 24 h, more preferably 5 to 10 h, even more preferably 6 h, in step k) is preferably 1 to 24 h, more preferably 1 to 17 h, even more preferably 1 h, in step l) is preferably 10 to 24 h, more preferably 12 to 20 h, even more preferably 17 h, in step m) is preferably 1 to 6 h, more preferably 2 to 4 h, even more preferably 2 h, and in step n) is preferably 1 to 24 h, more preferably 1 to 17 h, even more preferably 1 h.

In the context of the present invention with respect to human samples with a sample size of 2 to 3 mm in each dimension (e.g., 2-3 mm in plane (base area) and a thickness of ≤ 2 mm), although not being recommended, the washing in step d) may be omitted. In this case, the incubation step with a buffered aqueous solution of a reducing agent would be directly followed by an incubation step with a buffered aqueous solution of a heavy metal compound without performing a washing step in-between.

In the context of the present invention, the incubation and washing time with respect to samples with a size of 5 mm in step a) is preferably 40 to 90 h, more preferably 60 to 80 h, even more preferably 72 h, in step b) is preferably 72 to 120 h, more preferably 80 to 100 h, even more preferably 96 h, in step c) is preferably 48 to 96 h, more preferably 60 to 80 h, even more preferably 72 h, in step d) is preferably 24 to 72 h, more preferably 40 to 60 h, even more preferably 48 h, in step e) is preferably 24 to 72 h, more preferably 30 to 50 h, even more preferably 48 h, in step f) is preferably 17 to 72 h, more preferably 20 to 40 h, even more preferably 24 h, in step g) is preferably 17 to 48 h, more preferably 20 to 30 h, even more preferably 24 h, in step h) is preferably 20 to 48 h, more preferably 20 to 30 h, even more preferably 24 h, in step i) is preferably 17 to 48 h, more preferably 20 to 30 h, even more preferably 24 h, in step j) is preferably 40 to 64 h, more preferably 40 to 50 h, even more preferably 48 h, in step k) is preferably 17 to 48 h, more preferably 20 to 30 h, even more preferably 24 h, in step l) is preferably 30 to 64 h, more preferably 40 to 50 h, even more preferably 48 h, in step m) is preferably 1 to 6 h, more preferably 2 to 5 h, even more preferably 5 h, and in step n) is preferably 17 to 48 h, more preferably 20 to 30 h, even more preferably 24 h.

In the context of the present invention, the incubation and washing time with respect to samples with a size of 10 mm in step a) is preferably 70 to 120 h, more preferably 90 to 100 h, even more preferably 96 h, in step b) is preferably 120 to 190 h, more preferably 144 to 170 h, even more preferably 96 h, in step c) is preferably 68 to 96 h, more preferably 70 to 80 h, even more preferably 72 h, in step d) is preferably 70 to 120 h, more preferably 80 to 100 h, even more preferably 72 h, in step e) is preferably 24 to 72 h, more preferably 30 to 50 h, even more preferably 48 h, in step f) is preferably 24 to 96 h, more preferably 48 to 80 h, even more preferably 72 h, in step g) is preferably 30 to 96 h, more preferably 40 to 64 h, even more preferably 48 h, in step h) is preferably 30 to 64 h, more preferably 40 to 50 h, even more preferably 48 h, in step i) is preferably 30 to 96 h, more preferably 40 to 64 h, even more preferably 48 h, in step j) is preferably 72 to 120 h, more preferably 80 to 100 h, even more preferably 96 h, in step k) is preferably 30 to 96 h, more preferably 40 to 64 h, even more preferably 48 h, in step l) is preferably 30 to 64 h, more preferably 40 to 50 h, even more preferably 48 h, in step m) is preferably 1 to 6 h, more preferably 2 to 5 h, even more preferably 5 h, and in step n) is preferably 1 to 96 h, more preferably 40 to 64 h, even more preferably 48 h.

In the context of the present invention, the incubation and washing time with respect to samples derived from cerebellum and/or large human cortical tissue samples in step Aa) is preferably 40 to 90 h, more preferably 60 to 80 h, even more preferably 72 h, in step Ab) is preferably 72 to 120 h, more preferably 80 to 100 h, even more preferably 96 h, in step Ac) is preferably 48 to 96 h, more preferably 60 to 80 h, even more preferably 72 h, in step Ad) is preferably 24 to 72 h, more preferably 40 to 60 h, even more preferably 48 h, in step Ae) is preferably 24 to 72 h, more preferably 30 to 50 h, even more preferably 48 h, in step Af) is preferably 24 to 72 h, more preferably 40 to 60 h, even more preferably 48 h, in step Ag) is preferably 40 to 64 h, more preferably 40 to 50 h, even more preferably 48 h, in step Ah) is preferably 20 to 48 h, more preferably 20 to 30 h, even more preferably 24 h, in step Ai) is preferably 40 to 64 h, more preferably 40 to 50 h, even more preferably 48 h, in step Aj) is preferably 1 to 6 h, more preferably 2 to 5 h, even more preferably 5 h and in step Ak) is preferably 20 to 48 h, more preferably 20 to 30 h, even more preferably 24 h.

### Incubation and washing temperatures

According to the present invention, the incubation temperatures used herein may vary depending on the size of the sample.

In the context of the present invention, the incubation temperature with respect to samples with a size of 2 to 3 mm in step a) is higher than 4 °C, preferably 4 to 30 °C, more preferably 15 to 25 °C, even more preferably 25 °C, in step c) is preferably below 10 °C, more preferably 2 to 6 °C, even more preferably 4 °C, in steps e), h) and j) is higher than 4 °C, preferably 4 to 30 °C, more preferably 15 to 25 °C, even more preferably 25 °C, in step l) is preferably below 10 °C, more preferably 2 to 6 °C, even more preferably 4 °C, and in step m) is preferably at least 35 °C, more preferably 40 to 60 °C, even more preferably 50 °C.

In the context of the present invention, the incubation temperature with respect to samples with a size of 5 mm and 10 mm in steps a) and c) is preferably below 10 °C, more preferably 2 to 6 °C, even more preferably 4 °C, in steps e), h) and j) is higher than 4 °C, preferably 4 to 30 °C, more preferably 15 to 25 °C, even more preferably 25 °C, in step l) is preferably below 10 °C, preferably 2 to 6 °C, even more preferably 4 °C, and in step m) is preferably at least 35 °C, more preferably 40 to 60 °C, even more preferably 50 °C.

In the context of the present invention, the washing temperature is not depending on the size of the sample and in step b) is preferably below 10 °C, more preferably at 2 to 6 °C, more preferably at 4 °C, and in steps d), f), g), i), k) and m) is higher than 4 °C, preferably 4 to 30 °C, more preferably 15 to 25 °C, even more preferably 25 °C.

In the context of the present invention, the incubation temperature with respect to samples derived from cerebellum and/or large human cortical tissue samples in steps Aa), Ab), Ac) and Ai) is preferably below 10 °C, more preferably 2 to 6 °C, even more preferably 4 °C and in steps Ad), Ae), Af), Ag), Ah) and Ak) is higher than 4 °C, preferably 4 to 30 °C, more preferably 15 to 25 °C, even more preferably 25 °C and in step Aj) is preferably at least 35 °C, more preferably 40 to 60 °C, even more preferably 50 °C.

### Solution Renewal Frequencies

In the context of the present invention, the incubation and washing solutions may be renewed depending on the size of the sample.

In the context of the present invention, the incubation and/or washing solution with respect to samples with a size of 2 to 3 mm is changed in step b) preferably every 0.5 to 1 h, more preferably every 0.5 to 0.75 h, even more preferably every 0.5 h, in step c) preferably every 12 to 48 h, more preferably every 15 to 24 h, even more preferably every 24 h, in steps d) and f) preferably every 0.5 to 1 h, more preferably every 0.5 to 0.75 h, even more preferably every 0.5 h, in steps g), i), k) and n) preferably every 0.5 to 17 h, more preferably every 0.5 to 2 h, even more preferably every 0.5 h.

In the context of the present invention, the incubation and/or washing solution with respect to samples with a size of 5 mm and 10 mm is changed in step b) preferably every 4 to 17 h, more preferably every 4 to 8 h, even more preferably every 4 h, in step c) preferably every 8 to 30 h, more preferably every 12 to 28 h, even more preferably every 24 h, in step d) preferably every 4 to 24 h, more preferably every 4 to 17 h, even more preferably every 4 h, in step f) preferably every 4 to 24 h, more preferably every 4 to 17 h, even more preferably every 4 h, in step g), i), k) and n) preferably every 4 to 17 h, more preferably every 4 to 10 h, even more preferably every 4 h.

In the context of the present invention, the incubation and/or washing solution with respect to samples derived from cerebellum and/or large human cortical tissue samples is changed in steps Ab), Ad), Af), Ah) and Ak) preferably every 4 to 17 h, more preferably every 4 to 8 h, even more preferably every 4 h and in step Ac) preferably every 8 to 30 h, more preferably every 12 to 28 h, even more preferably every 24 h, in step

In a second aspect, the present invention relates to the postprocessing of the stained biological sample. According to the present invention, the postprocessing includes dehydrating and embedding the biological tissue sample.

### Dehydrating

In the context of the present invention, after being stained, the biological tissue sample is dehydrated by using a graded ethanol series. Any means suitable to dehydrate biological tissue samples are suitable in the methods of the present invention.

Typically, the biological tissue sample of the present invention is dehydrated by performing an ascending alcohol series. Particularly, in the context of the present invention, the stained biological tissue sample is subsequently placed into aqueous solutions of 25 %, 50 % and 75 % ethanol as well as in 100 % ethanol and 100 % acetone in order to prevent sample deformation due to acute dehydration.

The dehydration procedure and temperature may vary depending on the size of the sample.

In the context of the present invention, a sample with a size of 2 to 3 mm may be subsequently incubated in an aqueous solution of 50 %, 75 % and 100 % ethanol. According to the present invention the incubation step in 100% ethanol is performed at 25 °C and for lower ethanol concentrations at 4 °C.

Herein each incubation step is performed preferably 0.5 to 1 h, more preferably 0.75 h. As a final dehydrating step, the sample may be incubated in 100 % acetone at 25 °C for 2 to 3 h. Preferably, the acetone may be changed every 0.5 to 0.75 h.

In the context of the present invention, a sample with a size of 5 and 10 mm may be subsequently incubated in an aqueous solution of 25 %, 50 %, 75 % and 100 % ethanol. According to the present invention the incubation step in 100% ethanol is performed at 25 °C and/or at 4 °C and for lower ethanol concentrations at 4 °C. For instance, in case 10 mm samples (e.g., whole mouse brains) are to be fully embedded by using the methods described herein, the incubation in 100 % ethanol may be performed at 4°C. In the case of 5 mm samples, each incubation step may be performed preferably 8 to 17 h, more preferably 8 h. In the case of 10 mm samples, each incubation step may be performed 12 to 24 h, preferably 17 to 24 h, more preferably 24 h. It will be understood that the incubation times for the aqueous solutions having different ethanol concentrations do not necessarily have to be the same and, thus, may vary depending on the ethanol concentration. For instance, in case 10 mm samples (e.g., whole mouse brains) are to be fully embedded by using the methods described herein, the sample may be incubated in an aqueous solution of 25 % ethanol for 12 to 24 h, preferably for 12 h whereas the incubation in an aqueous solution of 50 % and 75 % ethanol and 100 % ethanol may be performed for 24 h. As a final dehydrating step, the sample may be incubated in 100 % acetone at 25 °C for 32 h. Preferably, for 5 mm samples the acetone may be changed every 8 to 17 h and for 10 mm samples every 17 to 24 h. For instance, in case 10 mm samples (e.g., whole mouse brains) are to be fully embedded by using the methods described herein, the sample may alternatively be incubated in 100 % acetone for 3 days at 25 °C or 4 °C.

In the context of the present invention, a sample derived from cerebellum and/or a large human cortical tissue sample may be subsequently incubated in an aqueous solution of 25 %, 50 %, 75 % and 100 % ethanol. According to the present invention, the aforementioned incubation steps may be performed at 25 °C and preferably 8 to 24 h. As a final dehydrating step, the sample may be incubated in 100 % acetone at 25 °C for 32 to 48 h. Preferably, for samples derived from cerebellum and/or a large human cortical tissue samples the acetone may be changed every 8 to 12 h.

### Embedding

Typically, after being dehydrated, the biological tissue sample of the present invention is embedded by using a low-viscosity epoxy resin embedding method.

In the context of the present invention, the term "resin infiltration" refers to treating the tissue with a resin that penetrates throughout the tissue to the molecular level, subsequently hardens and finally transforms into a solid thereby rendering the sample rigid.

According to the present invention, the term "embedding" relates to placing the infiltrated biological tissue sample in a mold in which the sample is typically surrounded with the same infiltrating resin. The mold is then hardened to form an encasing block. The embedding reagent thus serves to provide rigid support and to facilitate the subsequent sectioning process.

Embedding mediums used herein are preferably epoxy resin and include but are not limited to commercially available epoxy resins such as Epon 812 substitute resin, resin prepared according to Spurr, and the like.

In a particularly useful embodiment of the present invention, the resin according to Spurr (Spurr's resin, 10 g) consists of 3,4-epoxycyclohexylmethyl 3,4-epoxycyclo-hexaneca (ERL 4221, 4.1 g), diglycidyl ether of polypropylene glycol (DER 736, 0.95 g), nonenyl succinic anhydride (NSA, 5.9 g) and dimethylaminoethanol (DMAE, preferably 11 to 113 µl, more preferably 55 to 113 µl, even more preferably 113 µl).

In another typical embodiment of the present invention, the Epon 821 substitute resin (Epon 812, 10 g) consist of tri-glycidyl ether of glycerol (5.9 g), Methyl nadic anhydride (MNA, 3.7 g), Dodecenylsuccinic anhydride (DDSA, 2.25 g), 2,4,6-Tris(dimethylaminomethyl)phenol (DMP, 20 to 205 µl, more preferably 100 to 205 µl, even more preferably 205 µl).

In order to achieve a homogenous resin infiltration, the methods of the present invention relate to the use of a low viscosity resin infiltration method, wherein the concentration of the resin is gradually increased. The resin may be diluted by any suitable means known in the art, including organic solvents such as alcohols, ketones and the like. In a preferred embodiment of the present invention the resin is dissolved in acetone.

The dehydration procedure may vary depending on the size of the sample. Typically, the low viscosity epoxy resin infiltration method of the present invention is performed preferably below 10 °C, more preferably 2 to 6 °C, even more preferably at 4 °C

According to the present invention a sample with a size of 2 to 3 mm may be subsequently incubated in 25 %, 50 % and 75 % Spurr's resin in acetone. Herein the aforementioned incubation steps are preferably performed 8 to 16 h, more preferably 8 to 10 h, even more preferably 8 h. As a further embedding step, the sample may be incubated in 100 % Spurr's resin. Herein the incubation in 100 % Spurr's resin may be performed preferably 2 to 3 days, more preferably 2 days. Moreover, it is preferred that the pure resin is changed every 8 to 17 h, more preferably every 8 h. In the context of the present invention, the temperature may be further increased, and the sample may be further incubated in 100 % Spurr's resin.

In another embodiment of the present invention a sample with a size of 2 to 3 mm may be subsequently incubated in 12.5 %, 25 %, 37.5 %, 50 %, 62.5 %, 75 % and 87.5 % Epon 812 resin in acetone. Herein the aforementioned incubation steps are preferably performed 4 to 16 h, more preferably 4 to 10 h.

It is particularly preferred that each of the incubation steps between 12.5 % and 50 % Epon 812 is performed for 4 h and that each of the steps between 62.5 % and 87.5 % Epon 812 is performed for 8 h.

As a further embedding step, the sample may be incubated in 90 % and/or 95 % Epon 812 resin in acetone and 100 % Epon 812 resin. Herein the aforementioned incubation steps are preferably performed for 2 to 3 days. It is particularly preferred that the incubation in 90 % and/or 95 % Epon 812 is performed for 3 days and in 100 % Epon 812 is performed for 3 days. According to the present invention a sample with a size of 5 mm may be subsequently incubated in 25 %, 50 % and 75 % Spurr's resin in acetone. Herein the aforementioned incubation steps are preferably performed 17 to 48 h, more preferably 20 to 30 h, even more preferably 24 h. As a further embedding step, the sample may be subsequently incubated in 90 %, 95 % Spurr's resin in acetone and 100 % Spurr's resin. Herein the aforementioned incubation steps are preferably performed for 2 to 3 days. It is particularly preferred that the incubation in 90 % Spurr's resin is performed for 2 days, and in 95 % and 100 % Spurr's resin is performed for 3 days. Moreover, it is preferred that the pure resin is changed every 8 to 17 h, more preferably every 8 h.

According to the present invention a sample with a size of 10 mm may be subsequently incubated in 25 %, 50 % and 75 % Spurr's resin in acetone. Herein the aforementioned incubation steps are preferably performed 8 to 16 h, more preferably 8 to 10 h, even more preferably 8 h. As a further embedding step, the sample may be subsequently incubated in 90 %, 95 % Spurr's resin in acetone and 100 % Spurr's resin. Herein the aforementioned incubation steps are preferably performed for 3 to 5 days. It is particularly preferred that the incubation in 90 % Spurr's resin is performed for 3 days, for 5 days in 95 % and for 4 days in 100 % Spurr's resin. Moreover, it is preferred that the pure resin is changed every 8 to 17 h, more preferably every 8 h.

Alternatively, for full-volume embedding a sample with a size of 10 mm may be subsequently incubated in 25 %, 50 %, 75%, and 90 % Spurr's resin in acetone. Herein the aforementioned incubation steps are preferably performed 2 to 4 days, more preferably 2 to 3 days, even more preferably 3 days. As a further embedding step, the sample may be subsequently incubated in 95 % Spurr's resin in acetone for 4 to 7 days, preferably 4 days. Afterwards, the sample maybe incubated in 100% Spurr's resin for 6 to 8 days, more preferably 6 to 7 days, even more preferably for 6 days. Moreover, it is preferred that the 95% Spurr's resin and the pure resin is changed every 1 to 2 days to freshly prepared 95 % Spurr's resin and freshly prepared pure resin, respectively.

According to the present invention a sample derived from cerebellum and/or a large human cortical tissue sample may be subsequently incubated in 25 %, 50 %, 75 %, 90 % and 95 % Spurr's resin in acetone and 100 % Spurr's resin.

Herein, the aforementioned incubation steps are preferably performed 24 to 36 h. As a further embedding step, the sample may be subsequently incubated in 100 % Spurr's resin. Herein the aforementioned incubation step is preferably performed for 3 to 4 days. Moreover, it is preferred that the pure resin is changed every 8 to 17 h, more preferably every 8 h.

In the context of the present invention, as a final embedding step the temperature may be further increased, and the sample may be further incubated in pure resin preferably for 1 to 3 days, more preferably 3 days. Preferably the temperature may be increased to 50 to 80 °C, more preferably 65 to 75 °C even more preferably to 60 to 70 °C. In case Spurr's resin is used it is particularly preferred that temperature is increased to 70 °C and in case Epon 812 resin is used it is particularly preferred that temperature is increased to 60 °C.

In a third aspect, the present invention relates to the analysis of the stained and postprocessed biological sample. According to the present invention, EM analysis is preferred.

### Analysis

The EM analysis is not limited to a certain method and preferably, volume EM, even more preferably high-throughput volume EM is used for connectomic analysis/dense neuronal circuit reconstruction in the context of the present invention.

Typically, the image data needed for high-resolution connectomics may be acquired using transmission electron microscopy (TEM), preferably scanning electron microscopy (SEM), and/or section-based SEM (SBEM) and the like. Typically, the biological tissue sample of the present invention is cut into sections of preferably 20 to 200 nm, more preferably 30-40 nm, even more preferably 35 nm and/or 38 nm and further imaged by using high throughput SEM, preferably Multi-SEM.

In one aspect, the present invention is used in the pathological examination of mammalian, preferably human neuronal tissue samples. Pathological examination based on the methods of the present invention may be useful to study neuronal disorders, which include, but are not limited to, Alzheimer's disease, Parkinson's disease and autism. Furthermore, the methods of the present invention may also be used to assess the efficacy of therapeutic measures such as medication in the aforementioned neurological disorders.

In a preferred embodiment, the present invention relates to a method of staining a biological tissue sample with a sample size of 2 to 3 mm which comprises the following steps:
a) incubating the sample in 2 % (w/v) Osmium tetroxide (OsO₄) dissolved in 0.15 M sodium cacodylate (CaC) buffer (pH 7.4),
   wherein the incubation is performed at 25 °C for 24 h;
b) washing the sample in 0.15 M CaC buffer (pH 7.4),
   wherein the washing is performed at 4 °C for 2 h,
   and wherein the buffer is changed every 0.5 h;
c) incubating the sample in 2.5 % (w/v) of potassium ferrocyanide (K₄Fe(CN)₆) dissolved in 0.15 M CaC buffer (pH 7.4),
   wherein the incubation is performed at 4 °C for 17 h;
d) washing the sample in 0.15 M CaC buffer (pH 7.4),
   wherein the washing is performed at 25 °C for 2 h,
   and wherein the buffer is changed every 0.5 h;
e) incubating the sample in 2 % OsO₄ (w/v) dissolved in 0.15 M CaC buffer (pH 7.4),
   wherein the incubation is performed at 25 °C for 3 h;
f) washing the sample in 0.15 M CaC buffer (pH 7.4),
   wherein the washing is performed at 25 °C for 1 h,
   and wherein the buffer is changed every 0.5 h;
g) washing the sample in purified water,
   wherein the washing is performed at 25 °C for 2 h,
   and wherein the water is changed every 0.5 h;
h) incubating the sample in 4 % (w/v) 1,2,3-Trihydroxybenzene dissolved in purified water,
   wherein the incubation is performed at 25 °C for 17 h;
i) washing the sample in purified water,
   wherein the washing is performed at 25 °C for 2 h,
   and wherein the water is changed every 0.5 h;
j) incubating the sample in 2 % (w/v) OsO₄ dissolved in purified water,
   wherein the incubation is performed at 25 °C for 6 h;
k) washing the sample in purified water,
   wherein the washing is performed at 25 °C for 1 h,
   and wherein the water is changed every 0.5 h;
l) incubating the sample in an aqueous solution of 4 % (w/v) uranyl acetate (UA),
   wherein the incubation is performed at 4 °C for 17 h;
m) further incubating the sample of step l),
   wherein the incubation is performed at 50 °C for 2 h;
   and
n) washing the sample in purified water,
   wherein the washing is performed at 25 °C for 1 h,
   and wherein the water is changed every 0.5 h,

In another preferred embodiment, the present invention relates to a method of staining a biological tissue sample with a sample size of 5 mm which comprises the following steps:
a) incubating the sample in 2 % (w/v) Osmium tetroxide (OsO₄) dissolved in 0.15 M sodium cacodylate (CaC) buffer (pH 7.4),
   wherein the incubation is performed at 4 °C for 72 h;
b) washing the sample in 0.15 M CaC buffer (pH 7.4),
   wherein the washing is performed at 4 °C for 96 h,
   and wherein the buffer is changed every 4 h;
c) incubating the sample in 2.5 % (w/v) of potassium ferrocyanide (K₄Fe(CN)₆) dissolved in 0.15 M CaC buffer (pH 7.4),
   wherein the incubation is performed at 4 °C for 72 h;
   and wherein the FeCN is changed every 24 h;
d) washing the sample in 0.15 M CaC buffer (pH 7.4),
   wherein the washing is performed at 25 °C for 48 h,
   and wherein the buffer is changed every 4 h;
e) incubating the sample in 2 % OsO₄ (w/v) dissolved in 0.15 M CaC buffer,
   wherein the incubation is performed at 25 °C for 48 h;
f) washing the sample in 0.15 M CaC buffer (pH 7.4),
   wherein the washing is performed at 25 °C for 24 h,
   and wherein the buffer is changed every 4 h;
g) washing the sample in purified water,
   wherein the washing is performed at 25 °C for 24 h,
   and wherein the water is changed every 4 h;
h) incubating the sample in 4 % (w/v) 1,2,3-Trihydroxybenzene dissolved in purified water,
   wherein the incubation is performed at 25 °C for 24 h;
i) washing the sample in purified water,
   wherein the washing is performed at 25 °C for 24 h,
   and wherein the water is changed every 4 h;
j) incubating the sample in 2 % (w/v) OsO₄ dissolved in purified water,
   wherein the incubation is performed at 25 °C for 48 h;
k) washing the sample in purified water,
   wherein the washing is performed at 25 °C for 24 h,
   and wherein the water is changed every 4 h;
l) incubating the sample in an aqueous solution of 4 % (w/v) uranyl acetate (UA),
   wherein the incubation is performed at 4 °C for 48 h;
m) further incubating the sample of step l),
   wherein the incubation is performed at 50 °C for 5 h;
   and
n) washing the sample in purified water,
   wherein the washing is performed at 25 °C for 24 h,
   and wherein the water is changed every 4 h.

In yet another preferred embodiment, the present invention relates to a method of staining a biological tissue sample with a sample size of 10 mm which comprises the following steps:
a) incubating the sample in 2 % (w/v) Osmium tetroxide (OsO₄) dissolved in 0.15 M sodium cacodylate (CaC) buffer (pH 7.4),
   wherein the incubation is performed at 4 °C for 96 h;
b) washing the sample in 0.15 M CaC buffer (pH 7.4),
   wherein the washing is performed at 4 °C for 168 h,
   and wherein the buffer is changed every 4 h;
c) incubating the sample in 2.5 % (w/v) of potassium ferrocyanide (K₄Fe(CN)₆) dissolved in 0.15 M CaC buffer (pH 7.4),
   wherein the incubation is performed at 4 °C for 72 h,
   and wherein the FeCN is changed every 24 h;
d) washing the sample in 0.15 M CaC buffer (pH 7.4),
   wherein the washing is performed at 25 °C for 96 h,
   and wherein the buffer is changed every 4 h;
e) incubating the sample in 2 % OsO₄ (w/v) dissolved in 0.15 M CaC buffer (pH 7.4),
   wherein the incubation is performed at 25 °C for 48 h;
f) washing the sample in 0.15 M CaC buffer (pH 7.4),
   wherein the washing is performed at 25 °C for 72 h,
   and wherein the buffer is changed every 4 h;
g) washing the sample in purified water,
   wherein the washing is performed at 25 °C for 48 h,
   and wherein the water is changed every 4 h;
h) incubating the sample in 4 % (w/v) 1,2,3-Trihydroxybenzene dissolved in purified water,
   wherein the incubation is performed at 25 °C for 24 h;
i) washing the sample in purified water,
   wherein the washing is performed at 25 °C for 48 h,
   and wherein the water is changed every 4 h;
j) incubating the sample in 2 % (w/v) OsO₄ dissolved in purified water,
   wherein the incubation is performed at 25 °C for 96 h;
k) washing the sample in purified water,
   wherein the washing is performed at 25 °C for 48 h,
   and wherein the water is changed every 4 h;
l) incubating the sample in an aqueous solution of 4 % (w/v) uranyl acetate (UA),
   wherein the incubation is performed at 4 °C for 48 h;
m) further incubating the sample of step l),
   wherein the incubation is performed at 50 °C for 5 h;
   and
n) washing the sample in purified water,
   wherein the washing is performed at 25 °C for 48 h,
   and wherein the water is changed every 4 h.

In another preferred embodiment, the present invention further relates to a method of postprocessing the biological tissue sample obtained in step n) which comprises the following steps:
o) dehydrating the sample by performing a graded ethanol series,
   wherein the sample is subsequently incubated in an aqueous solution of 50 %, 75 % and 100 % ethanol at 25 °C,
   and wherein each of the incubation steps is performed for 0.5 to 1 h,
p) incubating the sample in 100 % acetone at 25 °C,
   wherein the sample is incubated for 2 to 3 h,
   and wherein the acetone is changed every 0.5 to 0.75 h,
q1) embedding the sample by performing a low viscosity epoxy resin infiltration method,
   wherein the sample is subsequently incubated in 25 %, 50 % and 75 % Spurr's resin in acetone at 4 °C,
   wherein each of the incubation steps is performed for 8 to 17 h,
      or
q2) embedding the sample by performing a low viscosity epoxy resin infiltration method,
   wherein the sample is subsequently incubated in 12.5 %, 25 %, 37.5 %, 50 %, 62.5 %, 75 % and 87.5 % Epon 812 resin in acetone at 4 °C,
   wherein each of the incubation steps between 12.5 % and 50 % is performed for 4 to 17 h,
   and wherein each of the incubation steps between 62.5 % and 87.5 % is performed for 8 to 17 h,
r1) incubating the sample of step q1) in 100 % Spurr's resin at 4 °C
   wherein the sample is incubated for 2 days
   and wherein the resin is changed every 8 to 17 h, or
r2) incubating the sample of step q2) in 90 % Epon 812 resin in acetone and 100 % Epon 812 resin at 4 °C,
   wherein the sample is incubated for 3 days in 90 % and 2 days in 100%
   and wherein the resin is changed every 8 to 17 h,
s) further incubating the sample of step r1)
   wherein the incubation is performed at 70 °C for 1 to 3 days
      or
   further incubating the sample of step r2)
   wherein the incubation is performed at 60 °C for 1 to 3 days,
   wherein the sample has a size of 2-3 mm.

In another preferred embodiment, the present invention further relates to a method of postprocessing the biological tissue sample obtained in step n) which comprises the following steps:
o) dehydrating the sample by performing a graded ethanol series,
   wherein the sample is subsequently incubated in an aqueous solution of 25 %, 50 %, 75 % and 100 % ethanol at 25 °C,
   and wherein each of the incubation steps is performed for 8 to17 h,
p) incubating the sample in 100 % acetone at 25 °C,
   wherein the sample is incubated for 32 h,
   and wherein the acetone is changed every 8 to 17 h,
q) embedding the sample by performing a low viscosity epoxy resin infiltration method,
   wherein the sample is subsequently incubated in 25 %, 50 % and 75 % Spurr's resin in acetone at 4 °C,
   and wherein each of the incubation steps is performed for 24 h,
r) subsequently incubating the sample in 90 %, 95 % and 100 % Spurr's resin in acetone at 4 °C,
   wherein the sample is incubated for 2 days in 90 %, 3 days in 95 % and 3 days 100%
   and wherein the resin is changed every 8 to 17 h.
s) further incubating the sample of step r)
   wherein the incubation is performed at 70 °C for 1 to 3 days
wherein the sample has a size of 5 mm.

In another preferred embodiment, the present invention further relates to a method of postprocessing the biological tissue sample obtained in step n) which comprises the following steps:
o) dehydrating the sample by performing a graded ethanol series,
   wherein the sample is subsequently incubated in an aqueous solution of 25 %, 50 %, 75 % and 100 % ethanol at 25 °C,
   and wherein each of the incubation steps is performed for 24 h,
p) incubating the sample in 100 % acetone at 25 °C,
   wherein the sample is incubated for 32 h,
   and wherein the acetone is changed every 8 to 17 h,
q) embedding the sample by performing a low viscosity epoxy resin infiltration method,
   wherein the sample is subsequently incubated in 25 %, 50 % and 75 % Spurr's resin in acetone at 4 °C,
   wherein each of the incubation steps is performed for 24 h,
r) incubating the sample in 90 %, 95 % and 100 % Spurr's resin in acetone at 4 °C,
   wherein the sample is incubated for 3 days in 90 %, 5 days in 95 % and 4 days in 100%,
   and wherein the resin is changed every 8 to 17 h,
s) further incubating the sample of step r)
   wherein the incubation is performed at 70 °C for 1 to 3 days
wherein the sample has a size of 10 mm.

In another preferred embodiment, the present invention further relates to a method of postprocessing, particularly of full-volume embedding, the biological tissue sample obtained in step n) which comprises the following steps:
o) dehydrating the sample by performing a graded ethanol series,
   wherein the sample is subsequently incubated in an aqueous solution of 25 %, 50 %, 75 % and 100 % ethanol at 4 °C,
   wherein the first incubation step in the aqueous solution of 25 % ethanol is performed for 12 h and the remaining steps are performed for 24 h,
p) incubating the sample in 100 % acetone at 25 °C,
   wherein the sample is incubated for 3 days,
   and wherein the acetone is changed every 24h,
q) embedding the sample by performing a low viscosity epoxy resin infiltration method,
   wherein the sample is subsequently incubated in 25 %, 50 % and 75 % Spurr's resin in acetone at 4 °C,
   wherein the sample is incubated for 2 days in 25 %, 2 days in 50 % and 3 days in 75 % Spurr's resin,
r) incubating the sample in 90 %, 95 % and 100 % Spurr's resin in acetone at 4 °C,
   wherein the sample is incubated for 2 days in 90 %, 4 days in 95 % and 6 days in 100 % Spurr's resin,
   and wherein the 95 % and 100 % resin is changed every 2 days,
s) further incubating the sample of step r)
   wherein the incubation is performed at 70 °C for 1 to 3 days
wherein the sample has a size of 10 mm.

In a preferred aspect, the present invention relates to a method of staining a biological tissue sample, particularly a human sample, with a sample size of 2 to 3 mm in each dimension (e.g. 2-3 mm in plane (base area) and a thickness of ≤ 2 mm) which comprises the following steps:
a) incubating the sample in 2 % (w/v) Osmium tetroxide (OsO₄) dissolved in 0.15 M sodium cacodylate (CaC) buffer (pH 7.4),
   wherein the incubation is performed at 25 °C for 22 h;
b) washing the sample in 0.15 M CaC buffer (pH 7.4),
   wherein the washing is performed at 4 °C for 2 h,
   and wherein the buffer is changed every 20 min;
c) incubating the sample in 2.5 % (w/v) of potassium ferrocyanide (K₄Fe(CN)₆) dissolved in 0.15 M CaC buffer (pH 7.4),
   wherein the incubation is performed at 4 °C for 22 h;
d) incubating the sample in 2 % OsO₄ (w/v) dissolved in 0.15 M CaC buffer (pH 7.4),
   wherein the incubation is performed at 25 °C for 6 h;
e) washing the sample in 0.15 M CaC buffer (pH 7.4),
   wherein the washing is performed at 25 °C for 0.5 h,
f) washing the sample in purified water,
   wherein the washing is performed at 25 °C for 1 h,
   and wherein the water is changed every 20 min;
g) incubating the sample in 4 % (w/v) 1,2,3-Trihydroxybenzene dissolved in purified water,
   wherein the incubation is performed at 25 °C for 18 h,
   and wherein the 1,2,3-Trihydroxybenzene dissolved in purified water is changed once after 2 h of incubation;
h) washing the sample in purified water,
   wherein the washing is performed at 25 °C for 1 h,
   and wherein the water is changed every 20 min;
i) incubating the sample in 2 % (w/v) OsO₄ dissolved in purified water,
   wherein the incubation is performed at 25 °C for 6 h;
j) washing the sample in purified water,
   wherein the washing is performed at 25 °C for 1 h,
   and wherein the water is changed every 0.5 h;
k) incubating the sample in an aqueous solution of 4 % (w/v) uranyl acetate (UA),
   wherein the incubation is performed at 4 °C for 14 h;
l) further incubating the sample of step k),
   wherein the incubation is performed at 50 °C for 2 h;
   and
m) washing the sample in purified water
   wherein the washing is performed at 25 °C for 1 h,
   and wherein the water is changed every 20 min.

In another preferred aspect, the present invention further relates to a method of post-processing the sample obtained in step n) which comprises the following steps:
n) dehydrating the sample by performing a graded ethanol series,
   wherein the sample is subsequently incubated in an aqueous solution of 20 %, 40 %, 60 %, 80 % ethanol at 4 °C and in an aqueous solution of 100 % ethanol at 25 °C, and wherein each of the incubation steps is performed for 0.5 to 1 h,
o) incubating the sample in 100 % acetone at 25 °C,
   wherein the sample is incubated for 2 to 3 h,
   and wherein the acetone is changed every 0.5 to 0.75 h,
p) embedding the sample by performing a low viscosity epoxy resin infiltration method,
   wherein the sample is subsequently incubated in 12.5 %, 25 %, 37.5 %, 50 %, 62.5 %, 75 %, and 87.5 % Epon 812 resin in acetone at 4 °C,
   wherein each of the incubation steps between 12.5 % and 50 % is performed for 4 to 13 h,
   and wherein each of the incubation steps between 62.5 % and 87.5 % is performed for 8 to 19 h,
q) incubating the sample of step q2) in 95 % Epon 812 resin in acetone and 100 % Epon 812 resin at 4 °C,
   wherein the sample is incubated for 3 days in 95 % and 2 days in 100%
   and wherein the resin is changed every 8 to 19 h,
r) further incubating the sample in freshly prepared 100 % Epon 812 resin
   wherein the incubation is performed at 60 °C for 3 days,
wherein the sample has a size of 2 to 3 mm in each dimension (e.g. 2-3 mm in plane (base area) and a thickness of ≤ 2 mm) and is particularly a human sample.

In another preferred aspect, the present invention relates to a method of staining a biological tissue sample, particularly a sample derived from cerebellum and/or large human cortical tissue which comprises the following steps:
Aa) incubating the sample in 2 % (w/v) Osmium tetroxide (OsO₄) dissolved in 0.15 M sodium cacodylate (CaC) buffer (pH 7.4),
   wherein the incubation is performed at 4 °C for 72 h;
Ab) washing the sample in 0.15 M CaC buffer (pH 7.4),
   wherein the washing is performed at 4 °C for 96 h,
   and wherein the buffer is changed every 4 h;
Ac) incubating the sample in 2.5 % (w/v) of potassium ferrocyanide (K₄Fe(CN)₆) dissolved in 0.15 M CaC buffer (pH 7.4),
   wherein the incubation is performed at 4 °C for 72 h;
   and wherein the FeCN is changed every 24 h;
Ad) washing the sample in 0.15 M CaC buffer (pH 7.4) or 0.15 M KCl,
   wherein the washing is performed at 25 °C for 48 h,
   and wherein the buffer is changed every 4 h;
Ae) incubating the sample in 4 % (w/v) 1,2,3-Trihydroxybenzene dissolved in purified water,
   wherein the incubation is performed at 25 °C for 24 h;
Af) repeating step Ad);
Ag) incubating the sample in 2 % (w/v) OsO₄ dissolved in purified water or in 2 % (w/v) OsO₄ dissolved in 0.15 M CaC buffer (pH 7.4),
   wherein the incubation is performed at 25 °C for 24 h;
Ah) washing the sample in 0.15 M KCl or 0.15 M NaCl,
   wherein the washing is performed at 25 °C for 24 h,
   and wherein the KCl or NaCl is changed every 4 h;
Ai) incubating the sample in 4 % (w/v) uranyl acetate (UA) in 0.15 M KCl or 0.15 M NaCl,
   wherein the incubation is performed at 4 °C for 48 h;
Aj) further incubating the sample of step Ai),
   wherein the incubation is performed at 50 °C for 5 h;
   and
Ak) repeating step Ah).

In another preferred aspect, the present invention further relates to a method of postprocessing the biological tissue sample obtained in step Ak) which comprises the following steps:
Al) dehydrating the sample by performing a graded ethanol series,
   wherein the sample is subsequently incubated in an aqueous solution of 25 %, 50 %, 75 % and 100 % ethanol at 25 °C,
   and wherein each of the incubation steps is performed for 8 to 24 h,
Am) incubating the sample in 100 % acetone at 25 °C,
   wherein the sample is incubated for 32 to 48 h,
   and wherein the acetone is changed every 8 to 12 h,
An) embedding the sample by performing a low viscosity epoxy resin infiltration method,
   wherein the sample is subsequently incubated in 25 %, 50 %, 75 %, 90 %, 95 % and 100 % Spurr's resin in acetone at 4 °C,
   wherein each of the incubation steps is performed for 24 to 36 h,
Ao) incubating the sample of step q1) in 100 % Spurr's resin at 4 °C
   wherein the sample is incubated for 3 to 4 days
   and wherein the resin is changed every 8 to 17 h
   and
Ap) further incubating the sample of step Ao)
   wherein the incubation is performed at 70 °C for 1 to 3 days.

In the following, the invention is further illustrated in non-limiting examples.

### Examples

### Example 1 - General Methods

### Animal Experiments

All experimental procedures were approved by the local animal care and use committee and were in accordance with the laws of animal experimentation issued by the German federal government.

Adult C57BL6/J mice (male/female, P30-P90) were treated with analgesics (0.1 mg/kg Buprenorphin (CP-Pharma) and 100 mg/kg Metamizol (WDT)) 0.5 h before isoflurane anesthesia (Harvard Apparatus, 5% in O₂ for initialization, 2-3% for maintenance, O₂ flow rate 1 l/min). Following anesthesia, the animals were transcardially perfused (Harvard Apparatus, flow rate 10 ml/min) using 15 ml sodium cacodylate buffer (0.15 M, pH 7.4, Sigma-Aldrich) followed by 30 ml fixative containing 2.5% paraformaldehyde (Sigma-Aldrich), 1.25% glutaraldehyde (Serva), and 2 mM calcium chloride (Sigma-Aldrich) in 0.08 M sodium cacodylate buffer (osmolarity about 700-800 mmol/kg, pH 7.4). The duration between start of perfusion and incision of diaphragm was less than 30 seconds. After perfusion animals were decapitated, the skull was opened with care to avoid mechanical damage to the brain, and the brain was post-fixed in situ for 12 to 96 h at 4 °C before extraction from the skull.

For 2 mm samples, the brain was cut into 2 mm thick coronal sections in 0.15 M cacodylate buffer using a vibratome (Leica VT1200). Then, a 2 mm diameter biopsy punch (KAI Medical, Honolulu, USA) was used to extract samples from dorsal cortical, ventral cortical and subcortical regions (Fig. 3j). The samples were then stored in 0.15 M cacodylate buffer at 4 °C for 8 to 24 h before staining.

For hemisphere samples, brains were cut with a razor blade (Wilkinson) along the midline. The hemispheres were stored in 0.15 M cacodylate buffer at 4 °C for 24 h before staining.

### Human Samples

A human brain tissue sample (human individual H6, same as in (NPL40) was collected during a neurosurgical procedure that was indicated for medical reasons and independently from this research project at the Department of Neurosurgery at the Klinikum Rechts der Isar of the Technical University of Munich. The sample was obtained from access tissue (presumably healthy brain parenchyma that had to be removed as part of the procedure and would have been discarded otherwise) before removal of the respective target lesion, as approved by the Ethics Committee of the Technical University of Munich School of Medicine (Ethikvotum 184/16S and 273/21 S-EB). All patients had given their written informed consent.

The human "H6" sample was obtained from inferior frontal gyrus from a 69-year-old female patient during surgical removal of frontal mass lesion (final diagnosis: glioblastoma multiforme). Following surgical removal, tissue was directly collected in fix solution kept at 4°C. The tissue was immediately sliced into 2 mm thin slices in cold fixative using a vibratome. Slices were stored at 4°C overnight. Samples sized 2x3 mm² were then cut from the slices by razor blades.

The 2x3x2 mm³ human samples were stained based on the 2mm protocol (Table 1) with minor modifications (Table 2). In brief, after 4 times of 30 min 0.15 M CaC rinsing (4 °C), the following steps were sequentially applied: 22 h 2 % OsO₄ in 0.15 M CaC (pH 7.4) at RT, four times of 30 min 0.15 M CaC rinsing at RT, 22 h 2.5 % FeCN in 0.15 M CaC (pH 7.4) at RT, 6 h 2 % OsO4 in 0.15 M CaC (pH 7.4) at RT, 30 min 0.15 M CaC, three times 20 min H₂O rinsing at RT, 18 h 2% pyrogallol in H₂O at RT, three times of 20 min H₂O rinsing, 6 h 2 % OsO₄ in H₂O, three times 20 min H₂O rinsing, 14 h 4 % UA at 4 °C (afterwards switch temperature to 50°C for 2 h), three times of 20 min H₂O. Afterwards, the samples went through a graded ethanol dehydration step: 30 min 20% ethanol at 4 °C, 30 min 40% ethanol at 4 °C, 30 min 60 % ethanol at 4 °C, 30 min 80 % ethanol at 4 °C, 45 min 100 % ethanol at RT. For the resin infiltration, after three times of 45 min pure acetone rinsing, the samples were processed through graded Epon resin (For 10 ml resin: 5.9 g Epon medium, 2.25 g DDSA, 3.7 g MNA, 205 µl DMP) in acetone, all at 4 °C: 4 h 12.5 %, 13 h 25 % (overnight), 4 h 37.5 %, 4 h 50 %, 19 h 62.5 % (overnight), 8 h 75 %, 19 h 87.5 % (overnight), 8 h 95 %, 19 h 95 % (1^{st} overnight for 95%), 8 h 95 %, 19 h 95 % (2^{nd} overnight for 95 %), 8 h 95 %, 19 h 95 % (3rd overnight for 95%), 8 h 100 %, 19 h 100 % (1^{st} overnight for 100%), 8 h 100 %, 19 h 100 % (2^{nd} overnight for 100%); afterwards, the samples were embedded in freshly prepared Epon resin and cured at 60 °C for 3 days.

### Staining Experiments

All staining and resin infiltration steps for 2-3 mm samples were carried out in 2 ml Eppendorf tubes and for hemisphere or whole brain samples in 50 ml glass tubes at room temperature unless specified otherwise. For steps involving photosensitive chemicals (FeCN, TCH, Pg, UA or Ld), the tubes were covered with aluminum foil.

All chemicals used in the staining pipeline are listed in Table 3; all experiments reported in the figures are detailed in Table 4.

For simplicity, the following terms were used to refer to the recurring staining steps in different experiments:

| | |
|---|---|
| CaC | sodium cacodylate buffer rinsing, 0.15 M pH 7.4 |
| H₂O | water (Milli-Q^{®}) rinsing |
| 1^{st} Os | the first OsO₄ incubation step, 2% OsO4 in 0.15 M CaC pH 7.4 |
| FeCN | the FeCN incubation step, 2.5% in 0.15 M CaC pH 7.4 |
| 2^{nd} Os | the OsO4 incubation step after FeCN, 2% OsO4 in 0.15 M CaC pH 7.4 |
| Pg | the pyrogallol incubation step, 4% in H₂O |
| TCH | the thiocarbohydrazide incubation step, 1% in H₂O |
| 3^{rd} Os | the OsO4 incubation step after Pg, 2% in water |
| UA | the uranyl acetate incubation step, UA (2% or 4%) dissolved in water |
| Ld | the lead aspartate incubation step, 0.66% lead nitrate in 0.03 M aspartate acid, pH 5.0 |

### Staining of 2 mm samples with 1 mm protocol

The 1 mm staining protocol (NPL11) with addition of 2^{nd} Os step) was applied to 2 mm samples directly. The samples were stained with the following steps: 1^{st} Os 1.5 h → FeCN 1.5 h → 2^{nd} Os 1 h → CaC 0.5 h → H₂O 0.5 h → TCH 1.5 h → H₂O 0.5 h (two times) → 3^{rd} Os 1.5 h → H2O 0.5 h(two times) → 2% UA (17 h at 4 °C, 50 h at 50 °C) → H₂O 0.5 h (two times) → Ld 2 h at 50 °C → H₂O 0.5 h (two times). Afterwards, the samples were incubated in graded ethanol series from 50% (4 °C), 75% (4 °C) to 100% (each step 45 min). Then the samples were incubated in pure acetone for three times, each time 45 min. Afterwards, they were incubated in 50% Spurr's resin (Sigma-Aldrich, in the ratio of 0.95 g ERL 4221, 5.9 g DER 736, 0.1 g NSA, 113 µl DMAE) in acetone for 6 h. Then the samples were left overnight with the cap of the Eppendorf tubes open to allow evaporation of acetone.

Afterwards, the samples were transferred into pure Spurr's resin for 6 h before embedding and curing at 70 °C for 1 to 3 days. After resin curing, the samples were first imaged in µCT for staining homogeneity. Then they were trimmed to expose the sample center, the sample surface was smoothed and imaged in high vacuum SEM and EDS.

### Step-by-step µCT diagnosis of the main staining steps of the 1 mm protocol on 2 mm samples

The 1 mm staining protocol (NPL11) with addition of 2^{nd} Os step) was applied to a batch of 2 mm samples as described above: 1^{st} Os 1.5 h → FeCN 1.5 h → 2^{nd} Os 1 h → CaC 0.5 h → H₂O 0.5 h → TCH 1.5 h → H₂O 0.5 h (two times) → 3^{rd} Os 1.5 h → H₂O 0.5 h (two times) → 2% UA (17 h at 4 °C, 50 h at 50 °C) → H₂O 0.5 h (two times) → Ld 2 h at 50 °C → H₂O 0.5 h (two times). After each main step (1^{st} Os, FeCN, 2^{nd} Os, 3^{rd} Os, UA), 2 samples were taken out from the staining pipeline, and rinsed with either CaC or H₂O depending on the solvent condition of the corresponding staining step (rinsing solution changed every 8/17 h). When the rinsing was done for all samples from different conditions, samples were embedded in 2% agarose in water in the same Eppendorf tube at different tube depth and stored in 4 °C for the agarose to cure. Then the tube containing all the samples were imaged in µCT to investigate staining gradients.

### Extending FeCN incubation time for 2 mm samples

2 mm samples were stained as follows: 1^{st} Os 3 h → FeCN. During FeCN incubation, 2 samples were taken out at each of the following time points: 1.5 h, 3 h, 7 h and 17 h. Samples were then rinsed in CaC for 1 h and embedded in 2% agarose as described above. After agarose curing, they were imaged in µCT to investigate staining gradients possibly related to FeCN incubation.

### Interaction between OsO4 incubation duration and FeCN incubation

2 mm samples were stained with the following two conditions: (1) 1st Os **3h** → FeCN 17 h; or (2) 1st Os **24 h** → FeCN 17 h. Then they were rinsed sequentially by CaC (for 0.5 h) and H₂O (two times, each time 0.5 h); they were then dehydrated and embedded according to the 2 mm Spurr's resin protocol. After resin embedding, they were trimmed to expose the center, their surface was smoothed, and they were imaged in low-vacuum SEM to investigate membrane contrast.

### Extending TCH incubation for 2 mm samples

Three groups of 2 mm samples were stained, each batch was incubated with a different TCH incubation length, using the following protocol: 1^{st} Os 3 h → FeCN 17 h → 2^{nd} Os 3 h → CaC 0.5 h → H₂O 0.5 h (two times) → TCH for 1.5 h, or 3 h, or 5 h → H₂O 0.5 h (two times) → 3^{rd} Os 3 h. Afterwards, they were rinsed and embedded in 2% agarose for imaging in µCT.

### Replacing TCH by pyrogallol

Three groups of 1 mm samples were stained, each group differed in the TCH-related step, using the following protocol: 1^{st} Os 1.5 h → FeCN 1.5 h → 2^{nd} Os 1 h → CaC 0.5 h → H₂O 0.5 h → TCH 1.5 h, or Pg 1.5 h, or H₂O 1.5 h → H₂O 0.5 h (two times) → 3^{rd} Os 1.5 h → H₂O 0.5 h (two times) → 2% UA (17 h at 4 °C, 50 h at 50 °C) + H₂O 0.5 h (two times) → Ld 2 h at 50 °C → H₂O 0.5 h (two times). Afterwards, they were dehydrated, and resin embedded according to (NPL11). After resin curing, the samples were trimmed to expose the center, their surface was smoothed, and they were imaged in high vacuum SEM and EDS. For EDS measurement, point measurement in the neuropile of the sample center was selected.

### Comparison of pyrogallol incubation in H₂O vs. CaC

Two groups of 2 mm samples (the groups differ in the Pg incubation and the water steps around Pg) were stained with the following sequential incubation steps: 1^{st} Os 24 h → FeCN 17 h → 2^{nd} Os 3 h → CaC 0.5 h → H₂O 0.5 h (twice) → Pg in water 17 h → H₂O 0.5 h (twice) or CaC 0.5 h (twice) → Pg in CaC 17 h → CaC 0.5 h (twice) → 3^{rd} Os 6 h → H₂O 0.5 h (twice) → 4% UA (17 h at 4 °C, 2 h at 50 °C) → H₂O 0.5 h (twice). Samples were then dehydrated and embedded in Spurr's resin as described above for 2 mm samples. After resin curing, they were trimmed to expose the center, their surface was smoothed, and they were imaged in high-vacuum SEM.

### Long-duration OsO4 incubation on 2 mm samples

2 mm samples were stained with 2% OsO₄ in CaC for either 3 days or 6 days. After rinsing with 0.15 M CaC for 0.5 h and two times water (each time 0.5 h), the samples were dehydrated and embedded according to the 2 mm Spurr's resin protocol. The samples were then trimmed to expose the center, their surface was smoothed, and they were imaged in low vacuum SEM for determining ultrastructural preservation.

### Extended Pg and 3^{rd} Os incubation for 2 mm samples

Three groups of 2 mm samples (groups differ in the incubation duration of Pg and 3^{rd} Os steps) were stained using the following protocol: 1^{st} Os 3 h → FeCN 17 h → 2^{nd} Os 3 h → CaC 0.5 h → H₂O 0.5 h (twice) → Pg in water (for 6 or 17 h) → H₂O 0.5 h (twice) → 3^{rd} Os (for 3 or 6 h) → H₂O 0.5 h (twice) → 2% UA (17 h at 4 °C, 2 h at 50 °C) → H₂O 0.5 h (twice). The combination of Pg and 3^{rd} Os incubation time were as follows: (1) Pg 6 h - 3^{rd} Os 3 h; (2) Pg 17 h-3^{rd} Os 3 h; (3) Pg 17 h - 3^{rd} Os 6 h. After staining, the samples were dehydrated and embedded in Spurr's resin as described above for 2 mm samples. After resin curing, they were trimmed to expose the center, their surface was smoothed, and they were imaged in high-vacuum SEM.

### UA and Ld steps for 2mm samples

Four groups of 2 mm samples (groups differ in incubation of UA and Ld steps) were stained using the following protocol: 1^{st} Os 3 h → FeCN 17 h → 2^{nd} Os 3 h → CaC 0.5 h → H₂O 0.5 h (twice) → Pg in water 17 h) → H₂O 0.5 h (twice) → 3^{rd} Os 6 h → H₂O 0.5 h (twice) → 2% or 4% UA (17 h at 4 °C, 2 h at 50 °C) → H₂O 0.5 h (twice) → Ld 50°C, 4 h or 24 h → H₂O 0.5 h (twice). The combination of UA and Ld incubation were as follows: (1) 2% UA-No Ld; (2) 2% UA-Ld 4 h; (3) 4% UA-No Ld; (4) 4% UA-Ld 24 h. After staining, the samples were dehydrated and embedded in Spurr's resin as described above for 2 mm samples. After resin curing, samples were imaged in µCT and then trimmed to expose the center, their surface was smoothed and imaged in high-vacuum SEM.

### Temperature of Os incubation step

Two groups of 2 mm samples were stained according to the following steps: (1) Os 4 °C 7 days; or (2) Os 4°C 7 days, RT 1 day. After staining, the samples were dehydrated and embedded in Spurr's resin as described above for 2 mm samples. After resin curing, they were trimmed to expose the center, their surface was smoothed, and they were then imaged in low-vacuum SEM.

### Os incubation at 4 °C followed by FeCN incubation

Four groups of samples were stained according to the following steps: (1) Os 4°C 6 days, RT 1day → FeCN RT 1 day; (2) Os 4 °C 6 days, RT 1 day → FeCN 4 °C 1 day; (3) Os 4 °C 7 days → FeCN RT 1 day; (4) Os 4 °C 7 days → FeCN 4 °C 1 day. After staining, the samples were dehydrated and embedded in Spurr's resin as described above for 2 mm samples.

After resin curing, they were trimmed to expose the center, their surface was smoothed and they were imaged by low-vacuum SEM.

### Diffusion of Os at 4°C in hemisphere samples

A hemisphere was incubated in OsO₄ at 4 °C. At different time points (17 h, 24 h, 40 h), it was taken out of the fridge to perform a fast µCT scan (usually about 15 to 20 min total) and then returned to the fridge at 4 °C. µCT images were analyzed using Zeiss TXM3DViewer software, in which the depth of OsO₄ incubation was measured on sagittal slices.

### Effect of CaC steps on staining gradient in hemispheres

Two groups of hemispheres were stained with the following two conditions: (1) Os 48 h → FeCN 48 h; or (2) Os 48 h → CaC 48 h → FeCN 48 h. After staining, the hemispheres were briefly rinsed in CaC and cut into coronal sections of about 2 mm thickness with a razor blade. Afterwards, the coronal sections were dehydrated and embedded in Spurr's resin as described above for 2 mm samples. After resin curing, they were imaged in µCT, and then trimmed flat to expose the top surface, smoothed and imaged by low-vacuum SEM.

### Effect of CaC steps on velocity of FeCN diffusion

Two groups of 2 mm samples were stained with the following two conditions: (1) Os 24 h → FeCN 1.5 h; or (2) Os 24 h → CaC 24 h → FeCN 1.5 h. After staining, the samples were dehydrated and embedded in Spurr's resin as described above for 2 mm samples. After resin curing, they were imaged in µCT, and then trimmed flat to expose the top surface, smoothed and imaged by low-vacuum SEM and EDS. For EDS measurement, the present inventors selected point measurement in the neuropile of the sample center.

### Interaction of Pg incubation with Os-FeCN gradient (H3)

A hemisphere sample (H3) was stained according to the following steps: 1^{st} Os 4 °C 96 h, RT 24 h → CaC 4 °C 48 h → FeCN 4 °C 48 h → 2^{nd} Os 72 h → CaC 24 h → H₂O 29 h → Pg 24 h → H₂O 48 h → 3^{rd} Os 48 h → 4% UA 4 °C 48 h, 50 °C 5 h → H₂O 42 h. For all CaC and H₂O steps, the corresponding solutions were changed every 4 h/overnight (i.e. once in the morning, noon and afternoon). During staining, the hemispheres were imaged in µCT at the main staining steps (after FeCN, after 2^{nd} Os, after Pg). After staining, the hemisphere was cut into about 2 mm coronal sections with a razor blade. Afterwards, the coronal sections were dehydrated and embedded in Spurr's resin as described above for 2 mm samples. After resin curing, they were trimmed flat to expose the top surface, smoothed and imaged by high-vacuum SEM.

### Interaction of Pg incubation with Os-FeCN gradient and CaC (H1,2)

Two hemisphere samples (H1,2) were stained according to the following steps: 1^{st} Os 4 °C 63 h, RT 24 h → CaC 4 °C 24 h → FeCN 4 °C 48 h → CaC 24 h → 2^{nd} Os 32 h → CaC 17 h → H₂O 9 h → Pg 48 h → H₂O 40 h → 3^{rd} Os 48 h → 4% UA 4 °C 48 h, 50 °C 5 h → H₂O 48 h. For all CaC and H₂O steps, the corresponding solutions were changed every 4 h/overnight (i.e. once in the morning, noon and afternoon). During staining, the hemispheres were imaged in µCT at the main staining steps (after FeCN, after 2^{nd} Os, after Pg). After staining, the hemisphere was cut into about 2 mm coronal sections with a razor blade. Afterwards, the coronal sections were dehydrated and embedded in Spurr's resin as described above for 2 mm samples. After resin curing, they were trimmed flat to expose the top surface, smoothed and imaged in high-vacuum SEM.

### Effect of CaC incubation at RT for 2 days on Os-FeCN gradient (H4,5,6)

Three hemisphere samples (H4,5,6) were stained according to the following steps: 1^{st} Os 4 °C 72 h, RT 24 h → CaC 48 h → FeCN 4 °C 48 h → CaC 24 h → 2^{nd} Os 48 h → CaC 24 h → H₂O 24 h → Pg 24 h → H₂O 24 h → 3^{rd} Os 24 h → 4% UA 4 °C 48 h, 50 °C 5 h → H₂O 48 h. For all CaC and H₂O steps, the corresponding solutions were changed every 4 h/overnight (i.e. once in the morning, noon and afternoon). During staining, the hemispheres were imaged in µCT at the main staining steps (after FeCN, after 2^{nd} Os, after Pg). After staining, H5 was cut into about 2 mm coronal sections with a razor blade. Afterwards, the coronal sections were dehydrated and embedded in Spurr's resin as described above for 2 mm samples. H4, 6 were embedded in Spurr's resin. After resin curing, H5 was trimmed flat to expose the top surface, smoothed and imaged by high-vacuum SEM. H4,6 were trimmed to expose the center, surface smoothed and imaged by high-vacuum SEM.

### Effect of CaC incubation at 4°C for 4 days on Os-FeCN gradient (H13)

A hemisphere sample (H13) was stained according to the following steps: 1^{st} Os 4 °C 68 h → CaC 4 °C 96 h → FeCN 4 °C 72 h → CaC 48 h → 2^{nd} Os 48 h → CaC 24 h → H₂O 24 h → Pg 24 h → H₂O 24 h → 3^{rd} Os 41 h → 4% UA 4 °C 48 h, 50 °C 12 h → H₂O 24 h. For all CaC and H₂O steps, the corresponding solutions were changed every 4 h/overnight (i.e. once in the morning, noon and afternoon). During staining, the hemispheres were imaged in µCT at the main staining steps (after 2^{nd} Os, after Pg). After staining, the hemisphere was embedded according to Spurr's resin embedding for hemispheres. After resin curing, it was trimmed to expose the center, surface smoothed and imaged by high-vacuum SEM.

### Whole brain staining (W1)

A mouse whole brain sample (W1) was stained according to the following steps: 1^{st} Os 4 °C 96 h → CaC 4 °C 168 h → FeCN 4 °C 72 h → CaC 4 °C 48 h, RT 48 h → 2^{nd} Os 48 h → CaC 72 h → H₂O 48 h → Pg 24 h → H₂O 48 h → 3^{rd} Os 96 h → 4% UA 4 °C 48 h, 50 °C 5.5 h →H₂O 24 h. For all CaC and H₂O steps, the corresponding solutions were changed every 4 h/overnight (i.e. once in the morning, noon and afternoon). During staining, the brain was imaged in µCT at the main staining steps (during 1^{st} Os, after 2^{nd} Os, after Pg). After staining, the brain was cut into ~2 mm thick coronal sections. Then the sections were embedded according to Spurr's resin embedding for 2 mm samples. After resin curing, the sections were trimmed flat to expose the surface, smoothed and checked by high-vacuum SEM.

### Effect of 2^{nd} Os step on sample stability in H₂O

Two groups of 2 mm samples (the groups differed in whether they were exposed to a 2^{nd} Os step) were incubated in the following conditions: (1) 1^{st} Os 24 h → CaC 24 h → FeCN 24 h → 2^{nd} Os 3 h → CaC 0.5 h → H₂O (two times 0.5 h) + H₂O; or (2) 1^{st} Os 24 h → CaC 24 h → FeCN 24 h → CaC 0.5 h → H₂O (two times 0.5 h) → H₂O. Afterwards, the samples were kept in H₂O, and imaged in the light microscope at different time points (from 2 h to 100 h) to investigate macroscopic sample integrity.

### Pg-Os(vi) interaction

Mouse hemisphere samples were stained according to one of the following steps: (1). Os 4°C 72 → CaC 4°C 96 → FeCN 4°C 72 → CaC 48 → Os 48 → CaC 24 → CaC 24 → Pg 24 (see **Table 4, Exp. 28,** Fig. 10a**, b);** (2). Os 4°C 72 → CaC 4°C 96 → FeCN 4°C 72 → CaC 48 → CaC 48 → CaC 24 → CaC 24 → Pg 24 (see **Table 4, Exp. 29,** **Fig. 10a**, c); (3). Os 4°C 72 → CaC 4°C 96 → FeCN 4°C 72 → CaC 48 → Os 48 → KCl 24 → KCl 24 → Pg 24 (see **Table 4, Exp. 30,** **Fig. 10a****, d);** (4). Os 4°C 72 → CaC 4°C 96 → FeCN 4°C 72 → CaC 48 → Os 48 → KCl 24, pH7 → KCl 24, pH7 → KCl pH1 → KCl 24, pH7 → Pg 24 (see **Table 4, Exp. 31,** **Fig. 10a****, e).** After Pg, the samples were scanned by µCT with the parameters described in the µCT method part below.

Afterwards, the hemisphere sample from condition 2, i.e., "(2)" above, was cut into ~2 mm coronal chunks for further processing. The coronal sections were rinsed by CaC for 24 hours and then stained with either Os in H₂O (see **Table 4, Exp. 32** and **Fig. 10f****)** or Os in CaC (see **Table 4, Exp. 33** and **Fig. 10g****)** for 24 hours. Afterwards, they were embedded according to the 2 mm Spurr's resin embedding protocol below. After the resin was cured, the samples were cut into halves and checked with low-vacuum SEM for membrane contrast.

### Dehydration of 2 mm samples

After the last water rinsing step in the staining protocol, 2 mm samples were exposed to graded dehydration series in ethanol (50% 4 °C, 75% 4 °C and 100% RT; each step 45 min) and then three rounds of acetone incubation (each 45 min).

### Dehydration of hemispheres

After the last water rinsing step in the staining protocol, hemisphere samples were exposed to graded dehydration series in ethanol (25% 4 °C, 50% 4 °C, 75% 4 °C and 100% RT; each step 8 h/overnight) and then three rounds of acetone incubation (each time 8 h/overnight).

### Dehydration of whole brain samples

After the last water rinsing step in the staining protocol, whole brain samples (e.g., W3) for subsequent full-volume embedding were exposed to graded dehydration series in ethanol (25% at 4 °C for 12 h, 50%, 75% and 100%; each step at 4 °C and for 24 h) and then three rounds of acetone incubation (each time for 24 h).

### Infiltration of Spurr's resin and embedding of 2 mm samples

After dehydration, a graded incubation of Spurr's resin (0.95 g ERL 4221, 5.9 g DER 736, 0.1 g NSA, 113 ul DMAE) was applied at 25%, 50%, 75% in acetone (each step 8 h or overnight). Afterwards, the samples were incubated for 4 rounds in 100% Spurr's resin (each time 8 h or overnight). Finally, they were embedded in freshly prepared Spurr's resin and cured at 70 °C for 1 to 3 days. All steps were performed at 4 °C. For each resin exchange, the tubes were taken out from fridge 20 to 30 min before to be warmed to RT.

### Infiltration of Spurr's resin and embedding of hemisphere samples

After dehydration, a graded incubation of Spurr's resin (0.95 g ERL 4221, 5.9 g DER 736, 0.1 g NSA, 113 ul DMAE) was applied at 25%, 50%, 75% in acetone (each step 24 h).

Afterwards, the samples were incubated for 2 days in 90% resin, for 3 days in 95% resin and for 3 days 100% resin, followed by 4 rounds of 100% Spurr's resin incubation (each time 8 h or overnight). Finally, they were embedded in freshly prepared Spurr's resin and cured at 70 °C for 1 to 3 days. All resin steps were performed at 4 °C. For each resin exchange, the tubes were taken out from fridge 20 to 30 min before to be warmed to RT.

### Infiltration of Spurr's resin and full-volume embedding of whole brain samples

After dehydration, a graded incubation of Spurr's resin (0.95 g ERL 4221, 5.9 g DER 736, 0.1 g NSA, 113 ul DMAE) was applied at 25%, 50%, 75% in acetone (25 % and 50 % for 2 days and 75 % for 3 days). Afterwards, the whole brain samples (e.g., W3) were incubated for 2 days in 90% resin, for 4 days in 95% resin and for 6 days 100% resin. The solutions with 95 % and 100 % resin were changed every 2 days. Finally, they were embedded in freshly prepared Spurr's resin and cured at 70 °C for 3 days. All resin steps were performed at 4 °C. For each resin exchange, the tubes were taken out from fridge 20 to 30 min before to be warmed to RT.

### Measurement of viscosity of Epon resin

10 ml Epon resin (Sigma-Aldrich, with a ratio of 5.9 g Epon medium, 2.25 g DDSA, 3.7 g MNA, and 205 ul DMP) was prepared and stored in 15 ml Falcon tubes at either 4 °C or RT. At different time points, videos were acquired of the resin moving in the tube after been turned up-side down. The distance of movement of the resin in the tube was measured using the ticks (ml) printed on the Falcon tubes. The speed of the resin movement was used as a measurement of the resin's viscosity.

### Infiltration with Epon resin and embedding of 2 mm samples

After dehydration, samples were incubated in pure acetone for 3 times, each time 45 min. Then a graded incubation of Epon resin (5.9 g Epon medium, 2.25 g DDSA, 3.7 g MNA, 205 ul DMP) was applied at 12.5%, 25%, 37.5%, 50%, 62.5%, 75% to 87.5% in acetone (each step 4 h or overnight). Afterwards, the samples were incubated for 4 to 6 rounds in 95% Epon resin (each time 8 h or overnight), and then for 4 rounds in 100% Epon resin (each time 8 h or overnight) before embedding for curing at 60 °C for 1 to 3 days. All resin steps were carried out at 4 °C. For each resin exchange, the tubes were taken out from fridge 20 to 30 min before for warming to RT.

### Light-microscopic imaging of sample surface to assess resin gradient

Resin embedded samples (2-3 mm/hemispheres) were trimmed to expose the center and surface smoothed with a diamond knife. Light-microscopic images of the sample surface were acquired with a slight tilt of the imaging plane, such that the otherwise black sample surface appeared as silver-colored.

### µCT volumetric imaging of samples without resin embedding

To allow imaging in µCT without the need for resin embedding, 2 mm samples were embedded in 2% agarose (Sigma-Aldrich) in 0.15 M CaC or in water (depending on the last staining step that the sample was exposed to) in 2 ml Eppendorf tubes instead of performing resin infiltration. They were imaged in µCT (Zeiss Xradia 520 Versa) using a voltage of 80 kV at voxel size of 3 to 6 µm. For µCT imaging of hemispheres, the samples were kept in the 50 ml glass tubes. Then, the glass tubes were put into a 140 ml syringe to be kept stable during µCT imaging (using voxel size of 10 to 60 µm).

### Low-vacuum SEM imaging of incompletely stained samples

To investigate samples at intermediate staining steps without complete staining (and therefore often reduced signal and conductivity), these were resin embedded. Then they were trimmed with a diamond head trimmer (Leica EM TRIM2) to expose the center to the block faces of samples; the block face was smoothed with a diamond knife ultra-microtome (Leica EM UC7); and then imaged in a scanning electron microscope with a field-emission cathode and low vacuum mode (Quanta FEG 450, FEI Company). The chamber pressure was set to 30 Pa. For the incident electron beam, a spot size of 3.5 and acceleration energy of 5 keV were used for imaging at a pixel dwell time of 8-20 µs and a pixel size of 5.62 nm² in-plane (corresponding electron dose: 112-280 e⁻/nm² without considering the electron loss caused by the skirting effect of low-vacuum) or 11.24 nm² in-plane (corresponding electron dose: 28-70 e⁻/nm², without considering the electron loss caused by the skirting effect of low-vacuum), at working distance of about 5 mm using the back scattered electron CBS detector.

### High vacuum SEM imaging of completely stained samples

For fully stained and resin embedded samples (which were therefore expected to show sufficient conductivity), trimming and smoothing was similar to the previous section, but SEM imaging was performed in high-vacuum mode (5*10⁻⁴ Pa). For the incident electron beam, a spot size of 3.5 and acceleration energy of 2.8 keV was used for imaging at a pixel dwell time of 6-8 µs and a pixel size of 11.24 nm² in-plane (corresponding electron dose: 16-21 e⁻/nm²) or 5.62 nm² (corresponding electron dose: 64-84 e⁻/nm²), at a working distance of about 5 mm using the back scattered electron CBS detector.

### EDS analysis

Resin embedded samples were trimmed to expose the center as a block face (Leica EM TRIM2), smoothed (Leica EM UC7), and coated with a 10 nm gold layer (Leica EM ACE600); afterwards, they were imaged in a scanning electron microscope (Amray 1830) equipped with an Si(Li) EDS detector. An incident electron beam with energy of 18 keV was used at working distance of 15 to 20 mm and a takeoff angle of 20.4 degree. The spectrum collection time was 20 to 90 s.

### UV-vis spectrum acquisition of Os(vi) solution

1% potassium osmate(vi) in 0.15 M sodium cacodylate buffer by adding 0.05 g potassium osmate(vi) powder (Sigma-Aldrich) into 5 ml cacodylate buffer were prepared. The solution was diluted 100 times and put into a glass cuvette to avoid spectrum signal clipping. The measurement was performed using the wavelength range 190-11,400 nm on a UV-vis spectrometer (Jasco V-670). Measurements on the same solution were made at time points 2 min, 2 h and 24 h.

### Raman spectrum measurement of Os vi + FeCN solutions

The present inventors measured the following chemicals without dilution in a custom built Raman spectrometer (Chemistry department of Goethe University Frankfurt) with a range of 0-4,400 cm⁻¹ wavelength: (1) 0.15 M sodium cacodylate buffer; (2) 1% potassium osmate(vi) in 0.15 M cacodylate buffer; (3) 0.3% potassium osmate(vi) and 1.3% potassium ferrocyanide(ii) (Sigma Aldrich) in 0.15 M cacodylate buffer; (4) 2.5% potassium ferrocyanide(ii) in 0.15 M cacodylate buffer; (5) 1.9% potassium ferricyanide(iii) (Sigma-Aldrich) in 0.15 M cacodylate buffer; (6) Staining solution of 2 mm samples in 2 ml Eppendorf tubes, after 24 h of 2% OsO4 (Serva) in 0.15 M cacodylate buffer, 1 h 0.15 M cacodylate buffer wash, and 17 h of 2.5% potassium ferrocyanide(ii) in 0.15 M cacodylate buffer.

### Membrane contrast quantification

Membrane contrast was determined as the pixel intensity differences between membrane and non-membrane regions in the EM images. For this, 500x500 pixel regions from the raw EM images (Fig. 1c-e) were obtained and brightness-normalized (1-99 percentile, Matlab, imadjust). Then, one randomly selected 500x500 sub-image was used to train a random forest classifier (Fiji, trainable Weka segmentation (NPL39) to automatically identify membrane vs. non-membrane voxels. Then this classifier was applied to all sub-images, and membrane contrast was calculated as difference between median membrane and non-membrane voxel intensities. To determine the difference between the measured conditions, a two-way ANOVA was performed in GraphPad Prism and Tukey's multiple comparisons across staining protocols and sampling positions was computed. Then, to determine the significance of the observed differences, the present inventors performed one-sided t-test for comparing the membrane contrast between the Hua protocol (NPL11) and the new protocol (Os3 and Os24 pooled) at the core and intermediate positions, where improvements were expected.

### 3D EM imaging and image alignment

Sub-volumes sized about (1.5 mm)³ of the hemisphere H6 and H13 were cut-out on Leica EMTrim-2. The SBEM datasets were acquired using a custom-built SBEM microtome (NPL5) mounted inside the chamber of a scanning electron microscope (FEI Quanta, Thermo Fisher Scientific, USA). The image acquisition and SBEM microtome were controlled using custom written software (NPL41). Incident electron beam with acceleration energy of 2.8 KeV at aperture 4 (spot size of 3.5, beam current 160 pA, dwell time 2.8 µs, electron dose 22 e⁻/nm²) or aperture 6 (spot size 3.0, beam current 47 pA, dwell time 12 µs, electron dose 28 e⁻/nm²) was used to image at (11.24 nm)² in-plane pixel size.

The image alignment of all EM datasets and their segmentations were done with routines described in (NPL40). The tracing of axons was done in webKnossos (NPL42). In brief, 20 axons were randomly seeded in a (3 µm)³ bbox in the center of H6 striatum dataset or from the control striatum dataset. Manual tracing was performed by three expert annotators. The occurrence of discontinuity (defined as not possible to trace non-ending nodes) were documented. The mean inter-error distance was calculated by dividing the total path length (mm) with the number of discontinuity nodes. Permutation random re-sampling was performed to calculate the 25 and 75 percentiles for each condition.

### ATUM test of fully embedded whole brain sample (W3)

A mouse whole brain sample (W3) was stained according to the whole brain staining protocol described herein (see e.g., Tables 1 and 2). After staining, the whole brain sample (W3) was dehydrated and embedded as described earlier (see sections "Dehydration of whole brain samples" and "Infiltration of Spurr's resin and full-volume embedding of whole brain samples" above). Afterwards, the sample was embedded in freshly prepared Spurr's resin and cured at 70 °C for 3 days.

In order to examine the resin quality in the sample center, the whole brain sample was cut into two equal halves after the resin was cured. Then, the exposed sample surface was trimmed smaller to approx. 4x2 mm hexagon shape for subsequent ATUM cutting of ultra-thin section with a section thickness of 38 nm. Continuous cutting for 290 cuts (>10 µm series) was performed.

### Example 2 - Results

Here, protocols for reliable en-bloc staining of 2-3 mm-sized samples (Fig. 1), mouse hemispheres (Fig. 2), mouse whole brains (Figs. 3 and 14) and human cortex samples (Fig. 11) are reported. Their development required the concomitant solution of the following problems: recurring staining inhomogeneity, sample instability that leads to breakages (especially in hemispheres and whole-brain samples), and homogeneous resin infiltration, as described in the following.

For protocol development, initially X-ray microtomography (µCT) imaging to assess staining gradients (NPL19, NPL31) was used. Additionally, low-vacuum SEM (NPL14, NPL30) was applied to check ultrastructural contrast after intermediate steps of the staining experiments, at which stages the sample would be charging in high-vacuum SEM. This was of particular importance as samples that had homogeneous appearance in µCT could reveal insufficient membrane contrast or damaged ultrastructure when analyzed in EM (Supplementary Figs. 5, 8).

First, the available 1 mm protocol (NPL11) to 2 mm-sized samples (Fig. 1b) was applied, which however yielded strong staining gradients (Fig. 1c, Fig. 4a, b) and incomplete resin infiltration (Fig. 1f). Then µCT was used to investigate at which steps in the protocol the gradients occurred and a two-layered gradient after OsO₄ - FeCN incubation, and an additional third gradient layer after TCH-OsO₄ incubation (Fig. 4c) were found. The obvious measure when observing such gradients was to extend the duration of the respective incubation steps. When extending the FeCN step from 1.5 h to 12-17 h, the gradient was in fact removed (Fig. 4d).

To our surprise, however, when omitting the FeCN step entirely and only incubating in OsO₄ for 3 h, membrane contrast under SEM was not reduced (and there was no gradient) (Fig. 5a). Only when also the OsO₄ incubation was extended to 24 h, the FeCN step provided enhanced membrane contrast (Fig. 5b; for a possible explanation for this phenomenon by means of Os(vi)-CN- coordination chemistry, see Example 3 and Fig. 9d, e).

While the FeCN-induced gradient could thus be removed, the TCH-induced gradient could not be similarly resolved; rather, prolonged TCH incubation yielded broken samples, most likely because of gaseous products generated by the reaction of OsO₄ and TCH as reported previously (NPL19) (Fig. 4e).

The present inventors therefore adopted the exchange of TCH by pyrogallol (Pg) as proposed in the prior art (NPL19). When replacing TCH by Pg in the 1 mm protocol (NPL11), sufficient sample conductivity and contrast was found (Fig. 4f, g, h). It was confirmed that pyrogallol incubation should be performed in H₂O instead of cacodylate buffer (CaC), which would otherwise cause decreased membrane contrast (NPL19) and resulted in a staining gradient (Fig. 4i). In addition, it was found that it is necessary to pre-incubate in H₂O to wash out CaC before the pyrogallol step, since interaction of CaC with pyrogallol could possibly cause gradients or breakages (Fig. 6d). By extending the incubation times for pyrogallol and the following OsO₄ step, the second gradient vanished (Table 1, Fig. 4j).

For the final steps of the present protocol, uranyl acetate (UA) and lead aspartate (Ld), the present inventors noticed under µCT a minor gradient caused by UA (Fig. 4k). This gradient was removed by increasing the UA concentration from 2% to 4% (Fig.4k). The final lead aspartate step was omitted as the low concentration of Ld yielded unsatisfying diffusability (20 mM/L lead nitrate dissolved with 2:3 mole ratio in 30 mM/L saturated aspartate buffer (NPL34) (Fig. 4k). Also, under omission of the lead aspartate step, sample conductivity and staining contrast were sufficient (Fig. 1d, e). With this, the present inventors had obtained a high-contrast homogeneous staining protocol for 2-3 mm sized samples (Fig. 1e, Table 1; contrast quantification in Fig. 1h).

Next, homogeneous resin infiltration needed to be ensured. The present inventors focused on Spurr's resin for samples to be cut and imaged using serial block-face scanning electron microscopy (SBEM) (NPL5) and Epon 812 substitute (in the following referred to as Epon) for samples to be cut using an Automatic Tape-collecting Ultra-Microtome (ATUM) (NPL8). The present inventors considered the fact that the epoxy resin blender would undergo polymerization during infiltration. This would increase the viscosity of the blender; and once the polymerization process has crossed the gel point, no more diffusion would be possible (NPL33). Thus, the practical strategy for improving resin infiltration was to slow down polymerization reactions and keep viscosity low. To do so, all resin infiltration steps were kept at 4 °C (NPL33) which in fact significantly slowed down the polymerization process (Fig.1g). Furthermore, before incubating the samples in pure resin, a step of 95% resin in 5% acetone was added; this small amount of acetone was shown to significantly decrease the resin viscosity (NPL18). Finally, the resin (Epon) incubation time from 1 day to 4-5 days was extended (Fig. 1g; Table 2, which also contains data for Spurr's resin). By these modifications, the present inventors successfully infiltrated both Spurr's and Epon epoxy resin into the center, yielding homogeneously embedded 2 mm-sized samples (Fig. 1f).

**Table 1: Overview of 2-3 mm, hemisphere (Hem.) (~5 mm) and whole-brain (W.B.) (~10 mm) protocol steps with incubation times and temperature steps.**

| Illustration of the relevant staining/washing steps for the key challenges of whole-brain staining: avoidance of gradients, peripheral tissue destruction, and tissue breakages. | | | | |
|---|---|---|---|---|
| **Incubation steps** | **Sample size** | **Incubation Time (h)** | **Temp.** | **Note** |
| a) OsO₄ | 2-3 mm | 24 | RT | 4°C advantageous to avoid OsO4 overexposure in periphery of large samples |
| | 5 mm (Hem.) | 72 | 4°C | |
| | 10 mm (W.B.) | 96 | | |
| b) CaC | 2-3 mm | 2 | 4°C | 4°C advantageous, if RT: PSD lost, cerebellum breakages in water, long enough advantageous, if not: gradient in FeCN and breakages in Pg |
| | 5 mm | 96 | | |
| | 10 mm | 168 | | |
| c) FeCN | 2-3 mm | 17 | | advantageous step for tissue protection in Pg step, if not: breakages. 4°C advantageous for large samples, if not: breakages in FeCN |
| | 5 mm | 72 | | |
| | 10 mm | 72 | | |
| d) CaC | 2-3 mm | 2 | RT | Advantageous for very large samples so free FeCN can diffuse out, if not: gradient in 2^{nd} OsO₄ step and breakages in Pg |
| | 5 mm | 48 | | |
| | 10 mm | 96 | | |
| e) OsO₄ | 2-3 mm | 3 | | Advantageous additional OsO₄ step for the integrity in later H₂O steps for samples of all sizes |
| | 5 mm | 48 | | |
| | 10 mm | 48 | | |
| f) CaC | 2-3 mm | 1 | | |
| | 5 mm | 24 | | |
| | 10 mm | 72 | | |
| g) H₂0 | 2-3 mm | 2 | | H₂O for enhanced contrast, if CaC: contrast decreased, gradients and breakages can occur in Pg |
| | 5 mm | 24 | | |
| | 10 mm | 48 | | |
| h) Pyrogallol (Pg) | 2-3 mm | 17 | | Freshly prepared Pg |
| | 5 mm | 24 | | |
| | 10 mm | 24 | | |
| i) H₂0 | 2-3 mm | 2 | | Wash out remaining Pg to avoid Pg-OsO₄ interaction |
| | 5 mm | 24 | | |
| | 10 mm | 48 | | |
| j) OSO₄, _{H20} | 2-3 mm | 6 | | |
| | 5 mm | 48 | | |
| | 10 mm | 96 | | |
| k) H₂0 | 2-3 mm | 1 | | Wash out remaining OsO₄ to avoid OsO₄-UA interaction |
| | 5 mm | 24 | | |
| | 10 mm | 48 | | |
| l) Uranyl Acetate (UA) | 2-3 mm | 17 | 4°C | UA advantageous for sample conductivity/higher concentration of UA |
| | 5 mm | 48 | | |
| | 10 mm | 48 | | |
| m) UA | 2-3 mm | 2 | 50°C | |
| | 5 mm | 5 | | |
| | 10 mm | 5 | | |

Next, the present inventors wanted to apply the obtained protocol to the staining of mouse hemispheres and whole-brain samples that are about 25 to 60-fold larger in volume (about 5 x 10 x (5 or 10) mm³, Fig. 2a, 3a). For protocol development, mouse brain hemispheres as a surrogate goal were used (Fig. 2), since the mouse whole brain is a symmetric duplication of these, with nominally similar access geometry to the hemisphere, and later tested the results in an exemplary whole-mouse brain staining (Fig. 3).

Since the present inventors had noticed a strong contrast enhancement from prolonged OsO₄ incubation already for 2-3 mm sized samples (see above, Fig. 1d, e, Fig. 5a, b), for mouse hemispheres, first the initial OsO₄ incubation was extended to 3 and 6 days. In fact, OsO₄ incubation for 3 or 6 days resulted in increased membrane contrast, also in the sample center. But the present inventors encountered a serious obstacle: when incubating for sufficient duration for OsO₄ to reach the center of the hemisphere sample, the outer parts of the sample were showing strong signs of ultrastructural disintegration (Fig. 2b, of note, these were not apparent in µCT, only under EM imaging). The cytosol of most neurites and cell bodies had an extracted appearance, possibly indicating the removal of intracellular proteins (Fig. 2b, note that NPL7 had already discussed this in the context of over-fixation of tissue by OsO₄). Since the outer part of the sample corresponds to the cortical gray matter, a key target of whole-brain connectomic analysis, a whole-brain staining with good stain penetration but insufficient ultrastructural quality in the cortical periphery would be useless.

In order to overcome this obstacle, the present inventors took the notion that the ultrastructural alterations were likely a result of protein over-oxidization by prolonged OsO₄ incubation (see Supplementary Material), which could be slowed down by lower incubation temperature (4 °C) (NPL7). In fact, no obvious OsO₄-based cytosolic alterations were found for samples incubated at 4 °C, even when incubating in OsO₄ for 7 days (Fig. 5e, f). With sufficiently long OsO₄ incubation at 4 °C (step length was diffusion time plus about one additional day incubation for hemispheres), a step to RT was no more necessary, and the subsequent FeCN still yielded enhanced membrane contrast. (Fig. 5g, h, i, j; see Supplementary Material for possible chemical explanation, Fig. 9d, e). The FeCN incubation itself also induced substantial tissue damage at RT (Fig. 5g). The present inventors therefore incubated FeCN at 4 °C, as well, which resolved this problem (Fig. 5j).

For the FeCN step, the present inventors noticed an additional issue: especially for larger samples such as the hemisphere, an inverse gradient with lower µCT-imaged intensity in the periphery (Fig. 6b), and a very slow diffusion of FeCN (Fig. 6d) were observed. This could be the result of the direct redox reaction between OsO₄ and FeCN (see Example 3). When, however, adding washing steps with CaC between OsO₄ and FeCN incubations to avoid their direct interaction, the ensuing gradient could be removed, staining intensity in the periphery remained high (Fig. 6c), and the FeCN diffusion was much faster (Fig. 6e, f). The present inventors noticed that these washing steps should be at 4 °C and of sufficient duration (Fig. 6h); if they were not sufficiently long, there remained a staining gradient that would be amplified in the pyrogallol step later and may contribute to breakages (Table 1, Fig. 6g, h). If they were at RT, while the incubation time could be shorter (Fig. 6h), the samples would be less stable in water with tissue damage in cerebellum (Fig. 13 f-g), and also a reduction in post synaptic density (PSD) staining was noticed (Fig. 9). Washing steps at RT also appeared to reduce the staining of postsynaptic densities (PSDs).

After having addressed the OsO₄ penetration issues, the present inventors were left with one major remaining obstacle: larger samples were consistently broken during the staining process, either in their entirety into several smaller pieces, or with micro-breakages that would hamper dense circuit reconstruction (Fig. 2c, d). These breakages would usually occur in relation to the pyrogallol incubation step (Table 1). Therefore, the effect of all earlier protocol steps on the stability of the sample during pyrogallol incubation had to be assessed. This was of particular importance since the pyrogallol incubation (including the washing steps before and after) had to be performed in H₂O, as determined for the 2 mm samples; and this H₂O incubation could induce substantial osmotic forces in the sample. The present inventors found that inserting an additional extended OsO₄ incubation step after FeCN would stabilize samples such that they could be incubated in H₂O for up to 100 h without the occurrence of major breakages (Fig. 6i, a possible explanation is the membrane perforation induced by OsO₄, which increases tolerance to osmotic stress, NPL7). While this additional OsO₄ step may also serve to enhance background staining and thus, sample conductivity for SEM, the enhanced stability of the large samples is the most critical aspect (see Example 3, section "Additional protocol variants for highly fragile samples" in combination with Fig. 10 for an alternative approach to avoid pure H₂O incubation by omitting the second Osmium step).

The present inventors applied the hemisphere protocol to n=3 hemispheres (Fig. 2, Fig.7, Fig. 12), which all remained intact and provided homogeneous high-contrast staining throughout the sample. In addition, an entire mouse brain with modest additional extensions of incubations times was stained (Table 1, Fig. 3), which yielded a whole-mouse brain staining protocol for large-scale connectomics (NPL1). The present inventors observed two types of artifacts that remained in large-sample staining (Fig. 13): the detachment of larger blood vessel walls from the surrounding neuropil, and rare remaining microbreakages in the subcortical regions with high rate of myelinated fibers. Also, special care had to be taken to preserve the integrity of the cerebellum (Fig. 13f, g). Neither of these remaining issues is expected to substantially affect connectomic reconstruction.

The present inventors performed test series of automated ultramicrotome cutting (as described in NPL8) on the center of a fully stained and fully embedded whole-mouse-brain sample (W3) in order to confirm that also the protocols for full-volume embedding described herein yield sufficient sample stability with respect to ultrathin cutting (Fig. 14c, d, e).

To quantitatively determine the sufficiency of our staining quality and resin stability in the center of our samples for 3D EM acquisition and axon reconstruction, the present inventors acquired a SBEM dataset from the center (striatum) of one stained and full-volume embedded mouse brain hemisphere (Fig. 12, H6 and compared this to a control SBEM dataset from the striatum obtained from a 1x1x0.5mm³-sized sample stained with the Hua protocol (NPL11). Both manual axon reconstruction (Fig. 12d) and automated axon reconstruction (Fig. 12e) yielded similar results between locally stained control and hemisphere-stained samples.

Finally, the present inventors applied the protocol of the present invention to a sample of human brain biopsy to directly test the applicability of the protocol to large human brain samples (Fig. 11; tissue obtained as in (NPL40), patient H6). The present inventors stained and embedded a human sample sized 2x3x2mm³ (i.e., 12 mm³ in size) spanning all cortical layers from human frontal cortex. The tissue was homogeneously stained across layers (Fig. 11c). Furthermore, the present inventors obtained a cutting series using ATUM to test cuttability for large-scale 3D EM (2733 slices at 35-40 nm cutting thickness from the sample center).

For this 2x3x2mm-sized human sample, some incubation steps are prolonged compared to the 2x2x2 mm protocol (see Table 2). In general, it is advisable to interpolate incubation times between the reported 2mm protocol and the hemisphere protocol for samples with any dimension above 2mm, or samples that have irregular shape. For ATUM cutting, compared to SBEM, prolonged resin infiltration is also advisable.

The present inventors envision that the protocols reported here will serve for large-scale connectomic projects in mouse and other species. In particular, the volume of a mouse brain also approaches relevant cortical and subcortical volumes in higher mammals as non-human primates and humans. The ultimate goal of obtaining large connectomes from fractions or the entirety of human cortex (NPL21) will also profit from the advances described here, both for fundamental research and clinical applications, such as routine connectomic analysis of pathological brain specimens from neurosurgical interventions (NPL40).

### Example 3 - Additional Results

### Chemical concepts of OsO4-FeCN-related enhancement of membrane contrast

For enhanced membrane contrast of biological specimens in electron microscopy, potassium hexacyanoferrate(ii) (FeCN) has been combined with OsO₄ since the 1970s (NPL3, NPL13). Chemically, this was considered to involve a redox reaction between OsO₄ and FeCN (NPL3, NPL13, NPL28, NPL36), therefore the protocol has been referred to as "reduced-osmium" (rO) protocol. Two mechanisms were considered for the contrast enhancement in the rO protocol: Either more osmium compounds were deposited into membranes (NPL3, NPL4, NPL36, NPL37), or osmium compounds in the cytosolic background were removed (NPL17, NPL22, NPL37). A more recent improved staining protocol was based on the following chemical logic (NPL11): The staining process was considered as a two-step chemical reaction: First, FeCN reduces Os^{viii}O₄ to its lower valence form: Os^{vi}O₂(OH)₄²⁻ (Os(vi)). Then, two molecules of Os(vi) dismutate into one molecule of OsO₄ and one molecule of Os^{IV}O₂, and OsO₂ was assumed to be able to deposit into membranes (NPL11), thus result in higher membrane contrast.

For the protocols reported here, the present inventors developed a different chemical concept. First, it was noted that several experimental results would not support the above "redoxdismutation" (NPL11) explanation. The assumed dismutation reaction was found in either organic solvents or low pH water solution (NPL15), but it is less likely to occur in cacodylate buffer (CaC). In support of this, the present inventors found no change in UV-Vis absorption spectrum of potassium osmate (vi) (K₂[Os^{VI}O₂(OH)₄]) solution in CaC after 24 h compared to freshly prepared solution (Fig. 8d). In brain tissue, dismutation might still occur in a more complex way involving interactions with lipid membranes. However, it was found that membrane contrast was not enhanced by staining samples directly with potassium osmate(vi) in CaC solution (Fig. 8c). Furthermore, the present inventors noticed that the redox reaction between OsO₄ and FeCN as the basis for membrane contrast enhancing (NPL3, NPL11, NPL13, NPL28, NPL36) had little direct support. A direct test would be to determine membrane contrast with a suppressed redox reaction. When adding an additional CaC washing step to remove OsO₄ from the tissue before adding FeCN, in an attempt to suppress OsO₄-FeCN redox reactions, similar membrane contrast was observed (Fig. 8a, b, comparing to Fig. 1d, e); indicating that the OsO₄-FeCN redox reaction may not be a prerequisite for enhanced membrane contrast. For developing an alternative explanation of membrane contrast enhancement, the present inventors were guided by the observation that the duration of the OsO₄ incubation step was critical for the effect of FeCN: when the OsO₄ incubation duration was short (but sufficient to stain a 2 mm-sized sample homogeneously, e.g. 3 h), addition of FeCN actually did not enhance membrane contrast (Fig. 5a); only when prolonging the OsO₄ incubation to 24 h, the subsequent FeCN step was effective in membrane contrast enhancement (Fig. 5b). Which processes could have occurred during the prolonged OsO₄ incubation? After short incubation, both the membranes and background appeared stained (Fig. 5a), implying that osmium compounds were deposited/attached at both targets. After prolonged incubation, however, the cytosolic background (which may mainly be constituted by proteins), may have been altered by OsO₄ such that FeCN can react to yield products that can be washed out, reducing background staining (Fig. 5b; consistent with insights in earlier studies (NPL17, NPL22, NPL37). One possible process/reaction that may have happened between OsO₄ and background is protein over-oxidization (NPL7), which might induce 3D -conformational changes of the proteins (e.g. de-gelation (NPL27). As a result, more protein-bound osmium (of valence vi (NPL7)) could be exposed to the aqueous phase, enabling the interaction with FeCN in the aqueous solution. This notion of conformational instability of proteins as a prerequisite for FeCN effects was supported by an experiment in which CaCl₂ as a protein crosslinking cation was added (NPL7), and indeed found this to inhibit the membrane contrast enhancement effect of FeCN after prolonged OsO₄ incubation (Fig. 8g). In addition, when incubating at 4 °C, protein conformation would be expected more stable, and chemical reactions slowed down. In fact, low-temperature incubation could also inhibit the effect of FeCN on membrane contrast after prolonged OsO₄ incubation (Fig. 8h).

But is the addition of FeCN a necessity after prolonged OsO₄ exposure for enhancement of membrane contrast, or could sufficiently long OsO₄ incubation alone provide sufficient membrane contrast? Samples were stained with further extended OsO₄ incubation (from 24 h to 3-6 days) and membrane contrast was afterwards investigated in low-vacuum SEM. After 6 days of OsO₄ incubation, enhanced membrane contrast was in fact achieved (Fig. 5c, d). However, extensive background extractions also occurred (Fig. 5c, d). Together, the present inventors could interpret this as an indication that FeCN was not strictly required for enhanced membrane contrast; however, it could accelerate contrast enhancement such that sufficient contrast could be achieved before the OsO₄ incubation yielded extraction of background ("over-fixation").

The present inventors still needed to form a hypothesis for the actual reactions occurring between Os-compounds and FeCN. These experiments and concepts are described in the following.

During prolonged OsO₄ incubation, a pink reaction product diffusing out from the samples was noticed (for comparison, OsO₄ was yellowish in solution) (Fig. 9a), the typical color of osmate(vi) in cacodylate. This further supported the previous notion that the background osmium species exposed by prolonged OsO₄ was Os(vi). During the very long OsO₄ incubation, as the proteins were further oxidized, the exposed Os(vi) might be released into aqueous phase, likely coordinated with the anion from the CaC buffer as this could stabilize Os(vi) in water (Fig. 8d). In this coordinated form, Os(vi) could diffuse out of the sample, reducing background staining, thus enhancing membrane contrast. This implied that this Os(vi)-removal process would be slow, as 24 h OsO₄ incubation had not yielded enhanced membrane contrast, but only 3-6 days of OsO₄ incubation (Fig. 5b) - consistent with the notion from previous studies that "reduced osmium" diffusion was slow (NPL11, NPL19).

How could the addition of FeCN accelerate this Os(vi) background removal process? After OsO₄ incubation the present inventors expected Os(viii) and Os(vi) freely moving in the aqueous phase. Since a redox reaction or dismutation as key processes in the above explanation were considered unlikely (see above), and thus, the possibility of a reaction between Os (viii)-FeCN or Os(vi)-Os(vi) were excluded; the present inventors had to consider that the remaining likely chemical reaction had to occur between Os(vi) and FeCN. This would be consistent with the observation that the staining solution after the FeCN step had a green-blue color, similar to the color observed in the in-vitro reaction of Os(vi) and FeCN (Fig. 9a).

What would be a realistic reaction between Os(vi) and FeCN to occur? This was explored by measuring the Raman spectrum of the mixture solution of Os(vi) and FeCN. In the mixture, the spectral peak expected for potassium hexacyanoferratte (iii) (FeCNiii) was not found (Fig. 9b), indicating that Os(vi) was not able to oxidize FeCN to FeCNiii. On the other hand, Os(vi) was known to have the capacity to coordinate with ligands like OH⁻ (NPL11, NPL25) and CN⁻ (NPL6, NPL23, NPL24, NPL25) and FeCN was known to be unstable such that it would dissociate to yield free CN⁻ spontaneously at low rate in aqueous solution (NPL32). Thus, a possible reaction between Os(vi) and FeCN was a coordination reaction, in which Os(vi) competed for the CN⁻ from FeCN and formed a coordination complex.

This hypothesis was further supported by the measurement of the Raman spectroscopy: a shift of the vibration peak of O=Os^{VI}=O in the Os(vi)-FeCN solution compared to Os(vi) alone was found (Fig. 9b), indicating a ligand change in the Os(vi) molecules. The same shifted peak was also found in the brain staining solution after the FeCN step (Fig. 9c), indicating that FeCN in the sample staining processes could in fact react with Os(vi).

Together, a possible function of FeCN is to "carry" CN⁻ to diffuse through the sample and donate CN⁻ to exposed Os(vi) (after prolonged OsO₄ incubation). If the incubation of OsO₄ before FeCN was not sufficiently long to expose background Os(vi), FeCN incubation would only remove the free Os(vi) in solution, not the Os(vi) bound to cytosolic proteins, thus would not result in enhanced membrane contrast. If the incubation of OsO₄ was sufficiently long to expose protein-bound Os(vi), FeCN incubation would however coordinate with the exposed protein-bound Os(vi), enabling its removal from the sample, and yielding enhanced membrane contrast. The likely form of this assumed complex might be OsO₂(OH)₂(CN)₂²⁻, OsO₂(CN)₄²⁻ (NPL23, NPL24).

This concept adds a new view on the long mysterious chemical nature of OsO₄-FeCN membrane contrast enhancement (Fig. 9d): (1) OsO₄ stained both membrane and cytosolic proteins (background) during short incubation; (2) With prolonged incubation, OsO₄ overoxidized the background proteins and thereby exposed protein-bound Os(vi) to aqueous phase; (3) FeCN would carry CN⁻ through the sample, and provide CN- to the exposed protein-bound Os(vi) to form a stable coordination compound (note this would be a compound between Os(vi) and CN-, but not between Os(vi) and FeCN itself as proposed in 1970s (NPL36). The coordination compound between Os(vi) and CN⁻ could then easily diffuse out (NPL4).

### Discussion of previous protocols in the framework of this exposure-coordination based staining concept

The possible exposure-coordination concept of membrane contrast enhancement would add a surprising view on Karnovsky (NPL13) and de Bruijn's (NPL3) discovery in 1970s to find FeCN as a staining enhancement agent: the reason this would have worked was that Fe²⁺ was strong enough to maintain CN⁻ in the coordination complex, such that CN⁻ would not react directly with the osmium compounds deposited within membranes (as the osmium in membranes are those the present inventors would like to keep). In fact, otherwise the effect would be dramatic: the staining of the entire sample would be lost if osmicated samples were incubated in KCN which provide free CN⁻ (NPL4). FeCN, in contrast, would be more strongly coordinated and only be able to donate CN⁻ when encountering the exposed/free Os(vi) in the aqueous solution, forming the stable coordination product of Os(vi) and CN⁻ (NPL23, NPL24) that would be easily washed out (NPL4). The present chemical concept was also consistent with the "background washing" insight from the early days (NPL17, NPL22, NPL37).

The same incubation time dependent effect would also exist in the original rO protocol (Fig. 8e, f). The principles summarized above can be applied similarly: even though FeCN and OsO₄ were mixed together in rO (which would yield a mixture of OsO₄, FeCN, FeCNiii and Os(vi)); however, FeCN-based reactions would still only be occurring once the background proteins were exposing Os(vi) for CN⁻ - complex formation.

To provide a possible explanation for the staining gradient and precipitation band that would appear when staining samples with rO that were larger than ~200 µm in size (NPL11, NPL19), the following was considered: The very slow centripetal diffusion of Os(vi) (Fig. 8c) from all sides of the sample could yield a density of Os(vi) at a certain depth such that CaC could no longer stabilize the high amount of Os(vi), and local dismutation would occur (thereby yielding Os^{IV}O₂, Fig. 8c,d).

To evaluate the rO (NPL3, NPL13), Hua (NPL11) and Mikula (NPL19) protocols in the framework of the exposure-coordination concept, the present inventors considered the Os(vi) coordination reactions with different ligands (hydroxide, cacodylate, cyanide and others, Fig. 9e). The coordination bonds from different ligands would differ in their strength, influencing the stability of the complexes. Similarly, the complexes would also differ in size as a result of different ligand sizes; this would influence the mobility of the complexes during diffusion. In water, Os(vi) would coordinate with hydroxide ions (OH⁻) and form an unstable complex which would dismutate relatively easily (NPL11 NPL15). In cacodylate buffer, Os(vi) would form more stable complexes with cacodylate anions ((CH₃)₂AsO₂⁻), very likely also by coordination bond (NPL25), which should be stronger so that it can inhibit Os(vi) dismutation (Fig. 8d). The difference in the size of the coordination bonds by hydroxide vs. cacodylate could also contribute: in hydroxide coordination there would be a distance of only two chemical bonds (Os-O-H)), but in cacodylate coordination there would be a distance of four chemical bonds (Os-O-As-C-H), potentially affecting final compound size and mobility, possibly explaining why the [Os(vi)-cacodylate] coordination compound diffused slowly (NPL11, NPL19).

And it can also explain why the Hua protocol (NPL11) works by separating OsO₄ and FeCN, as it avoided long distance Os(vi) diffusion by generating it locally; however, this is not necessary, as Os(vi) doesn't contribute to membrane contrast and OsO₄-FeCN redox causes stain leakage as shown in main text (Fig. 6 b,c).

For the formamide (NPL19) used in Mikula's protocol, Os(vi) would coordinate with the amine group in formamide (NPL25). The formamide coordination with Os(vi) would result in a threebond distance (Os-N-C-H), thus less than the four bond distance of cacodylate; this might give the formamide coordination compound more mobility. The coordination ligand amine group should also form relatively stronger coordination than hydroxide (NPL25), this could help preventing precipitations as discussed in the "reduced osmium". However, the amine coordination might be even stronger than cacodylate coordination, thus leading to less well stained samples in the end (similar to KCN).

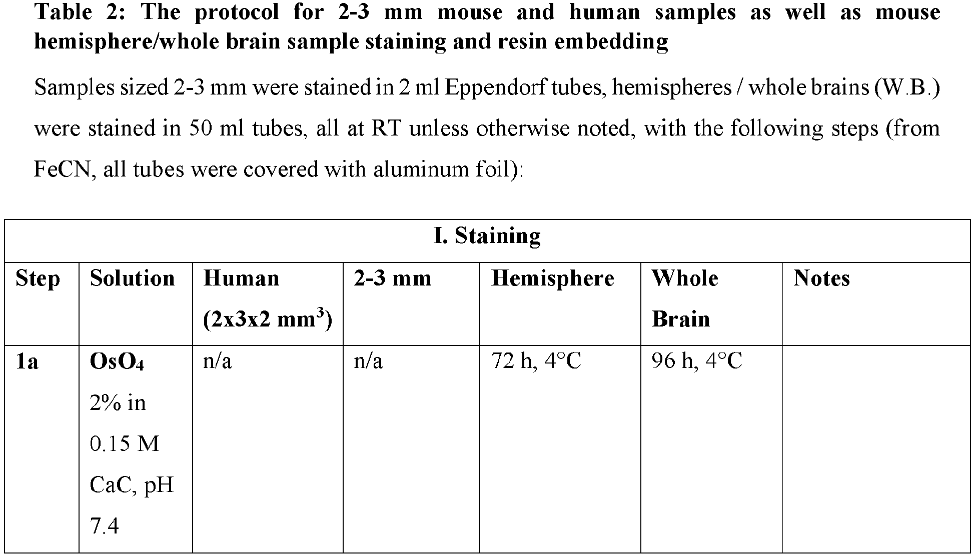

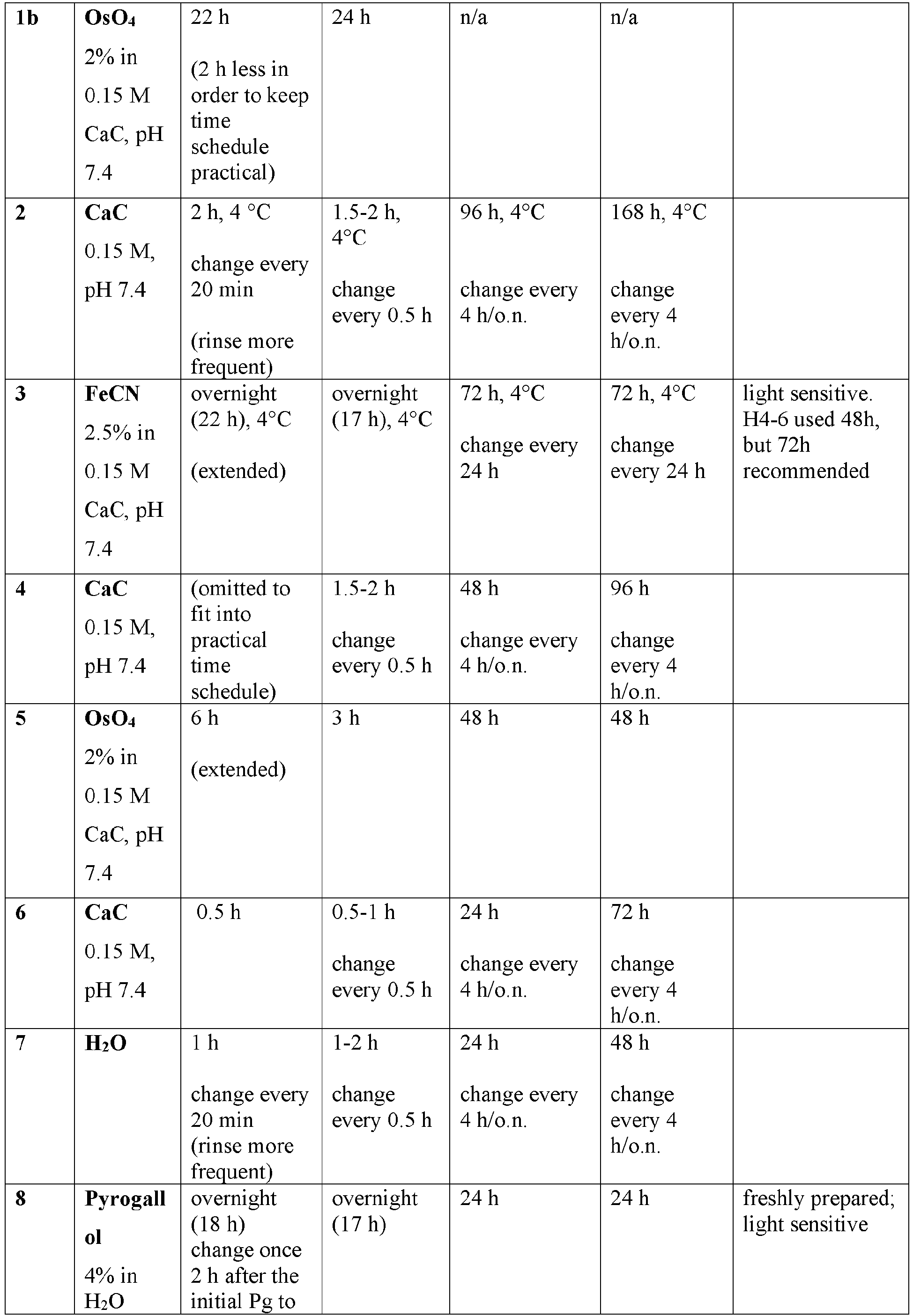

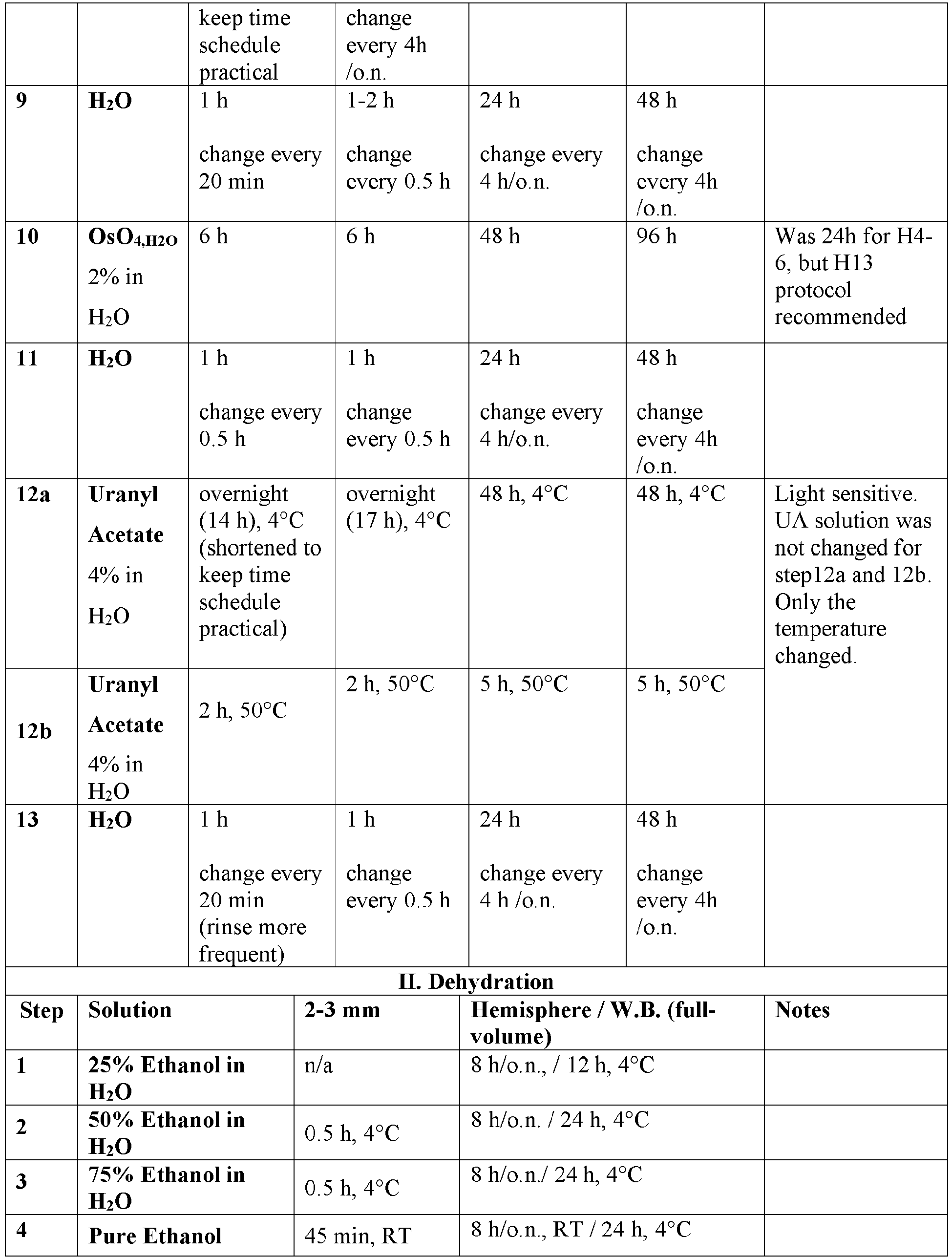

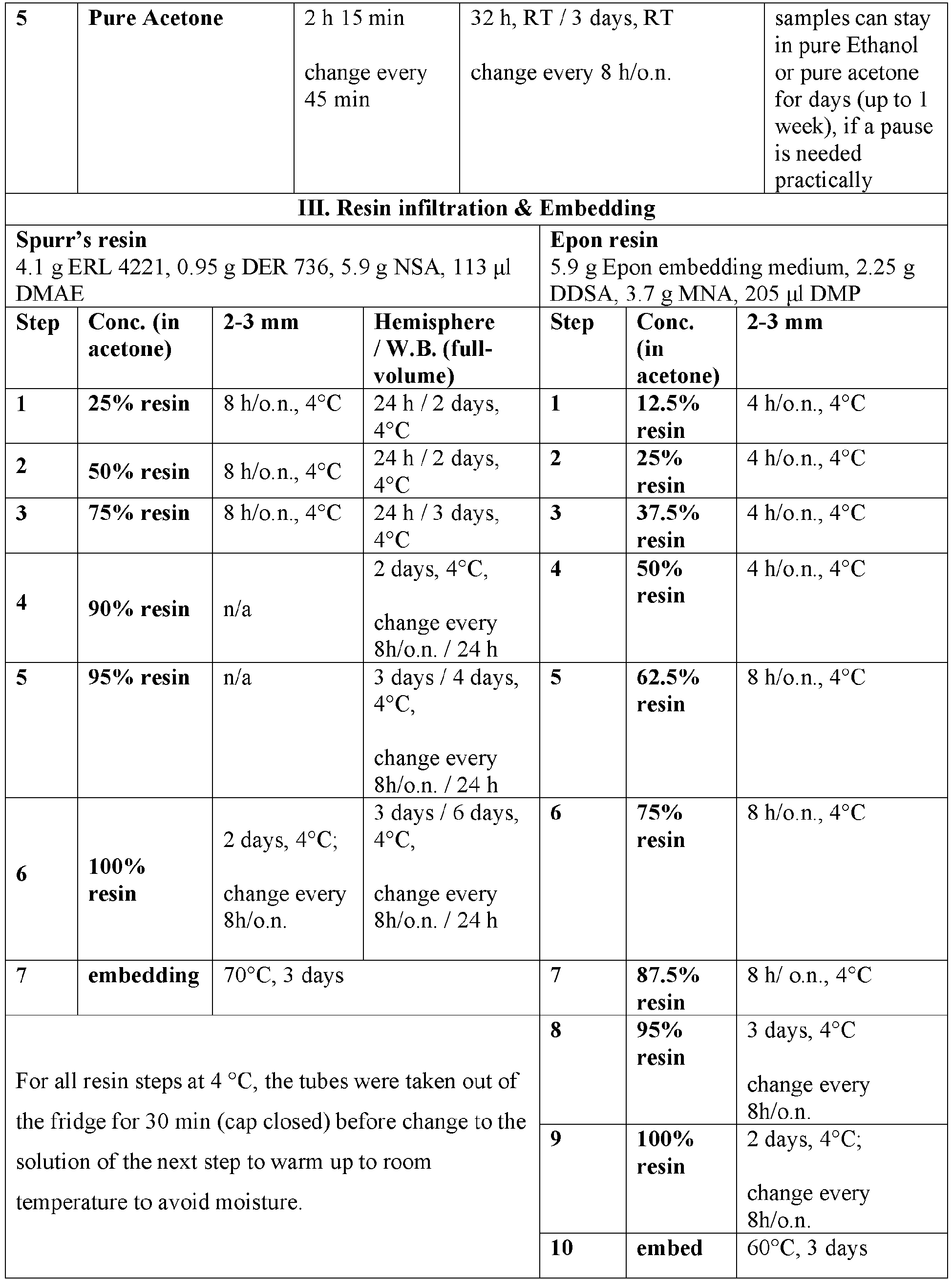

The dehydration and resin infiltration of the human sample were performed as follows:
Human samples went through a graded ethanol dehydration step: 30 min 20% ethanol at 4 °C, 30 min 40% ethanol at 4 °C, 30 min 60 % ethanol at 4 °C, 30 min 80 % ethanol at 4 °C, 45 min 100 % ethanol at RT. For the resin infiltration, after three times of 45 min pure acetone rinsing, the samples went through graded Epon resin infiltration (For 10 ml resin: 5.9 g Epon medium, 2.25 g DDSA, 3.7 g MNA, 205 ul DMP) in acetone, all at 4 °C: 4 h 12.5 %, 13 h 25 % (overnight), 4 h 37.5 %, 4 h 50 %, 19 h 62.5 % (overnight), 8 h 75 %, 19 h 87.5 % (overnight), 8 h 95 %, 19 h 95 % (1^{st} overnight for 95%), 8 h 95 %, 19 h 95 % (2^{nd} overnight for 95 %), 8 h 95 %, 19 h 95 % (3^{rd} overnight for 95%), 8 h 100 %, 19 h 100 % (1^{st} overnight for 100%), 8 h 100 %, 19 h 100 % (2^{nd} overnight for 100%); afterwards, the samples were embedded in freshly prepared Epon resin and cured at 60 °C for 3 days.

For all solution changing steps, it was tried to remove as much old solution as possible to make sure that no interaction with the new solutions take place. For samples with sizes between 2-3 mm and hemispheres / whole-brain samples, extensions of the above steps should be applied coordinately (meanwhile, the 2 ml Eppendorf tubes should also be changed to larger volume tubes). If modifications were made based on the presently recommended protocol, the present inventors also recommend checking staining homogeneity in µCT after the major staining steps (i.e., 1^{st} OsO4, FeCN, 2^{nd} OsO₄, Pg, 3^{rd} OsO4, UA) to verify the validity of any modifications.

**Table 3. Summary of the chemicals**

| **Chemical** | **Name** | **Preparation** |
|---|---|---|
| Milli-Q^{®} water | H₂O | - |
| 0.15 M sodium cacodylate buffer | CaC | Diluting 0.3 M CaC (Sigma-Aldrich) 1:1 with water, pH adjusted to 7.4 by 1M NaOH (Sigma-Aldrich) |
| 2% OsO₄ in 0.15 M cacodylate buffer | Os | Diluting 4% OsO₄ (Serva) 1:1 with 0.3 M CaC (pH 7.4), no further pH adjustment |
| 2% OsO₄ in water | Os-aqua | Diluting 4% OsO₄ (Serva) 1:1 with water |
| 2.5% potassium ferrocyanide in 0.15 M cacodylate buffer | FeCN | Dissolving 1.25 g FeCN (Sigma-Aldrich) in 50 ml 0.15 M CaC (Sigma-Aldrich) |
| 1% OsO₄ + 1.5% FeCN in 0.15 M CaC | rO | Diluting 2% OsO₄ (Serva) in 0.15 M CaC (Sigma-Aldrich) 1:1 with 2.5% FeCN (Sigma-Aldrich) in 0.15 M CaC (Sigma-Aldrich) |
| 1% thiocarbohydrazide in water | TCH | Dissolving 0.5 g TCH (Sigma-Aldrich) in 50 ml water, shake for 1 h, filter before use. Light sensitive, cover with aluminum foil |
| 3.75% pyrogallol in water | Pg | Dissolving 1.87 g Pg (Sigma-Aldrich) in water |
| 3.75% pyrogallol in CaC | Pg-CaC | Dissolving 1.87 g Pg (Sigma-Aldrich) in 0.15 M CaC (Sigma-Aldrich) |
| 2% uranium acetate in water | 2% UA | Dissolving 1 g UA (Serva) in 50 ml water, shake for 1 h, filter before use. Light sensitive, cover with aluminum foil |
| 4% uranium acetate in water | 4% UA | Dissolving 2 g UA (Serva) in 50 ml water, shake for 1 h, filter before use. Light sensitive, cover with aluminum foil |
| 0.66% lead aspartate | Ld | Dissolving 0.33 g lead nitrate (Sigma-Aldrich) in 50 ml 0.03 M aspartate buffer (pH 3.8, Serva), adjust pH to 5.0 with 1 M KOH (Sigma-Aldrich). Light sensitive, cover with aluminum foil. |

**Table 4. Summary of the staining experiments**

| In the table below the staining experiments with the main steps and corresponding figures listed are summarized. For writing purpose, all steps are denoted in the way of **"xN chemical duration temperature": "xN"**-N times of the same step, **"chemical"**-name of the chemical, **"duration"-**incubation time in h if no unit specified, **"temperature"**-if not denoted means RT. Sample size, dehydration, infiltration and embedding steps were not denoted; instead, the final checking method ("micro-CT"- **µCT,** "high/low vacuum SEM"-**SEM**) is indicated. For more details about each experiment, see the previous sections of the methods. | | | |
|---|---|---|---|
| Exp ID | Experiment (Exp.) | Staining Steps (brief) | Figures |
| 1 | Staining 2 mm samples with 1 mm protocol | Os 1.5→FeCN 1.5→ Os 1→ CaC 0.5→x2 H₂O 0.5→ | Fig. 1c; Fig. 4a, b |
| | | TCH 1.5→ x2 H₂O 0.5→ Os-aqua1.5→ x2 H₂O 0.5→2% UA overnight 4°C, 2 h 50°C→ µCT, SEM | |
| 2 | Step-by-step diagnosis of 1 mm protocol | Os 1.5 (µCT)→FeCN 1.5 (µCT)→ Os 1 (µCT)→ CaC 0.5→x2 H₂O 0.5 → | Fig. 4c |
| | | TCH 1.5→ x2 H₂O 0.5→ Os-aqua 1.5 (µCT)→ x2 H₂O 0.5→2% UA overnight 4°C, 2 h 50 °C (µCT) | |
| 3 | Extending FeCN incubation for 2 mm | Os 3→FeCN 1.5/3/7/12/17→ Os 3→ µCT | Fig. 4d |
| 4 | Os short vs. long on FeCN's effect | Os 3→ SEM | Fig. 5a, b |
| | | Os 3→ FeCN 17→SEM | |
| | | Os 24→SEM | |
| | | Os 24→ FeCN 17→ SEM | |
| 5 | Extending TCH incubation for 2 mm | Os 3→FeCN 17→ Os 3→ CaC 0.5→ x2 H₂O 0.5 → TCH 1.5/3/5→ x2 H₂O 0.5→ Os-aqua 3→ µCT | Fig. 4e |
| 6 | Replacing TCH by Pg | Os 1.5→FeCN 1.5→ Os 1→ CaC 0.5→x2 H₂O 0.5→ | Fig. 4f, g, h |
| | | TCH/H₂O/Pyrogallol 1.5→ x2 H₂O 0.5→ Os acq 1.5→ x2 H₂O 0.5→ 2% UA overnight 4°C, 2 h 50°C→ SEM & EDS | |
| 7 | Comparing Pg in H₂O vs. CaC | Os 24→FeCN 17→ Os 3→ CaC 0.5→x2 H₂O 0.5→ Pg-aqua/Pg-CaC 17→ x2 H₂O 0.5→ Os-aqua 6→ x2 H₂O 0.5→ 4% UA overnight 4°C, 2 h 50°→ SEM | Fig. 4i |
| 8 | Extending pyrogallol | Os 3→FeCN 17 → Os 3 → CaC 0.5→x2 H₂O 0.5→ Pyrogallol 1.5/7/17→ x2 H₂O 0.5→ Os-aqua 3/6→ µCT | Fig. 4j |
| 9 | Improving UA | Os 3→FeCN 17→ Os 3→ CaC 0.5→x2 H₂O 0.5→ Pyrogallol 17→ x2 H₂O 0.5→ Os-aqua 6→ x2 H₂O 0.5→ 2% /4% UA overnight 4°C, 2 h 50°C→ µCT | Fig. 4k |
| 10 | Cancelling Ld | Os 3→FeCN 17→ Os 3→ CaC 0.5→x2 H₂O 0.5→ Pyrogallol 17→ x2 H₂O 0.5→ Os-aqua 6→ x2 H₂O 0.5→ 4% UA overnight 4°C, 2 h 50°C→ Ld 4/24 50°C→µCT | Fig. 4k |
| 11 | Os very long | Os 3 days→ SEM | Fig. 5c, d |
| | | Os 6 days→ SEM | |
| 12 | Os 4°C vs. RT | Os 7 days 4°C→ SEM | Fig. 5e, f |
| | | Os 6 days 4°C, 1 day RT→SEM | |
| 13 | Os 4°C then FeCN | Os 6 days 4°C, 1day RT→FeCN 1 day 4°C/RT→SEM | Fig. 5i, j |
| | | Os 7 days 4°C→FeCN 1 day 4°C/RT→SEM | |
| 14 | Os 4°C on hemisphere | Os 4°C → uCT at 17/24/40h | Fig. 6a |
| 15 | CaC washing removes Os-FeCN redox gradient | Os 48→FeCN48→SEM | Fig. 6b, c |
| | | Os48→CaC48→FeCN48→SEM | |
| 16 | CaC washing speed up FeCN diffusion | Os 24 → FeCN 1.5 → uCT, SEM | Fig. 6d, e |
| | | Os 24 → CaC 24 → FeCN 1.5 → uCT, SEM | |
| 17 | Pg interaction with Os-FeCN redox gradient (H3) | Os 4°C 96, RT 24→CaC 4°C 48 →FeCN 4°C 48 (uCT) → Os 72→CaC 24(uCT) → H₂O 29 (uCT) → Pg 24 (uCT) → H₂O 48 → Os 48 → 4% UA 4°C 48, 50°C 5 →H₂O 42 →SEM | Fig. 6g |
| 18 | Pg interaction with Os-FeCN redox gradient and CaC (H1) | Os 4°C 63, RT 24 →CaC 4°C 24 → FeCN 4°C 48 → CaC 24 (uCT)→ Os 32→CaC 17 (uCT)→ H₂O 9(uCT) → Pg 48 (uCT)→ H₂O 40 → Os 48 → 4% UA 4°C 48, 50°C 5→4H₂O 48→ SEM | Fig. 6g |
| 19 | CaC RT 2 days removes Os-FeCN redox gradient (H4,5,6) | Os 4°C 72, RT 24→CaC 48 → FeCN 4°C 4 → CaC 24 (uCT H5) → Os 48→CaC 24→ H₂O 24 (uCT H5) → Pg 24 (uCT H5) → H₂O 24 → Os 24 (uCT H5) → 4% UA 4°C 48, 50°C 5 →H₂O 48 →SEM | Fig. 2; Fig. 6h; Fig. 7 |
| 20 | CaC washing at 4°C for 4 days removes Os-FeCN redox gradient (H13) | Os 4°C 68 →CaC 4°C 96 → FeCN 4°C 72 → CaC 48 → Os 48 →CaC 24 → H₂O 24 (uCT) → Pg 24 (uCT) → H₂O 24 → Os 41 (uCT at 24/41 h) → 4% UA 4°C 48, 50°C 12 →H₂O 24 →SEM | Fig. 6h; Fig. 7 |
| 21 | Whole brain staining (W1, W2) | W1: Os 4°C 96 (uCT) → CaC 4°C 168→ FeCN 4°C 72 (uCT) → CaC 4°C 48, RT 48 → Os 48→CaC 72 (uCT) → H₂O 48 (uCT) → Pg 24 (uCT) → H₂O 48→ Os 96 (uCT) → 4% UA 4°C 48, 50°C 5.5 →H₂O 24 → SEM | Fig. 3; |
| | | W2: Os 4°C 96 → CaC RT 72, 4°C 72→ FeCN 4°C 72 → CaC 4°C 48, RT 48 → Os 48→CaC 72 → H₂O 48 (uCT) → Pg 24 → H₂O 48→ Os 96 → 4% UA 4°C 48, 50°C 5.5 →H₂O 24 →SEM | |
| 22 | 2^{nd} Os stabilize samples in H₂O | Os 24 → CaC 24 → FeCN 24 → Os 3 → CaC 0.5 → x2 H₂O 0.5 → H₂O→ take LM images at different time points | Fig. 6i |
| | | Os 24 → CaC 24 → FeCn 24→ CaC 0.5 → x2 H₂O 0.5 → H₂O → take LM images at different time points | |
| 23 | Os(vi) staining | 1% Os (vi) CaC 6→ SEM | Fig. 8c |
| 24 | Adding CaCl₂ in OsO₄ then FeCN | Os 24 (with CaCl₂)→ FeCN 17→ SEM | Fig. 8g |
| 25 | OsO₄ at 4°C then FeCN | Os 24 4°C→FeCN 17→SEM | Fig. 8h |
| 26 | rO short vs. long | rO 3 → SEM rO 24 → SEM | Fig. 8e, f |
| 27 | CaC wash between OsO₄ and FeCN | Os 3/24→x3 CaC 1→FeCN 17→SEM | Fig. 8a, b |
| 28 | CaC before Pg causes gradient | Os 4°C 72 → CaC 4°C 96 → FeCN 4°C 72 → CaC 48 → Os 48 → CaC 24 → CaC 24 → Pg 24 (µCT) | Fig. 10b |
| 29 | Cancelling 2nd Os to remove Os vi before Pg | Os 4°C 72 → CaC 4°C 96 → FeCN 4°C 72 → CaC 48 → CaC 48 →CaC 24 → CaC 24 → Pg 24 (µCT) Afterwards, the hemisphere was cut into four ~2 mm thick coronal chunks for Exp.32 and Exp.33. | Fig. 10c |
| 30 | KCl between 2nd Os and Pg causes gradient | Os 4°C 72 → CaC 4°C 96 → FeCN 4°C 72 → CaC 48 → Os 48 → KCl 24 → KCl 24 → Pg 24 (µCT) | Fig. 10d |
| 31 | Adjusting pH of KCl to remove Os vi before Pg | Os 4°C 72 → CaC 4°C 96 → FeCN 4°C 72 → CaC 48 → Os 48 → KCl 24, pH7 → KCl 24, pH7 → KCl pH1 → KCl 24, pH7 → Pg 24 (µCT) | Fig. 10e |
| 32 | Os in H₂O staining of sample from Exp. 29 | Exp29 → CaC24 → Os in H₂O 24 → H₂O → 2 mm dehydration & Spurr's resin embedding → µCT, SEM | Fig. 10f |
| 33 | Os in CaC staining of sample from Exp. 29 | Exp29 → CaC24 → Os in CaC 24 → H₂O → 2 mm dehydration & Spurr's resin embedding → µCT, SEM | Fig. 10g |

### Remaining artifacts

Three types of artifacts were observed in the large-sample protocols: (1) Blood vessels partly detached from the surrounding neuropil (Fig.13b); (2) Remaining micro-breakages in subcortical neuropil (Fig. 13d, e); (3) Damage to outer parts of the cerebellum that could break off during water incubation steps (Fig.13f).

For blood vessel artifacts, in order to determine in which protocol step they appeared, the present inventors imaged 2 mm samples after 24 h RT OsO4 incubation in µCT; with this method, the influence of dehydration and resin infiltration could be avoided. Blood vessels already detached after the first OsO4 incubation step (Fig. 13c).

The result was the same for samples that was OsO4 incubated at 4°C for 4 days (Fig. 13c). While not a major concern for connectomics projects aimed at synaptic circuitry, for projects in which the complete integrity of blood vessels is essential, there seems to be the need for further targeted optimization of the protocol.

For micro-breakages in subcortical areas, these were rather small (≤ 500 nm in width, see in Fig. 13d), rendering detection by µCT difficult. Since these occurred rarely and predominantly in myelin-rich areas, neurite reconstruction is expected to be largely unaffected.

For the cerebellum breakage artifacts, it was obvious from the staining process that they occured during the first H₂O incubation step (Fig. 13g). This was found to be influenced by the temperature of CaC incubation between OsO4 and FeCN: when the CaC incubation step was at 4°C, the cerebellum was preserved much better than at RT (Fig. 13g).

### Additional protocol variants for highly fragile samples

The protocol steps in pure H₂O create substantial osmotic stress, which can be critical for large fragile samples. While we were able to stabilize whole-brain samples around the Pg step by adding the second OsO₄ step after FeCN (Fig.6i), the pure H₂O incubation might still be problematic for some kinds of larger samples, for example those with very large blood vessels from the human brain. To accommodate such samples, an alternative approach would be to increase the osmolarity using chemically inactive compounds. We observed that CaC buffer would not work as an osmolarity balancer because prohibitive infiltration gradients (and breakages when gradients are too strong) would occur during the Pg step (Fig. 6g).

One possible explanation for such gradients occurring during Pg step under CaC, not H₂O, incubation would be the following (Fig. 6g, Fig. 10b): As CaC can stabilize Os(vi) (Fig. 8d), there might be an interaction between Pg and the CaC-stabilized free Os(vi) in the samples. After the FeCN step, one would not expect free Os(vi) in the tissue (Fig. 9d); the additional 2^{nd} Os step, however, could generate residual Os(vi). In fact, when the 2^{nd} Os step was omitted, no staining gradient appeared in the Pg step even when there was Pg-CaC interaction (Fig.10a, c). On the other hand, when adding KCl in H₂O, known to stabilize Os(vi) (NPL43), a staining gradient appeared during the Pg step (Fig. 10a, d); this could be reverted by removing Os(vi) from KCl-H₂O by adjusting the pH briefly to 1 (which triggers the dismutation of Os(vi); Fig. 10a, e).

In summary, the present experiments support the conclusion that when using Pg, special care should be taken to make sure that there is no residual free Os(vi) in the sample in order to avoid gradients (and breakages when the gradients are too large) caused by Pg-Os(vi) interactions. This understanding would, in principle, open new opportunities in choosing the incubation solution before and after Pg.

For example, our pilot experiment with omitting the second Os step (In brief: 1^{st} Os → CaC → FeCN → CaC → Pg → CaC → Os H₂O/Os CaC; see Fig. 10 a, c, f, g) show options for samples that are especially sensitive to osmotic stress (e.g., mouse cerebellum and very large human cortical tissue samples).

### Cited Non Patent Literature

[NPL1] Abbott, L. F., D. D. Bock, E. M. Callaway, W. Denk, C. Dulac, A. L. Fairhall, I. Fiete, K. M. Harris, M. Helmstaedter, V. Jain, N. Kasthuri, Y. LeCun, J. W. Lichtman, P. B. Littlewood, L. Luo, J. H. R. Maunsell, R. C. Reid, B. R. Rosen, G. M. Rubin, T. J. Sejnowski, H. S. Seung, K. Svoboda, D. W. Tank, D. Tsao and D. C. Van Essen (2020). "The Mind of a Mouse." Cell 182(6); 1372-1376.
[NPL2] Briggman, K. L., M. Helmstaedter and W. Denk (2011). "Wiring specificity in the direction-selectivity circuit of the retina." Nature 471: 183-190.
[NPL3] Bruijn, W. C. d. (1973). "Glycogen, Its Chemistry and Morphologic Appearance in the Electron Microscope I. A modified OsO4 fixative which selectively contrast glycogen." J. Ultrastructure Research 50.
[NPL4] Bruijn, W. C. D., & Breejen, P. D. (1975). Glycogen, its chemistry and morphological appearance in the electron microscope. II. The complex formed in the selective contrast staining of glycogen. Histochemical Journal, 7, 205-229.
[NPL5] Denk, W. and H. Horstmann (2004). "Serial block-face scanning electron microscopy to reconstruct three-dimensional tissue nanostructure." PLoS Biol 2(11): e329.
[NPL6] Griffith, W. P. (1962). Cyanide complexes of the transition metals. Quarterly Reviews, Chemical Society, 16, 188-207. doi: 10.1039/qr9621600188
[NPL7] Hayat, M. A. (1981). "Fixation for Electron Microscopy."
[NPL8] Hayworth, K. J., N. Kasthuri, R. Schalek and J. W. Lichtman (2006). "Automating the Collection of Ultrathin Serial Sections for Large Volume TEM Reconstructions." Microscopy and Microanalysis 12(S02): 86-87.
[NPL9] Hayworth, K. J., D. Peale, M. Januszewski, G. W. Knott, Z. Lu, C. S. Xu and H. F. Hess (2020). "Gas cluster ion beam SEM for imaging of large tissue samples with 10 nm isotropic resolution." Nature Methods 17: 68-71.
[NPL10] Holcomb, P. S., B. K. Hoffpauir, M. C. Hoyson, D. R. Jackson, T. J. Deerinck, G. S. Marrs, M. Dehoff, J. Wu, M. H. Ellisman and G. A. Spirou (2013). "Synaptic inputs compete during rapid formation of the calyx of held: A new model system for neural development." Journal of Neuroscience 33: 12954-12969.
[NPL11] Hua, Y., P. Laserstein and M. Helmstaedter (2015). "Large-volume en-bloc staining for electron microscopy-based connectomics." Nature Communications 6: 1-7.
[NPL12] Januszewski, M., J. Kornfeld, P. H. Li, A. Pope, T. Blakely, L. Lindsey, J. Maitin-Shepard, M. Tyka, W. Denk and V. Jain (2018). "High-precision automated reconstruction of neurons with flood-filling networks." Nat Methods 15(8): 605-610.
[NPL13] Karnovsky, M. J. (1971). Use of ferrocyanide-reduced osmium tetroxide in electron microscopy. 11th annual meeting, the American Society for Cell Biology.
[NPL14] Kazmierski, T. M. and P. F. Millington (1979). "Modification of an SEM for backscattered electron imaging at low vacuum." Journal of Microscopy 117: 431-436.
[NPL15] Korn, E. D. (1967). A chromatographic and spectrophotometric study of the products of the reaction of osmium tetroxide with unsaturated lipids. The Journal of cell biology, 34, 627-638. doi: 10.1083/jcb.34.2.627
[NPL16] Kuan, A. T., J. S. Phelps, L. A. Thomas, T. M. Nguyen, J. Han, C. L. Chen, A. W. Azevedo, J. C. Tuthill, J. Funke, P. Cloetens, A. Pacureanu and W. C. A. Lee (2020). "Dense neuronal reconstruction through X-ray holographic nano-tomography." Nature Neuroscience 23: 1637-1643.
[NPL17] Litman, R. B., & Barrnett, R. J. (1972). The mechanism of the fixation of tissue components by osmium tetroxide via hydrogen bonding. Journal of Ultrasructure Research, 38, 63-86. doi: 10.1016/S0022-5320(72)90084-6
[NPL18] Loos, M. R., L. A. F. Coelho, S. H. Pezzin and S. C. Amico (2008). "The effect of acetone addition on the properties of epoxy." Polimeros 18: 76-80.
[NPL19] Mikula, S. and W. Denk (2015). "High-resolution whole-brain staining for electron microscopic circuit reconstruction." Nature Methods 12: 541-546.
[NPL20] Motta, A., M. Berning, K. M. Boergens, B. Staffler, M. Beining, S. Loomba, P. Hennig, H. Wissler and M. Helmstaedter (2019). "Dense connectomic reconstruction in layer 4 of the somatosensory cortex." Science 366.
[NPL21] Motta, A., M. Schurr, B. Staffler and M. Helmstaedter (2019). "Big data in nanoscale connectomics, and the greed for training labels." Curr Opin Neurobiol 55: 180-187.
[NPL22] Neiss, W. F. (1984). Electron staining of the cell surface coat by osmium-low ferrocyanide *. Histochemistry, 231-242.
[NPL23] Opekar, F., & Beran, P. (1977). STUDY OF THE CYANIDE COMPLEXES THE REDUCTION THE CYANIDE COMPLEX OF Os (V1) ON A PLATINUM rde. Electrochimica Acta, 22, 243-248.
[NPL24] Opekar, F., & Beran, P. (1977). Voltammetric study of the cyanide complexes of osmium-II. The behaviour of lower oxidation state cyanide complexes of osmium on a platinum rde. Electrochimica Acta, 22, 249-254. doi: 10. 1016/0013-4686(77)85069-X
[NPL25] Osmium: Inorganic & Coordination Chemistry (2011).
[NPL26] Palade, G. E. (1952). "A Study of Fixation for Electron Microscopy." The Journal of experimental medicine, 95(3), 285-298.
[NPL27] Porter, K. R., & Kallman, F. (1953). The properties and effects of osmium tetroxide as a tissue fixative with special reference to its use for electron microscopy. Experimental Cell Research, 4, 127-141. doi: 10.1016/0014-4827(53)90195-5
[NPL28] Riemersma, J. C., Alsbach, E. J. J., & Bruijn, W. C. D. (1984). Chemical aspects of glycogen contrast-staining by potassium osmate. Histochemical Journal, 136, 123-136.
[NPL29] Seligman, A. M., H. L. Wasserkrug and J. S. Hanker (1966). "A new staining method (OTO) for enhancing contrast of lipid--containing membranes and droplets in osmium tetroxide--fixed tissue with osmiophilic thiocarbohydrazide (TCH)." Journal of Cell Biology 30: 424-432.
[NPL30] Sommons, R. and P. Marquis (1997). "Application of the low vacuum scanning electron microscope to the study of biomaterials and mammalian cells." Biomaterials 18: 81-86.
[NPL31] Ströh, S., E. W. Hammerschmith, D. W. Tank, H. S. Seung and A. Adrian (2021). "In situ X-ray assisted electron microscopy staining for large biological samples." bioRxiv.
[NPL32] Tirler, A. O., Persson, I., Hofer, T. S., & Rode, B. M. (2015). Is the Hexacyanoferrate(II) Anion Stable in Aqueous Solution? A Combined Theoretical and Experimental Study. Inorganic Chemistry, 54, 10335-10341. doi: 10.1021/acs.inorgchem.5b01701
[NPL33] Vidil, T., F. Tournilhac, S. Musso, A. Robisson, T. Vidil, F. Tournilhac, S. Musso, A. Robisson and L. Leibler (2016). "Control of reactions and network structures of epoxy thermosets." Progress in Polymer Science 62: 126-179.
[NPL34] Walton, J. (1979). "Lead Aspartate, an En Bloc Contrast Stain Particularly Useful for Ultrastructural Enzymology." The Joural of Histochemistry and Cytochemistry 27(10): 1337-1342.
[NPL35] Watson, M. L. (1958). "Staining of Tissue Sections for Electron Microscopy with Heavy Metals." The Journal of Biophysical and Biochemical Cytology, 4(4), 475.
[NPL36] White, D. L., Mazurkiewicz, J. E., & Barrnett, R. J. (1979). A chemical Mechanism for Tissue Staining by Osmium Tetroxide-Ferrocyanide Mixtures. The Journal of Histochemistry and Cytochemistry, 1084-1091.
[NPL37] Willingham, C. and A. Rutherford (1984). "Use of Osmium-Thiocarbohydrazide-Osmium and Ferrocyanide-reduced Methods Contrast and Preservation in to Enhance Membrane Contrast and Preservation in Cultured Cells." The Journal of Histochemistry and Cytochemistry 32: 455-460.
[NPL38] Yin, W., Brittain, D., Borseth, J., Scott, M. E., Williams, D., Perkins, J., ... & da Costa, N. M. (2020). "A petascale automated imaging pipeline for mapping neuronal circuits with high-throughput transmission electron microscopy". Nature communications, 11(1), 1-12.).
[NPL39] Arganda-Carreras, I., Kaynig, V., Rueden, C., Eliceiri, K. W., Schindelin, J., Cardona, A., & Sebastian Seung, H. (2017). Trainable Weka Segmentation: a machine learning tool for microscopy pixel classification. Bioinformatics, 33(15), 2424-2426
[NPL40] Loomba, S., Straehle, J., Gangadharan, V., Heike, N., Khalifa, A., Motta, A., ... & Helmstaedter, M. (2022). "Connectomic comparison of mouse and human cortex". Science, 377(6602), eabo0924.
[NPL41] Karimi, A., Odenthal, J., Drawitsch, F., Boergens, K. M., & Helmstaedter, M. (2020). "Cell-type specific innervation of cortical pyramidal cells at their apical dendrites". Elife, 9, e46876.
[NPL42] Boergens, K. M., Berning, M., Bocklisch, T., Bräunlein, D., Drawitsch, F., Frohnhofen, J., ... & Helmstaedter, M. (2017). "webKnossos: efficient online 3D data annotation for connectomics". Nature Methods, 14(7), 691-694.
[NPL43] Collinson, S. R., & Schröder, M. (2011). Osmium: Inorganic & coordination chemistry. Encyclopedia of Inorganic and Bioinorganic Chemistry.

## Claims

1. A method for en-bloc staining of a biological tissue sample comprising the steps:
a) incubating the sample in a buffered aqueous solution of 1 to 3 %, preferably 1.5 to 2.5 %, more preferably 1.8 to 2.2 %, even more preferably 2 % heavy metal compound,
b) washing the sample in a buffered aqueous solution,
c) incubating the sample in a buffered aqueous solution of 1.5 to 3.5 %, preferably 2 to 3 %, more preferably 2.2 to 2.75 %, even more preferably 2.5 % reducing agent,
d) repeating step b),
e) repeating step a),
f) repeating step b),
g) washing the sample in water,
h) incubating the sample in an aqueous solution of 2.5 to 5.5 %, preferably 3 to 5 %, more preferably 3.5 to 4.5 %, even more preferably 4 % of a staining amplification agent, wherein the staining amplification agent is selected from the group consisting of dihydroxy-, trihydroxyand tetrahydroxy derivatives of benzene,
i) repeating step g),
j) repeating step a),
wherein the heavy metal compound is dissolved in an aqueous solution,
k) repeating step g),
l) incubating the sample in an aqueous solution of 3 to 5 %, preferably 3.5 to 4.5 %, more preferably 3.75 to 4.25 %, even more preferably 4 % heavy metal compound,
wherein the heavy metal compound is different to the one of step a),
m) further incubating the sample of step l),
wherein the temperature is increased to at least 35 °C,
and
n) repeating step g).

2. A method for en-bloc staining of a biological tissue sample comprising the steps:
Aa) incubating the sample in a buffered aqueous solution of 1 to 3 %, preferably 1.5 to 2.5 %, more preferably 1.8 to 2.2 %, even more preferably 2 % heavy metal compound,
Ab) washing the sample in a buffered aqueous solution,
Ac) incubating the sample in a buffered aqueous solution of 1.5 to 3.5 %, preferably 2 to 3 %, more preferably 2.2 to 2.75 %, even more preferably 2.5 % reducing agent,
Ad) washing the sample in the buffered aqueous solution of step Ab) or in an aqueous salt solution,
Ae) incubating the sample in an aqueous solution of 2.5 to 5.5 %, preferably 3 to 5 %, more preferably 3.5 to 4.5 %, even more preferably 4 % of a staining amplification agent, wherein the staining amplification agent is selected from the group consisting of dihydroxy-, trihydroxy- and tetrahydroxy derivatives of benzene,
Af) repeating step Ad),
Ag) repeating step Aa),
wherein the heavy metal compound is dissolved in an aqueous solution or a buffered aqueous solution,
Ah) washing the sample in an aqueous salt solution,
Ai) incubating the sample in an aqueous salt solution of 3 to 5 %, preferably 3.5 to 4.5 %, more preferably 3.75 to 4.25 %, even more preferably 4 % heavy metal compound,
wherein the heavy metal compound is different to the one of step Aa),
Aj) further incubating the sample of step Ai),
wherein the temperature is increased to at least 35 °C,
and
Ak) repeating step Ah)

3. The method according to claim 1 or 2, wherein the heavy metal compound of step a) of claim 1 or step Aa) of claim 2 is osmiumtetroxide (OsO₄) and of step l) of claim 1 or step Ai) of claim 2 is uranyl acetate (UA).

4. The method according to any one of claims 1 to 3, wherein the reducing agent is ferrocyanide and/or ferricyanide.

5. The method according to any one of the preceding claims, wherein the incubation in step a) of claim 1 or step Aa) of claim 2 is performed at a temperature of 2 to 30°C and for 3 to 120h.

6. The method according to any one of the preceding claims, wherein the washing in step b) of claim 1 or step Ab) of claim 2 is performed at a temperature below 10 °C, preferably at 2 to 6 °C, more preferably at 3 to 5 °C, even more preferably at 4 °C and wherein the washing is performed 0.5 to 190 h.

7. The method according to any one of the preceding claims, wherein the incubation of step c) of claim 1 or step Ac) of claim 2 is performed at a temperature below 10 °C, preferably at 2 to 6 °C, more preferably at 3 to 5 °C, even more preferably at 4 °C and wherein the incubation is performed 12 to 96 h.

8. The method according to any one of the preceding claims, wherein the incubation in step l) of claim 1 or step Ai) of claim 2 is performed at low temperature, preferably at 2 to 6 °C, more preferably at 3 to 5 °C, even more preferably at 4 °C and wherein the incubation is performed 10 to 64 h and wherein the incubation in step m) of claim 1 or step Aj) of claim 2 is performed at 40 to 60 °C, preferably at 45 to 55 °C, more preferably at 50 °C and wherein the incubation is performed 1 to 6 h.

9. The method according to any one of the preceding claims, wherein step n) of claim 1 or step Ak) of claim 2 is followed by dehydrating the sample, preferably by incubating the sample in a graded ethanol series (step o)/step Al)).

10. The method according to any one of the preceding claims, wherein step o) of claim 1 or step Al) of claim 2 is followed by incubating the sample in pure acetone at higher than 4 °C, preferably at 4 to 30 °C, more preferably at 15 to 25 °C, even more preferably at 25 °C (step p)/Am)).

11. The method according to any one of the preceding claims, wherein step p) of claim 1 or step Am) of claim 2 is followed by embedding the sample, by using a low viscosity epoxy resin infiltration method, preferably a low viscosity epoxy resin infiltration method, wherein the concentration of the epoxy resin is gradually increased.

12. The method according to any one of the preceding claims, wherein the biological tissue sample is derived from neuronal tissue.

13. The method according to any one of claims 1 or 3 to 12, wherein the size of the biological tissue sample is 10 mm, 5 mm, and/or 2 to 3 mm.

14. The method according to any one of the preceding claims, wherein the biological tissue sample is analyzed by electron microscopy, preferably three-dimensional electron microscopy, more preferably high-throughput electron microscopy.

15. Use of the method according to any one of the preceding claims, in (dense) neuronal circuit reconstruction or connectomic analyses, preferably high-resolution connectomic analyses.

16. The method according to any one of claims 2 to 12, 14 or 15, wherein the aqueous salt solution is KCl or NaCl.

17. The method according to any one of claims 2 to 12 or 14 to 16, wherein the biological tissue sample is a human cortical tissue sample having a size of 2 to 4 mm in plane (base area) and 2 to 5 mm in thickness, preferably wherein the sample has a size of 2 to 3 mm in plane (base area) and a thickness of ≤ 2 mm.

## Patentansprüche

1. Verfahren zur En-bloc-Färbung einer biologischen Gewebeprobe, umfassend die Schritte:
a) Inkubieren der Probe in einer gepufferten wässrigen Lösung mit 1 bis 3%, bevorzugt 1,5 bis 2,5%, stärker bevorzugt 1,8 bis 2,2%, noch stärker bevorzugt 2% einer Schwermetallverbindung,
b) Waschen der Probe in einer gepufferten wässrigen Lösung,
c) Inkubieren der Probe in einer gepufferten wässrigen Lösung mit 1,5 bis 3,5%, bevorzugt 2 bis 3%, stärker bevorzugt 2,2 bis 2,75%, noch stärker bevorzugt 2,5% eines Reduktionsmittels,
d) Wiederholen von Schritt b),
e) Wiederholen von Schritt a),
f) Wiederholen von Schritt b),
g) Waschen der Probe in Wasser,
h) Inkubieren der Probe in einer wässrigen Lösung mit 2,5 bis 5,5%, bevorzugt 3 bis 5%, stärker bevorzugt 3,5 bis 4,5%, noch stärker bevorzugt 4% eines Amplifikationsmittels für die Färbung, wobei das Amplifikationsmittel für die Färbung ausgewählt ist aus der Gruppe bestehend aus Dihydroxy-, Trihydroxy- und Tetrahydroxyderivaten von Benzol,
i) Wiederholen von Schritt g),
j) Wiederholen von Schritt a),
wobei die Schwermetallverbindung in einer wässrigen Lösung gelöst ist,
k) Wiederholen von Schritt g),
l) Inkubieren der Probe in einer wässrigen Lösung mit 3 bis 5%, bevorzugt 3,5 bis 4,5%, stärker bevorzugt 3,75 bis 4,25%, noch stärker bevorzugt 4% einer Schwermetallverbindung,
wobei sich die Schwermetallverbindung von der in Schritt a) unterscheidet,
m) weiteres Inkubieren der Probe aus Schritt I),
wobei die Temperatur auf mindestens 35°C erhöht wird,
und
n) Wiederholen von Schritt g).

2. Verfahren zur En-bloc-Färbung einer biologischen Gewebeprobe, umfassend die Schritte:
Aa) Inkubieren der Probe in einer gepufferten wässrigen Lösung mit 1 bis 3%, bevorzugt 1,5 bis 2,5%, stärker bevorzugt 1,8 bis 2,2%, noch stärker bevorzugt 2% einer Schwermetallverbindung,
Ab) Waschen der Probe in einer gepufferten wässrigen Lösung,
Ac) Inkubieren der Probe in einer gepufferten wässrigen Lösung mit 1,5 bis 3,5%, bevorzugt 2 bis 3%, stärker bevorzugt 2,2 bis 2,75%, noch stärker bevorzugt 2,5% eines Reduktionsmittels,
Ad) Waschen der Probe in der gepufferten wässrigen Lösung aus Schritt Ab) oder in einer wässrigen Salzlösung,
Ae) Inkubieren der Probe in einer wässrigen Lösung mit 2,5 bis 5,5%, bevorzugt 3 bis 5%, stärker bevorzugt 3,5 bis 4,5%, noch stärker bevorzugt 4% eines Amplifikationsmittels für die Färbung, wobei das Amplifikationsmittel für die Färbung ausgewählt ist aus der Gruppe bestehend aus Dihydroxy-, Trihydroxy- und Tetrahydroxyderivaten von Benzol,
Af) Wiederholen von Schritt Ad),
Ag) Wiederholen von Schritt Aa),
wobei die Schwermetallverbindung in einer wässrigen Lösung oder einer gepufferten wässrigen Lösung gelöst ist,
Ah) Waschen der Probe in einer wässrigen Salzlösung,
Ai) Inkubieren der Probe in einer wässrigen Salzlösung mit 3 bis 5%, bevorzugt 3,5 bis 4,5%, stärker bevorzugt 3,75 bis 4,25%, noch stärker bevorzugt 4% einer Schwermetallverbindung,
wobei sich die Schwermetallverbindung von der in Schritt Aa) unterscheidet,
Aj) weiteres Inkubieren der Probe aus Schritt Ai),
wobei die Temperatur auf mindestens 35°C erhöht wird,
und
Ak) Wiederholen von Schritt Ah)

3. Verfahren nach Anspruch 1 oder 2, wobei die Schwermetallverbindung aus Schritt a) von Anspruch 1 oder Schritt Aa) von Anspruch 2 Osmiumtetroxid (OsO₄) ist und aus Schritt I) von Anspruch 1 oder Schritt Ai) von Anspruch 2 Uranylacetat (UA) ist.

4. Verfahren nach einem der Ansprüche 1 bis 3, wobei das Reduktionsmittel Ferrocyanid und/oder Ferricyanid ist.

5. Verfahren nach einem der vorangehenden Ansprüche, wobei die Inkubation in Schritt a) von Anspruch 1 oder Schritt Aa) von Anspruch 2 bei einer Temperatur von 2 bis 30°C und 3 bis 120 h lang durchgeführt wird.

6. Verfahren nach einem der vorangehenden Ansprüche, wobei das Waschen in Schritt b) von Anspruch 1 oder Schritt Ab) von Anspruch 2 bei einer Temperatur unter 10°C, bevorzugt bei 2 bis 6°C, stärker bevorzugt bei 3 bis 5°C, noch stärker bevorzugt bei 4°C durchgeführt wird und wobei das Waschen 0,5 bis 190 h lang durchgeführt wird.

7. Verfahren nach einem der vorangehenden Ansprüche, wobei die Inkubation in Schritt c) von Anspruch 1 oder Schritt Ac) von Anspruch 2 bei einer Temperatur unter 10°C, bevorzugt bei 2 bis 6°C, stärker bevorzugt bei 3 bis 5°C, noch stärker bevorzugt bei 4°C durchgeführt wird und wobei die Inkubation 12 bis 96 h lang durchgeführt wird.

8. Verfahren nach einem der vorangehenden Ansprüche, wobei die Inkubation in Schritt I) von Anspruch 1 oder Schritt Ai) von Anspruch 2 bei niedriger Temperatur, bevorzugt bei 2 bis 6°C, stärker bevorzugt bei 3 bis 5°C, noch stärker bevorzugt bei 4°C durchgeführt wird und wobei die Inkubation 10 bis 64 h lang durchgeführt wird, und wobei die Inkubation in Schritt m) von Anspruch 1 oder Schritt Aj) von Anspruch 2 bei 40 bis 60°C, bevorzugt bei 45 bis 55°C, stärker bevorzugt bei 50°C durchgeführt wird und wobei die Inkubation 1 bis 6 h lang durchgeführt wird.

9. Verfahren nach einem der vorangehenden Ansprüche, wobei auf Schritt n) von Anspruch 1 oder Schritt Ak) von Anspruch 2 die Dehydratation der Probe folgt, bevorzugt durch Inkubieren der Probe in einer aufsteigenden Ethanolreihe (Schritt o)/Schritt Al)).

10. Verfahren nach einem der vorangehenden Ansprüche, wobei auf Schritt o) von Anspruch 1 oder Schritt Al) von Anspruch 2 das Inkubieren der Probe in reinem Aceton bei einer Temperatur von mehr als 4°C, bevorzugt bei 4 bis 30°C, stärker bevorzugt bei 15 bis 25°C, noch stärker bevorzugt bei 25°C folgt (Schritt p)/Am)).

11. Verfahren nach einem der vorangehenden Ansprüche, wobei auf Schritt p) von Anspruch 1 oder Schritt Am) von Anspruch 2 das Einbetten der Probe unter Verwendung eines Infiltrationsverfahrens mit niedrigviskosem Epoxidharz folgt, bevorzugt eines Infiltrationsverfahrens mit niedrigviskosem Epoxidharz, wobei die Konzentration des Epoxidharzes schrittweise erhöht wird.

12. Verfahren nach einem der vorangehenden Ansprüche, wobei die biologische Gewebeprobe aus neuronalem Gewebe stammt.

13. Verfahren nach einem der Ansprüche 1 oder 3 bis 12, wobei die Größe der biologischen Gewebeprobe 10 mm, 5 mm und/oder 2 bis 3 mm ist.

14. Verfahren nach einem der vorangehenden Ansprüche, wobei die biologische Gewebeprobe mittels Elektronenmikroskopie, bevorzugt dreidimensionaler Elektronenmikroskopie, stärker bevorzugt Hochdurchsatz-Elektronenmikroskopie, analysiert wird.

15. Verwendung des Verfahrens nach einem der vorangehenden Ansprüche bei der Rekonstruktion (dichter) neuronaler Schaltkreise oder bei konnektomischen Analysen, bevorzugt bei hochauflösenden konnektomischen Analysen.

16. Verfahren nach einem der Ansprüche 2 bis 12, 14 oder 15, wobei die wässrige Salzlösung KCl oder NaCl ist.

17. Verfahren nach einem der Ansprüche 2 bis 12 oder 14 bis 16, wobei die biologische Gewebeprobe eine menschliche kortikale Gewebeprobe mit einer Größe von 2 bis 4 mm in der Ebene (Grundfläche) und einer Dicke von 2 bis 5 mm ist, wobei die Probe bevorzugt eine Größe von 2 bis 3 mm in der Ebene (Grundfläche) und eine Dicke von ≤ 2 mm aufweist.

## Revendications

1. Méthode de coloration en bloc d'un échantillon de tissu biologique, comprenant les étapes :
a) incubation de l'échantillon dans une solution aqueuse tamponnée de 1 à 3 %, de préférence 1,5 à 2,5 %, mieux encore 1,8 à 2,2 %, plus particulièrement 2 % d'un composé de métal lourd,
b) lavage de l'échantillon dans une solution aqueuse tamponnée,
c) incubation de l'échantillon dans une solution aqueuse tamponnée de 1,5 à 3,5 %, de préférence 2 à 3 %, mieux encore 2,2 à 2,75 %, plus particulièrement 2,5 % d'un agent réducteur,
d) répétition de l'étape b),
e) répétition de l'étape a),
f) répétition de l'étape b),
g) lavage à l'eau de l'échantillon,
h) incubation de l'échantillon dans une solution aqueuse de 2,5 à 5,5 %, de préférence 3 à 5 %, mieux encore 3,5 à 4,5 %, plus particulièrement 4 % d'un agent d'amplification de coloration, dans laquelle l'agent d'amplification de coloration est choisi dans le groupe constitué par les dérivés dihydroxy, trihydroxy et tétrahydroxy du benzène,
i) répétition de l'étape g),
j) répétition de l'étape a),
dans laquelle le composé de métal lourd est dissous dans une solution aqueuse,
k) répétition de l'étape g),
l) incubation de l'échantillon dans une solution aqueuse de 3 à 5 %, de préférence 3,5 à 4,5 %, mieux encore 3,75 à 4,25 %, plus particulièrement 4 % d'un composé de métal lourd,
dans laquelle le composé de métal lourd est différent de celui de l'étape a),
m) à nouveau, incubation de l'échantillon de l'étape l),
dans laquelle la température est augmentée à au moins 35 °C,
et
n) répétition de l'étape g).

2. Méthode de coloration en bloc d'un échantillon de tissu biologique, comprenant les étapes :
Aa) incubation de l'échantillon dans une solution aqueuse tamponnée de 1 à 3 %, de préférence 1,5 à 2,5 %, mieux encore 1,8 à 2,2 %, plus particulièrement 2 % d'un composé de métal lourd,
Ab) lavage de l'échantillon dans une solution aqueuse tamponnée,
Ac) incubation de l'échantillon dans une solution aqueuse tamponnée de 1,5 à 3,5 %, de préférence 2 à 3 %, mieux encore 2,2 à 2,75 %, plus particulièrement 2,5 % d'un agent réducteur,
Ad) lavage de l'échantillon dans la solution aqueuse tamponnée de l'étape Ab) ou dans une solution aqueuse salée,
Ae) incubation de l'échantillon dans une solution aqueuse de 2,5 à 5,5 %, de préférence 3 à 5 %, mieux encore 3,5 à 4,5 %, plus particulièrement 4 % d'un agent d'amplification de coloration, dans laquelle l'agent d'amplification de coloration est choisi dans le groupe constitué par les dérivés dihydroxy, trihydroxy et tétrahydroxy du benzène,
Af) répétition de l'étape Ad),
Ag) répétition de l'étape Aa),
dans laquelle le composé de métal lourd est dissous dans une solution aqueuse ou une solution aqueuse tamponnée,
Ah) lavage de l'échantillon dans une solution aqueuse salée,
Ai) incubation de l'échantillon dans une solution aqueuse salée de 3 à 5 %, de préférence 3,5 à 4,5 %, mieux encore 3,75 à 4,25 %, plus particulièrement 4 % d'un composé de métal lourd,
dans laquelle le composé de métal lourd est différent de celui de l'étape Aa),
Aj) à nouveau, incubation de l'échantillon de l'étape Ai),
dans laquelle la température est augmentée à au moins 35 °C,
et
Ak) répétition de l'étape Ah).

3. Méthode selon la revendication 1 ou 2, dans laquelle le composé de métal lourd de l'étape a) de la revendication 1 ou de l'étape Aa) de la revendication 2 est le tétroxyde d'osmium (OsO₄) et celui de l'étape 1) de la revendication 1 ou de l'étape Ai) de la revendication 2 est l'acétate d'uranyle (UA).

4. Méthode selon l'une quelconque des revendications 1 à 3, dans laquelle l'agent réducteur est un ferrocyanure et/ou un ferricyanure.

5. Méthode selon l'une quelconque des revendications précédentes, dans laquelle l'incubation dans l'étape a) de la revendication 1 ou l'étape Aa) de la revendication 2 est effectuée à une température de 2 à 30 °C et pendant 3 à 120h.

6. Méthode selon l'une quelconque des revendications précédentes, dans laquelle le lavage dans l'étape b) de la revendication 1 ou l'étape Ab) de la revendication 2 est effectué à une température inférieure à 10 °C, de préférence de 2 à 6 °C, mieux encore de 3 à 5 °C, plus particulièrement de 4 °C, et dans laquelle le lavage est effectué pendant 0,5 à 190h.

7. Méthode selon l'une quelconque des revendications précédentes, dans laquelle l'incubation de l'étape c) de la revendication 1 ou de l'étape Ac) de la revendication 2 est effectuée à une température inférieure à 10 °C, de préférence de 2 à 6 °C, mieux encore de 3 à 5 °C, plus particulièrement de 4 °C, et dans laquelle l'incubation est effectuée pendant 12 à 96h.

8. Méthode selon l'une quelconque des revendications précédentes, dans laquelle l'incubation dans l'étape 1) de la revendication 1 ou l'étape Ai) de la revendication 2 est effectuée à basse température, de préférence de 2 à 6 °C, mieux encore de 3 à 5 °C, plus particulièrement de 4 °C, et dans laquelle l'incubation est effectuée pendant 10 à 64h et dans laquelle l'incubation dans l'étape m) de la revendication 1 ou l'étape Aj) de la revendication 2 est effectuée à une température de 40 à 60 °C, de préférence de 45 à 55 °C, mieux encore de 50 °C et dans laquelle l'incubation est effectuée pendant 1 à 6h.

9. Méthode selon l'une quelconque des revendications précédentes, dans laquelle l'étape n) de la revendication 1 ou l'étape Ak) de la revendication 2 est suivie d'une déshydratation de l'échantillon, de préférence par incubation de l'échantillon dans une série graduée d'éthanol (étape o)/étape Al)).

10. Méthode selon l'une quelconque des revendications précédentes, dans laquelle l'étape o) de la revendication 1 ou l'étape Al) de la revendication 2 est suivie d'une incubation de l'échantillon dans de l'acétone pure à une température supérieure à 4 °C, de préférence de 4 à 30 °C, mieux encore de 15 à 25 °C, plus particulièrement de 25 °C (étape p/Am)).

11. Méthode selon l'une quelconque des revendications précédentes, dans laquelle l'étape p) de la revendication 1 ou l'étape Am) de la revendication 2 est suivie d'une * de l'échantillon, par utilisation d'une méthode d'infiltration de résine époxy de faible viscosité, de préférence d'une méthode d'infiltration de résine époxy de faible viscosité, dans laquelle la concentration de la résine époxy est progressivement augmentée.

12. Méthode selon l'une quelconque des revendications précédentes, dans laquelle l'échantillon de tissu biologique dérive de tissu neuronal.

13. Méthode selon l'une quelconque des revendications 1 ou 3 à 12, dans laquelle la taille de l'échantillon de tissu biologique est de 10 mm, 5 mm et/ou 2 à 3 mm.

14. Méthode selon l'une quelconque des revendications précédentes, dans laquelle l'échantillon de tissu biologique est analysé par microscopie électronique, de préférence par microscopie électronique en trois dimensions, mieux encore par microscopie électronique à haut débit.

15. Utilisation de la méthode selon l'une quelconque des revendications précédentes dans des analyses connectomiques ou une reconstruction de circuit neuronal (dense), de préférence des analyses connectomiques haute définition.

16. Méthode selon l'une quelconque des revendications 2 à 12, 14 ou 15, dans laquelle la solution aqueuse salée est KCl ou de NaCl.

17. Méthode selon l'une quelconque des revendications 2 à 12 ou 14 à 16, dans laquelle l'échantillon de tissu biologique est un échantillon de tissu cortical humain ayant une taille de 2 à 4 mm dans le plan (surface de base) et une épaisseur de 2 à 5 mm, de préférence dans laquelle l'échantillon a une taille de 2 à 3 mm dans le plan (surface de base) et une épaisseur ≤ 2 mm.
